# EUROPEAN PATENT APPLICATION

(11) **EP 4 848 446 A1**
(43) Date of publication of application: **02.12.2026**
(21) Application number: 24957630.7
(22) Date of filing: 18.10.2024
(51) Int. Cl.: H01M 50/367, H01M 50/107, H01M 50/534

(54) **CYLINDRICAL BATTERY CELL, BATTERY DEVICE AND ELECTRIC DEVICE**

(71) Applicant: Contemporary Amperex Technology Co., Limited, Ningde, Fujian 352100 (CN)
(72) Inventor: JIN, Haizu, Ningde, Fujian 352100 (CN); CHAI, Zhisheng, Ningde, Fujian 352100 (CN); GU, Hui, Ningde, Fujian 352100 (CN); LIN, Junyi, Ningde, Fujian 352100 (CN)
(74) Representative: Ziebig Hengelhaupt Intellectual Property Attorneys Patentanwaltskanzlei PartGmbB
(86) International application number: PCT/CN2024/125922
(87) International publication number: WO 2026/081220

(57) **Abstract**

The present application belongs to the technical field of batteries. Provided are a cylindrical battery cell, a battery device and an electric device. The cylindrical battery cell comprises a casing, an electrode assembly and a first current collecting member. A pressure relief component is provided on a first wall of the casing, the pressure relief component is provided with a pressure relief groove, a side wall of the casing surrounds the periphery of the first wall, a protrusion is provided on an inner peripheral surface of the side wall in a protruding manner, and the protrusion and the pressure relief groove both extend in the circumferential direction of the side wall. The electrode assembly is located on the side of the protrusion facing away from the first wall. The first current collecting member comprises a body portion connected to the electrode assembly and a butt-joint portion connected to the protrusion, wherein the body portion comprises a plurality of support areas and a main body area connected to the butt-joint portion, the plurality of support areas are arranged spaced apart from each other in the circumferential direction of the main body area and are connected to an outer circumferential surface of the main body area, and the support areas are located between the electrode assembly and the protrusion in the direction of thickness of the first wall. An inner diameter of the protrusion is D₁, an outer diameter of the main body area is D₂, an inner diameter of the pressure relief groove is D₃, D₁ ≥ D₂, and D₃ ≥ 0.75 D₂, so as to improve the pressure relief rate of the cylindrical battery cell.

## Description

### TECHNICAL FIELD

The present application relates to the field of battery technologies, and specifically, to a cylindrical battery cell, a battery apparatus, and a power consuming apparatus.

### BACKGROUND

In recent years, new energy vehicles have been rapidly developed. In the field of electric vehicles, a power battery plays an irreplaceable and important role as a power source of an electric vehicle. With the robust promotion of new energy vehicles, the demand for power battery products is also steadily increasing. A battery apparatus usually includes a box and a plurality of cylindrical battery cells accommodated in the box.

In the battery technologies, to ensure safety of the cylindrical battery cell, a pressure relief structure configured to release pressure inside the cylindrical battery cell is generally disposed on a shell of the cylindrical battery cell, so that the pressure relief structure can release the pressure inside the cylindrical battery cell when thermal runaway occurs on the cylindrical battery cell. However, a pressure relief rate is low when thermal runaway occurs on an existing cylindrical battery cell, and consequently, risks such as fire and explosion are caused to the cylindrical battery cell due to untimely pressure relief, leading to low use reliability of the cylindrical battery cell.

### SUMMARY

Embodiments of the present application provide a cylindrical battery cell, a battery apparatus, and a power consuming apparatus, so that use reliability of the cylindrical battery cell can be effectively improved.

According to a first aspect, an embodiment of the present application provides a cylindrical battery cell, including a shell, an electrode assembly, and a first current collection member. The shell includes a first wall and a side wall. A thickness direction of the first wall is an axial direction of the cylindrical battery cell. A pressure relief component is disposed on the first wall. A pressure relief groove is provided on the pressure relief component. The side wall is provided surrounding the first wall. A protrusion protrudes from an inner circumferential surface of the side wall. Both the protrusion and the pressure relief groove extend along a circumferential direction of the side wall. The electrode assembly is accommodated in the shell and located on a side of the protrusion facing away from the first wall. The first current collection member includes a body portion and a butt-joint portion. The body portion is located on a side of the electrode assembly facing the first wall and is connected to the electrode assembly. The body portion includes a main body region and a plurality of support regions connected to an outer circumferential surface of the main body region. The plurality of support regions are arranged spaced away along a circumferential direction of the main body region. The support region is at least partially located between the electrode assembly and the protrusion in the thickness direction of the first wall. The butt-joint portion is connected to the main body region and connected to the protrusion, to electrically connect the electrode assembly to the side wall. An inner diameter of the protrusion is D₁, an outer diameter of the main body region is D₂, and an inner diameter of the pressure relief groove is D₃ along a radial direction of the cylindrical battery cell. D₁ ≥ D₂, and D₃ ≥ 0.75 D₂.

In the foregoing technical solution, the first current collection member is provided with the body portion and the butt-joint portion. The body portion is located on the side of the electrode assembly facing the first wall and is connected to the electrode assembly in the thickness direction of the first wall, and the butt-joint portion is connected to the body portion and the protrusion, so that the electrode assembly is electrically connected to the side wall via the first current collection member. The body portion includes the main body region and the plurality of support regions connected to the outer circumferential surface of the main body region, the plurality of support regions are arranged spaced away along the circumferential direction of the main body region, and the support region is at least partially located between the electrode assembly and the protrusion in the thickness direction of the first wall, so that the body portion of the first current collection member supports the electrode assembly between the protrusion and the electrode assembly while thermal runaway gas inside the cylindrical battery cell can be vented through gaps among the plurality of support regions, thereby facilitating internal vent smoothness of the cylindrical battery cell, to improve a pressure relief rate of the cylindrical battery cell. The inner diameter of the protrusion is set to be greater than or equal to the outer diameter of the main body region of the body portion, and the inner diameter of the pressure relief groove is set to be greater than or equal to 0.75 times of the outer diameter of the main body region of the body portion, so that a projection of the main body region of the body portion in the thickness direction of the first wall is located on a structure on an inner side of the protrusion, and a projection of the pressure relief groove in the thickness direction of the first wall is disposed close to an outer edge of the main body region or located on a structure on an outer side of the main body region. In this way, obstruction caused by the protrusion and the main body region to a vent path inside the cylindrical battery cell can be reduced, so that the thermal runaway gas inside the cylindrical battery cell can be directly vented, after smoothly passing through the gaps among the plurality of support regions and entering a side of the body portion facing the first wall, in a region in which the pressure relief groove is provided on the pressure relief component on the first wall, and further, the internal vent smoothness and the pressure relief rate of the cylindrical battery cell can be effectively improved, thereby facilitating reducing a risk such as burst or explosion caused to the cylindrical battery cell due to untimely pressure relief, to improve use stability and reliability of the cylindrical battery cell.

In some embodiments, D₁ ≥ D₃.

In the foregoing technical solution, the inner diameter of the protrusion is set to adopt a structure that is greater than or equal to the inner diameter of the pressure relief groove, so that the pressure relief groove adopts a structure disposed corresponding to a gap between the protrusion and the main body region of the body portion in the thickness direction of the first wall, thereby further reducing blocking and obstruction caused by the protrusion and the main body region to a region for pressure relief on the first wall, and further improving the internal vent smoothness and the pressure relief rate of the cylindrical battery cell. This helps further reduce the risk such as burst or explosion caused to the cylindrical battery cell due to untimely pressure relief, to further improve the use stability and reliability of the cylindrical battery cell.

In some embodiments, an outer diameter of the body portion along the radial direction of the cylindrical battery cell is D₄, and D₁ ≤ 0.95 D₄.

In the foregoing technical solution, the inner diameter of the protrusion is set to be less than 0.95 times of the outer diameter of the body portion, so that a projection of an inner circumferential surface of the protrusion in the thickness direction of the first wall adopts a structure located inside the body portion. In this way, the plurality of support regions connected to the outer circumferential surface of the main body region of the body portion can better extend between the electrode assembly and the protrusion, so that an effect of lapping between the plurality of support regions and the protrusion can be improved, to further improve an effect of supporting the electrode assembly by the body portion of the first current collection member. In addition, during use of the cylindrical battery cell, an effect of resisting expansion of the electrode assembly by the body portion of the first current collection member can be improved, thereby improving the use stability of the cylindrical battery cell.

In some embodiments, a maximum proportion of the plurality of support regions in the circumferential direction of the main body region is P, and 40% ≤ P ≤ 90%.

In the foregoing technical solution, on one hand, the maximum proportion of the plurality of support regions in the circumferential direction of the main body region is set to be greater than or equal to 40%, so that a maximum space occupied by the plurality of support regions on a circumference on which the plurality of support regions are located is greater than or equal to 40%. In this way, an effect of lapping between the body portion and the protrusion via the plurality of support regions can be improved, to improve the effect of supporting the electrode assembly by the body portion of the first current collection member. In addition, during use of the cylindrical battery cell, the effect of resisting the expansion of the electrode assembly by the body portion of the first current collection member can be improved. On the other hand, the maximum proportion of the plurality of support regions in the circumferential direction of the main body region is set to be less than or equal to 90%, so that the maximum space occupied by the plurality of support regions on the circumference on which the plurality of support regions are located is less than or equal to 90%. In this way, a phenomenon that the plurality of support regions are closely arranged spaced away in the circumferential direction of the main body region can be relieved, to improve a dimension of the gaps among the plurality of support regions. Therefore, the thermal runaway gas inside the cylindrical battery cell can smoothly pass through the gaps among the plurality of support regions and enter the side of the body portion facing the first wall, so that the internal vent smoothness and the pressure relief rate of the cylindrical battery cell can be improved, thereby facilitating reducing the risk such as burst or explosion caused to the cylindrical battery cell due to untimely pressure relief.

In some embodiments, 50% ≤ P ≤ 80%.

In the foregoing technical solution, on one hand, the maximum proportion of the plurality of support regions in the circumferential direction of the main body region is set to be greater than or equal to 50%, so that the maximum space occupied by the plurality of support regions on the circumference on which the plurality of support regions are located is greater than or equal to 50%. In this way, the effect of lapping between the body portion and the protrusion via the plurality of support regions can be further improved, to further improve the effect of supporting the electrode assembly by the body portion of the first current collection member. In addition, during use of the cylindrical battery cell, the effect of resisting the expansion of the electrode assembly by the body portion of the first current collection member can be further improved. On the other hand, the maximum proportion of the plurality of support regions in the circumferential direction of the main body region is set to be less than or equal to 80%, so that the maximum space occupied by the plurality of support regions on the circumference on which the plurality of support regions are located is less than or equal to 80%. In this way, the phenomenon that the plurality of support regions are closely arranged spaced away in the circumferential direction of the main body region can be further relieved, to further improve the dimension of the gaps among the plurality of support regions. Therefore, the thermal runaway gas inside the cylindrical battery cell can more smoothly pass through the gaps among the plurality of support regions and enter the side of the body portion facing the first wall, so that the internal vent smoothness and the pressure relief rate of the cylindrical battery cell can be further improved, thereby facilitating further reducing the risk such as burst or explosion caused to the cylindrical battery cell due to untimely pressure relief.

In some embodiments, a dimension by which the protrusion protrudes from the inner circumferential surface of the side wall in the radial direction of the cylindrical battery cell is L₁. A dimension of an overlapping part between an orthographic projection of the support region and an orthographic projection of the protrusion in the radial direction of the cylindrical battery cell in a projection plane perpendicular to the thickness direction of the first wall is L₂. 0.2 L₁ ≤ L₂ ≤ 0.9 L₁.

In the foregoing technical solution, the dimension of the overlapping part between the projection of the support region in the thickness direction of the first wall and the protrusion in the radial direction of the cylindrical battery cell is set to range from 0.2 times to 0.9 times of the dimension by which the protrusion protrudes from the inner circumferential surface of the side wall, so that a length by which the support region extends between the protrusion and the electrode assembly in the radial direction of the cylindrical battery cell ranges from 0.2 times to 0.9 times of the dimension by which the protrusion protrudes from the inner circumferential surface of the side wall. On one hand, when the length by which the support region extends between the protrusion and the electrode assembly in the radial direction of the cylindrical battery cell is set to be greater than or equal to 0.2 times of the dimension by which the protrusion protrudes from the inner circumferential surface of the side wall, the effect of lapping between the support region and the protrusion can be further improved, thereby further improving the effect of supporting the electrode assembly by the body portion of the first current collection member. In addition, during use of the cylindrical battery cell, the effect of resisting the expansion of the electrode assembly by the body portion of the first current collection member can be further improved. On the other hand, when the length by which the support region extends between the protrusion and the electrode assembly in the radial direction of the cylindrical battery cell is set to be less than or equal to 0.9 times of the dimension by which the protrusion protrudes from the inner circumferential surface of the side wall, a phenomenon of excessive lapping between the support region and the protrusion can be relieved, so that difficulty in assembling the first current collection member into the shell can be reduced, and the body portion of the first current collection member can be easily detached from the protrusion and the electrode assembly under the impact of the thermal runaway gas during pressure relief of the cylindrical battery cell, thereby facilitating improving the internal vent smoothness and the pressure relief rate of the cylindrical battery cell, to further reduce the risk such as burst or explosion caused to the cylindrical battery cell due to untimely pressure relief.

In some embodiments, 2 mm ≤ L₁ ≤ 5 mm.

In the foregoing technical solution, the dimension by which the protrusion protrudes from the inner circumferential surface of the side wall is set to range from 2 mm to 5 mm, so that a dimension of the protrusion in the radial direction of the cylindrical battery cell ranges from 2 mm to 5 mm. On one hand, when the dimension by which the protrusion protrudes from the inner circumferential surface of the side wall is set to be greater than or equal to 2 mm, difficulty in lapping between the protrusion and the support region can be reduced, to reduce difficulty in disposing the body portion of the first current collection member between the protrusion and the electrode assembly, and an effect of supporting the electrode assembly by the protrusion can be improved. On the other hand, when the dimension by which the protrusion protrudes from the inner circumferential surface of the side wall is set to be less than or equal to 5 mm, a space occupied by the protrusion in the radial direction of the cylindrical battery cell can be reduced, thereby facilitating reducing the obstruction caused by the protrusion to the vent path inside the cylindrical battery cell. In this way, the internal vent smoothness and the pressure relief rate of the cylindrical battery cell can be effectively improved, thereby facilitating reducing the risk such as burst or explosion caused to the cylindrical battery cell due to untimely pressure relief, to improve the use stability and reliability of the cylindrical battery cell.

In some embodiments, L₂ ≥ 1 mm.

In the foregoing technical solution, the dimension of the overlapping part between the projection of the support region in the thickness direction of the first wall and the protrusion in the radial direction of the cylindrical battery cell is set to be greater than or equal to 1 mm, so that the length by which the support region extends between the protrusion and the electrode assembly in the radial direction of the cylindrical battery cell is greater than or equal to 1 mm. In this way, the effect of lapping between the support region and the protrusion can be improved, to improve the effect of supporting the electrode assembly by the body portion of the first current collection member. In addition, during use of the cylindrical battery cell, the effect of resisting the expansion of the electrode assembly by the body portion of the first current collection member can be further improved.

In some embodiments, a thickness of the body portion is T₁, and 0.1 mm ≤ T₁ ≤ 0.6 mm.

In the foregoing technical solution, on one hand, the thickness of the body portion is set to be greater than or equal to 0.1 mm, so that structural strength of the body portion can be effectively improved, to improve the effect of supporting the electrode assembly by the body portion between the protrusion and the electrode assembly. In addition, during use of the cylindrical battery cell, the effect of resisting the expansion of the electrode assembly by the body portion of the first current collection member can be improved, thereby facilitating reducing a risk that the body portion is deformed or falls off due to the expansion of the electrode assembly. On the other hand, the thickness of the body portion is set to be less than or equal to 0.6 mm, so that manufacturing difficulty and manufacturing costs of the body portion of the first current collection member can be reduced, and a space occupied by the body portion in the thickness direction of the first wall can be effectively reduced, thereby facilitating improving internal space utilization of the cylindrical battery cell.

In some embodiments, the electrode assembly includes a main body portion and a first tab. Along the thickness direction of the first wall, the first tab is connected to an end of the main body portion facing the first wall. The main body region is welded to the first tab to form a plurality of first connection portions. The plurality of support regions are welded to the first tab to form a plurality of second connection portions. A sum of lengths of the plurality of second connection portions is greater than or equal to a sum of lengths of the plurality of first connection portions.

In the foregoing technical solution, the main body region of the body portion is welded to the first tab, forming the plurality of first connection portions, and the plurality of support regions of the body portion are welded to the first tab, forming the plurality of second connection portions, so that the main body region and the support regions all adopt structures welded to the first tab. In this way, a current guide area between the first tab and the body portion can be improved, and connection stability and reliability between the body portion of the first current collection member and the first tab of the electrode assembly can be improved. Because a length of an outer ring of the first tab is greater than a length of an inner ring of the first tab, an overcurrent requirement of the outer ring of the first tab is higher than an overcurrent requirement of the inner ring of the first tab. A total length of the plurality of second connection portions formed by welding the plurality of support regions to the first tab is set to be greater than a total length of the plurality of first connection portions formed by welding the main body region to the first tab, so that a current guide area between the outer ring of the first tab and the body portion is greater than a current guide area between the inner ring of the first tab and the body portion. In this way, overcurrent balance between the inner ring and the outer ring of the first tab can be improved, thereby facilitating reducing a phenomena of local lithium plating or an increase in an internal resistance during use of the electrode assembly.

In some embodiments, the plurality of first connection portions are arranged spaced away along the circumferential direction of the side wall, and the first connection portions extend along the radial direction of the cylindrical battery cell.

In the foregoing technical solution, the plurality of first connection portions formed by welding the main body region to the first tab are set to adopt structures arranged spaced away along the circumferential direction of the side wall, and the first connection portions each adopt a structure extending along the radial direction of the cylindrical battery cell. Therefore, on one hand, welding difficulty between the main body region and the first tab can be reduced, and a layout among the plurality of first connection portions can be optimized, thereby facilitating relieving an impact of interference among the plurality of first connection portions. On the other hand, the first tab can be connected to the main body region at a plurality of positions in the circumferential direction of the side wall, and the first tab can be connected to the main body region at a plurality of positions in the radial direction of the cylindrical battery cell, so that a plurality of ring structures of the first tab are all connected to the main body region. In this way, both a current guide area between the first tab and the main body region and overcurrent balance between the electrode assembly and the main body region can be improved, to reduce a risk of local lithium plating during use of the electrode assembly.

In some embodiments, the plurality of second connection portions are arranged spaced away along the circumferential direction of the side wall, and the second connection portions extend along the radial direction of the cylindrical battery cell.

In the foregoing technical solution, the plurality of second connection portions formed by welding the plurality of support regions to the first tab are set to adopt structures arranged spaced away along the circumferential direction of the side wall, and the second connection portions each adopt a structure extending along the radial direction of the cylindrical battery cell. Therefore, on one hand, welding difficulty between the plurality of support regions and the first tab can be reduced, and a layout among the plurality of second connection portions can be optimized, thereby facilitating relieving an impact of interference among the plurality of second connection portions. On the other hand, the first tab can be connected to the support regions at a plurality of positions in the circumferential direction of the side wall, and the first tab can be connected to the support regions at a plurality of positions in the radial direction of the cylindrical battery cell, so that the plurality of ring structures of the first tab can be all connected to the support regions. In this way, both a current guide area between the first tab and the support regions and overcurrent balance between the electrode assembly and the support regions can be improved, to reduce the risk of local lithium plating during use of the electrode assembly.

In some embodiments, the support regions are all welded to the first tab to form the second connection portions.

In the foregoing technical solution, the support regions of the body portion are all welded to the first tab, so that the plurality of support regions arranged spaced away in the circumferential direction of the main body region are all welded to the first tab to correspondingly form the second connection portions. Therefore, on one hand, the connection stability and robustness between the first tab and the body portion are further improved, and on the other hand, the first tab is connected to the support regions at the plurality of positions in the circumferential direction of the side wall, to help improve overcurrent balance between the electrode assembly and the first current collection member, thereby reducing the risk of local lithium plating during use of the electrode assembly.

In some embodiments, the first current collection member includes a plurality of butt-joint portions. The plurality of butt-joint portions are arranged spaced away along the circumferential direction of the main body region and are all connected to the main body region. The plurality of butt-joint portions are all connected to the protrusion.

In the foregoing technical solution, the first current collection member is provided with the plurality of butt-joint portions, and the plurality of butt-joint portions adopt structures that are arranged spaced away along the circumferential direction of the main body region and all connected to the protrusion, so that the protrusion can be connected to the butt-joint portions at a plurality of positions in the circumferential direction of the side wall. Therefore, on one hand, connection stability and robustness between the first current collection member and the protrusion can be further improved, and on the other hand, a current guide area between the first current collection member and the protrusion can be further improved, and overcurrent balance between the first current collection member and the protrusion is further improved, to reduce a risk of a local temperature increase of the protrusion.

In some embodiments, the plurality of butt-joint portions are all welded to the protrusion to correspondingly form a plurality of third connection portions. The third connection portions are in one-to-one correspondence with the butt-joint portions. The third connection portions extend along the circumferential direction of the side wall. Outer edges of orthographic projections of the plurality of third connection portions in a projection plane perpendicular to the thickness direction of the first wall are all located on a first circle. A sum of arc lengths of the outer edges of the orthographic projections of the plurality of third connection portions is L₃. A perimeter of the first circle is L₄. L₃ ≥ 0.5 L₄.

In the foregoing technical solution, the sum of the arc lengths of the outer edges of the orthographic projections of the plurality of third connection portions in the thickness direction of the first wall is set to be greater than or equal to 0.5 times of the perimeter of the first circle, so that a proportion of the plurality of third connection portions on the first circle is greater than or equal to 50%. In this way, the current guide area between the first current collection member and the protrusion is improved, to improve a current guide effect between the first current collection member and the shell, thereby reducing a phenomenon of an increase in an internal resistance during use of the cylindrical battery cell.

In some embodiments, L₃ ≥ 0.8 L₄.

In the foregoing technical solution, the sum of the arc lengths of the outer edges of the orthographic projections of the plurality of third connection portions in the thickness direction of the first wall is further set to be greater than or equal to 0.8 times of the perimeter of the first circle, so that the proportion of the plurality of third connection portions on the first circle is greater than or equal to 80%. In this way, the current guide area between the first current collection member and the protrusion is further improved, to further improve the current guide effect between the first current collection member and the shell, thereby facilitating further reducing the phenomenon of the increase in the internal resistance during use of the cylindrical battery cell.

In some embodiments, the butt-joint portion has a connection region welded to the protrusion, and the connection region adopts an arc structure extending along the circumferential direction of the side wall.

In the foregoing technical solution, the butt-joint portion is provided with the connection region for mutual welding to the protrusion. The connection region is set to adopt the arc structure extending along the circumferential direction of the side wall, so that the connection region and the protrusion conform with each other. Therefore, on one hand, welding between the connection region of the butt-joint portion and the protrusion to form the third connection portion extending along the circumferential direction of the side wall is facilitated, to help reduce welding difficulty between the butt-joint portion and the protrusion. On the other hand, the connection region and the protrusion can be welded to each other at a plurality of positions in the circumferential direction of the side wall, so that rotation position adjustment and positioning performed on the first current collection member after the first current collection member is assembled inside the shell can be reduced, thereby facilitating further reducing welding difficulty between the first current collection member and the protrusion. In this way, assembly efficiency of the cylindrical battery cell can be effectively improved.

In some embodiments, the plurality of butt-joint portions are all connected to the outer circumferential surface of the main body region. The butt-joint portions and the support regions are arranged alternately along the circumferential direction of the main body region.

In the foregoing technical solution, the plurality of butt-joint portions arranged spaced away along the circumferential direction of the main body region are all set to adopt a structure connected to the outer circumferential surface of the main body region, to help reduce connection difficulty between the main body region and the butt-joint portions, thereby reducing difficulty in forming the first current collection member. The butt-joint portions and the support regions are set to adopt structures arranged alternately along the circumferential direction of the main body region. Therefore, on one hand, an impact of interference between the butt-joint portions and the support regions is reduced, to reduce connection difficulty between the butt-joint portions and the protrusion, and assembly difficulty between between the body portion and the electrode assembly is reduced. On the other hand, regularity of the first current collection member is improved, and structural layouts of the butt-joint portions and the support regions are optimized, thereby facilitating reducing difficulty in assembling the first current collection member inside the shell.

In some embodiments, a central through hole is provided on the electrode assembly. The central through hole runs through two ends of the electrode assembly along the thickness direction of the first wall. A vent hole is provided in the main body region. The vent hole runs through two sides of the main body region along the thickness direction of the first wall. The vent hole is in communication with the central through hole. A projection of a hole wall surface of the central through hole along the thickness direction of the first wall is located inside the vent hole.

In the foregoing technical solution, the vent hole that runs through the main body region along the thickness direction of the first wall is provided in the main body region of the body portion of the first current collection member, the vent hole is connected to the central through hole of the electrode assembly, and the projection of the hole wall surface of the central through hole in the thickness direction of the first wall is set to be located inside the vent hole, so that a hole diameter of the vent hole adopts a structure that is greater than or equal to a hole diameter of the central through hole. In this way, when thermal runaway occurs in the cylindrical battery cell, after the thermal runaway gas in the central through hole enters, through the vent hole, the side of the body portion facing the first wall, it is convenient for the thermal runaway gas to be directly vented in the region in which the pressure relief groove is provided on the pressure relief component on the first wall, thereby facilitating improving the internal vent smoothness of the cylindrical battery cell, and effectively reducing the risk such as burst or explosion caused to the cylindrical battery cell due to untimely pressure relief, to improve the use stability and reliability of the cylindrical battery cell.

In some embodiments, the hole diameter of the central through hole is D₅, the hole diameter of the vent hole is D₆, and D₆ ≥ 1.5 D₅.

In the foregoing technical solution, the hole diameter of the vent hole is further set to be greater than or equal to 1.5 times of the hole diameter of the central through hole, so that smoothness that the thermal runaway gas in the central through hole enters, through the vent hole, the side of the body portion facing the first wall when thermal runaway occurs in the cylindrical battery cell is further improved, thereby facilitating further improving the internal vent smoothness of the cylindrical battery cell. In this way, the risk such as burst or explosion caused to the cylindrical battery cell due to untimely pressure relief is further reduced, to further improve the use stability and reliability of the cylindrical battery cell.

In some embodiments, a length of the support region along the radial direction of the cylindrical battery cell is L₅, and 0.5 D₂ ≥ L₅.

In the foregoing technical solution, a radius of the main body region of the body portion is set to be greater than or equal to a length by which the support region of the body portion protrudes from the outer circumferential surface of the main body region in the radial direction of the cylindrical battery cell, so that a phenomenon of insufficient structural strength of the body portion caused by excessive space occupied by the support region in the body portion can be relieved, thereby further improving a phenomenon of a poor effect of supporting the electrode assembly by the body portion in the thickness direction of the first wall. In addition, during use of the cylindrical battery cell, the effect of resisting the expansion of the electrode assembly by the body portion can be further improved.

In some embodiments, an accommodating cavity is formed inside the shell. The body portion is configured to separate the accommodating cavity into a first cavity and a second cavity that are in communication with each other. The electrode assembly is accommodated in the first cavity. The second cavity is located between the body portion and the first wall in the thickness direction of the first wall. The pressure relief component is configured to split along at least a part of the pressure relief groove during pressure relief of the cylindrical battery cell, to release pressure inside the second cavity. A maximum dimension of the second cavity is H₁ and a maximum dimension of the shell is H₂ along the thickness direction of the first wall, and 0.003 ≤ H₁ / H₂ ≤ 0.06.

In the foregoing technical solution, the body portion separates the accommodating cavity inside the shell into the first cavity and the second cavity that are arranged along the thickness direction of the first wall. The electrode assembly is disposed in the first cavity, and the second cavity is located between the first wall and the body portion. The pressure relief component is configured to split along at least a part of the pressure relief groove during pressure relief of the cylindrical battery cell and release the pressure inside the second cavity, so that the region in which the pressure relief groove is provided on the pressure relief component on the first wall adopts a structure disposed corresponding to the second cavity. The cylindrical battery cell adopting this structure implements separation between the electrode assembly and the pressure relief component by using the second cavity. Therefore, obstruction and blocking caused by the electrode assembly to the pressure relief component are relieved during pressure relief of the cylindrical battery cell, so that the second cavity configured to buff and vent the thermal runaway gas is provided inside the shell, thereby facilitating improving the internal vent smoothness of the cylindrical battery cell. The maximum dimension of the second cavity in the thickness direction of the first wall ranges from 0.003 times to 0.06 times of the maximum dimension of the shell in the thickness direction of the first wall. On one hand, the maximum dimension of the second cavity in the thickness direction of the first wall is set to be greater than or equal to 0.003 times of the maximum dimension of the shell in the thickness direction of the first wall, so that there is sufficient space between the body portion and the first wall to buffer and vent the thermal runaway gas, thereby facilitating improving the internal vent smoothness and the pressure relief rate of the cylindrical battery cell, and therefore, the risk such as burst or explosion caused to the cylindrical battery cell due to untimely pressure relief is reduced. On the other hand, the maximum dimension of the second cavity in the thickness direction of the first wall is set to be less than or equal to 0.06 times of the maximum dimension of the shell in the thickness direction of the first wall, to relieve a phenomenon that the second cavity occupies excessive space in the accommodating cavity for disposing the electrode assembly. Therefore, the internal space utilization of the cylindrical battery cell is improved, thereby improving an energy density of the cylindrical battery cell.

In some embodiments, 0.01 ≤ H₁ / H₂ ≤ 0.03.

In the foregoing technical solution, on one hand, the maximum dimension of the second cavity in the thickness direction of the first wall is further set to be greater than or equal to 0.01 times of the maximum dimension of the shell in the thickness direction of the first wall, so that there is more space between the body portion and the first wall to buffer and vent the thermal runaway gas, thereby facilitating further improving the internal vent smoothness and the pressure relief rate of the cylindrical battery cell, and therefore, the risk such as burst or explosion caused to the cylindrical battery cell due to untimely pressure relief is further reduced. On the other hand, the maximum dimension of the second cavity in the thickness direction of the first wall is further set to be less than or equal to 0.03 times of the maximum dimension of the shell in the thickness direction of the first wall, to further relieve the phenomenon that the second cavity occupies excessive space in the accommodating cavity for disposing the electrode assembly. Therefore, the internal space utilization of the cylindrical battery cell is further improved, thereby further improving the energy density of the cylindrical battery cell.

In some embodiments, 0.4 mm ≤ H₁ ≤ 4 mm.

In the foregoing technical solution, the maximum dimension of the second cavity in the thickness direction of the first wall is set to range from 0.4 mm to 4 mm. Therefore, on one hand, there is more space between the body portion and the first wall to buffer and vent the thermal runaway gas, so that a phenomenon of obstruction caused by the electrode assembly and the body portion to the vent path inside the cylindrical battery cell during pressure relief of the cylindrical battery cell is reduced, thereby further improving the internal vent smoothness and the pressure relief rate of the cylindrical battery cell, to reduce the risk such as burst or explosion caused to the cylindrical battery cell due to untimely pressure relief. On the other hand, the phenomenon that the second cavity occupies excessive space in the accommodating cavity for disposing the electrode assembly can be relieved, thereby further improve the internal space utilization of the cylindrical battery cell, to further improve the energy density of the cylindrical battery cell.

In some embodiments, a capacitance of the cylindrical battery cell is C, and 0.005 mm/Ah ≤ H₁ / C ≤ 0.2 mm/Ah.

In the foregoing technical solution, on one hand, a ratio of the maximum dimension of the second cavity in the thickness direction of the first wall to the capacitance of the cylindrical battery cell is set to be greater than or equal to 0.005 mm/Ah, so that there is sufficient space in the second cavity to buffer and vent the thermal runaway gas during pressure relief of the cylindrical battery cell, thereby facilitating mutual matching between a gas generating rate of a space for venting in the shell and a gas generating rate of the cylindrical battery cell during thermal runaway, to improve the internal vent smoothness of the cylindrical battery cell. In this way, the risk such as burst or explosion caused to the cylindrical battery cell due to untimely pressure relief is effectively reduced. On the other hand, the ratio of the maximum dimension of the second cavity in the thickness direction of the first wall to the capacitance of the cylindrical battery cell is set to be less than or equal to 0.2 mm/Ah, to relieve a phenomenon that the space for venting in the shell is excessively wasted. Therefore, the internal space utilization of the cylindrical battery cell is improved, thereby improving the energy density of the cylindrical battery cell.

In some embodiments, a positive electrode material of the cylindrical battery cell includes lithium transition metal oxide, and H₁ and C further satisfy 0.01 mm/Ah ≤ H₁ / C ≤ 0.2 mm/Ah. Alternatively, a positive electrode material of the cylindrical battery cell includes lithium-containing phosphate, and H₁ and C further satisfy 0.005 mm/Ah ≤ H₁ / C ≤ 0.1 mm/Ah.

In the foregoing technical solution, when the positive electrode material of the cylindrical battery cell includes the lithium transition metal oxide, the ratio of the maximum dimension of the second cavity in the thickness direction of the first wall to the capacitance of the cylindrical battery cell is further enabled to range from 0.01 mm/Ah to 0.2 mm/Ah, so that the gas generating rate of the space for venting in the shell further matches the gas generating rate of the cylindrical battery cell during thermal runaway. Therefore, on one hand, the internal vent smoothness of the cylindrical battery cell is further improved, to further reduce the risk such as burst or explosion caused to the cylindrical battery cell due to untimely pressure relief. On the other hand, the phenomenon that the space for venting in the shell is excessively wasted can be further relieved, to further improve the internal space utilization of the cylindrical battery cell, thereby facilitating further improving the energy density of the cylindrical battery cell. Similarly, when the positive electrode material of the cylindrical battery cell includes the lithium-containing phosphate, the ratio of the maximum dimension of the second cavity in the thickness direction of the first wall to the capacitance of the cylindrical battery cell is further enabled to range from 0.005 mm/Ah to 0.1 mm/Ah, so that the gas generating rate of the space for venting in the shell further matches the gas generating rate of the cylindrical battery cell during thermal runaway. Therefore, on one hand, the internal vent smoothness of the cylindrical battery cell is further improved, to further reduce the risk such as burst or explosion caused to the cylindrical battery cell due to untimely pressure relief. On the other hand, the phenomenon that the space for venting in the shell is excessively wasted can be further relieved, to further improve the internal space utilization of the cylindrical battery cell, thereby facilitating further improving the energy density of the cylindrical battery cell.

In some embodiments, an outer diameter of the electrode assembly along the radial direction of the cylindrical battery cell is D₇, and 0.7 ≤ D₁ / D₇ ≤ 0.95.

In the foregoing technical solution, a ratio of the inner diameter of the protrusion to the outer diameter of the electrode assembly is set to range from 0.7 to 0.95. On one hand, the inner diameter of the protrusion is set to be greater than or equal to 0.7 times of the outer diameter of the electrode assembly, so that most regions on the electrode assembly adopt a structure disposed corresponding to the inner side of the protrusion in the thickness direction of the first wall. In this way, the obstruction caused by the protrusion to the vent path inside the cylindrical battery cell can be reduced, thereby facilitating improving the internal vent smoothness and the pressure relief rate of the cylindrical battery cell, and effectively reducing the risk such as burst or explosion caused to the cylindrical battery cell due to untimely pressure relief. On the other hand, the inner diameter of the protrusion is set to be less than or equal to 0.95 times of the outer diameter of the electrode assembly, so that the electrode assembly and the protrusion are structures whose projections in the thickness direction of the first wall partially overlap. In this way, an effect of supporting the electrode assembly by the protrusion by using the body portion can be improved. In addition, during use of the cylindrical battery cell, the effect of resisting the expansion of the electrode assembly by the body portion of the first current collection member can be improved.

In some embodiments, 0.75 ≤ D₁ / D₇ ≤ 0.9.

In the foregoing technical solution, on one hand, the inner diameter of the protrusion is set to be greater than or equal to 0.75 times of the outer diameter of the electrode assembly, to further improve an area of the regions on the electrode assembly that are provided corresponding to the inner side of the protrusion in the thickness direction of the first wall. In this way, the obstruction caused by the protrusion to the vent path inside the cylindrical battery cell can be further reduced, thereby facilitating further improving the internal vent smoothness and the pressure relief rate of the cylindrical battery cell, and further reducing the risk such as burst or explosion caused to the cylindrical battery cell due to untimely pressure relief. On the other hand, the inner diameter of the protrusion is set to be less than or equal to 0.9 times of the outer diameter of the electrode assembly, to further improve an area of a region in which the electrode assembly and the protrusion overlap each other in the thickness direction of the first wall. In this way, the effect of supporting the electrode assembly by the protrusion by using the body portion is further improved. In addition, during use of the cylindrical battery cell, the effect of resisting the expansion of the electrode assembly by the body portion of the first current collection member can be further improved.

In some embodiments, a projection of the pressure relief groove along the thickness direction of the first wall is located inside the second cavity.

In the foregoing technical solution, the pressure relief groove is set to adopt a structure whose projection in the thickness direction of the first wall is located inside the second cavity, so that the region in which the pressure relief groove is provided on the pressure relief component on the first wall adopts a structure disposed corresponding to the second cavity in the thickness direction of the first wall. In this way, when thermal runaway occurs in the cylindrical battery cell and the pressure relief component splits along at least a part of the pressure relief groove for pressure relief, it is more convenient to vent the thermal runaway gas in the second cavity, thereby facilitating further improving a venting rate of the thermal runaway gas in the second cavity, and further improving the pressure relief rate of the cylindrical battery cell. Therefore, the risk such as burst or explosion caused to the cylindrical battery cell due to untimely pressure relief is further reduced.

In some embodiments, the butt-joint portion includes a connection region and an elastic region. The connection region is provided, in the thickness direction of the first wall, on a side of the main body region facing the first wall. The connection region is connected to the protrusion. The elastic region is connected to the connection region and the main body region. The elastic region is configured to be deformable.

In the foregoing technical solution, the butt-joint portion is provided with the connection region and the elastic region. The connection region is connected to the protrusion, and the elastic region is connected between the main body region and the connection region, to implement electrical connection between the protrusion and the body portion. The connection region is provided, in the thickness direction of the first wall, on the side of the main body region facing the first wall, and the elastic region is set to adopt a structure that is deformable when the main body region and the connection region approach or move away from each other along the thickness direction of the first wall, so that the elastic region has a buffering function between the main body region and the connection region. In this way, during shaking or displacement of the electrode assembly, rigid tearing between the main body region and the connection region, rigid tearing between the main body region and the electrode assembly, and rigid tearing between the connection region and the protrusion are relieved, thereby facilitating further reducing a risk of a connection failure between the main body region and the electrode assembly and a connection failure between the connection region and the protrusion, and facilitating reducing a phenomenon that the first current collection member is torn and damaged.

In some embodiments, the elastic region is bent to form a plurality of bent segments. The plurality of bent segments are sequentially connected. The bent segments located at two ends among the plurality of bent segments are respectively connected to the main body region and the connection region.

In the foregoing technical solution, the elastic region is set to adopt a structure bent to form the plurality of sequentially connected bent segments, and the bent segments located at the two ends among the plurality of bent segments are respectively connected to the main body region and the connection region. In this way, a deformation capability of the elastic region when the main body region and the connection region approach or move away from each other along the thickness direction of the first wall is improved, to further improve a buffering effect of the elastic region between the main body region and the connection region, thereby further reducing the phenomena of the rigid tearing between the main body region and the connection region, the rigid tearing between the main body region and the electrode assembly, and the rigid tearing between the connection region and the protrusion.

In some embodiments, in the projection plane perpendicular to the thickness direction of the first wall, an orthographic projection of the connection region extends along the circumferential direction of the side wall and is located on a circumferential side of an orthographic projection of the main body region, and the orthographic projection of the connection region and the orthographic projection of the main body region are arranged spaced away in the radial direction of the cylindrical battery cell, to form a vent gap between the orthographic projection of the connection region and the orthographic projection of the main body region.

In the foregoing technical solution, in the projection plane perpendicular to the thickness direction of the first wall, the orthographic projection of the connection region and the orthographic projection of the main body region are set to adopt a structure in which the vent gap is formed in the radial direction of the cylindrical battery cell, so that the thermal runaway gas inside the cylindrical battery cell is vented after entering, through the vent gap between the connection region and the main body region, a side of the first current collection member facing the first wall. This helps reduce obstruction caused by the first current collection member to the vent path inside the cylindrical battery cell, thereby improving the internal vent smoothness and the pressure relief rate of the cylindrical battery cell.

In some embodiments, at least a part of the projection of the pressure relief groove along the thickness direction of the first wall is located in the vent gap.

In the foregoing technical solution, the pressure relief groove is set to adopt a structure whose projection in the thickness direction of the first wall is at least partially located in the vent gap, so that the pressure relief groove adopts a structure at least partially disposed, in the thickness direction of the first wall, corresponding to the vent gap between the connection region and the main body region. In this way, the internal vent smoothness and pressure relief smoothness of the cylindrical battery cell are further improved, thereby improving the pressure relief rate of the cylindrical battery cell. Further, risks such as fire and explosion caused to the cylindrical battery cell due to untimely pressure relief are reduced, to improve the use reliability of the cylindrical battery cell.

In some embodiments, a diameter of an orthographic projection of an outer edge of the connection region is D₈, an orthographic projection of the elastic region extends along the radial direction of the cylindrical battery cell, and a length of the orthographic projection of the elastic region is L₆ in the projection plane perpendicular to the thickness direction of the first wall. 1/15 ≤ L₆ / D₈ ≤ 1/3.

In the foregoing technical solution, in the projection plane perpendicular to the thickness direction of the first wall, the orthographic projection of the connection region and the orthographic projection of the main body region are set to adopt structures arranged spaced away in the radial direction of the cylindrical battery cell, and a ratio of the length of the elastic region of the first current collection member in the radial direction of the cylindrical battery cell to the diameter of the orthographic projection of the outer edge of the connection region is set to range from 1/15 to 1/3. Therefore, on one hand, a phenomena that the elastic region occupies an excessively small dimension in the radial direction of the cylindrical battery cell can be relieved, thereby facilitating enlarging a vent space between the connection region and the main body region, so that the thermal runaway gas inside the cylindrical battery cell is vented, after passing through the vent space between the connection region and the main body region, in the region in which the pressure relief groove is provided on the pressure relief component on the first wall. In this way, the internal vent smoothness of the cylindrical battery cell is improved, to improve the pressure relief rate of the cylindrical battery cell, thereby reducing the risk such as burst or explosion caused to the cylindrical battery cell due to untimely pressure relief. On the other hand, a phenomenon that support strength of the elastic region between the main body region and the connection region is insufficient because the elastic region occupies an excessively large dimension in the radial direction of the cylindrical battery cell can be relieved. In this way, an effect of supporting the electrode assembly by the first current collection member and an effect of resisting expansion of the electrode assembly during use can be effectively improved, to relieve a phenomenon such as excessive expansion or misplacement of the electrode assembly, thereby facilitating improving the use stability and reliability of the cylindrical battery cell.

In some embodiments, 1/7 ≤ L₆ / D₈ ≤ 1/4.

In the foregoing technical solution, in the projection plane perpendicular to the thickness direction of the first wall, the ratio of the length of the elastic region of the first current collection member in the radial direction of the cylindrical battery cell to the diameter of the orthographic projection of the outer edge of the connection region is further set to range from 1/7 to 1/4. Therefore, on one hand, the phenomena that the elastic region occupies an excessively small dimension in the radial direction of the cylindrical battery cell can be further relieved, thereby facilitating further enlarging the vent space between the connection region and the main body region, so that the thermal runaway gas inside the cylindrical battery cell is vented, after passing through the vent space between the connection region and the main body region, in the region in which the pressure relief groove is provided on the pressure relief component on the first wall. In this way, the internal vent smoothness of the cylindrical battery cell is further improved, to further improve the pressure relief rate of the cylindrical battery cell, thereby further reducing the risk such as burst or explosion caused to the cylindrical battery cell due to untimely pressure relief. On the other hand, the phenomenon that the support strength of the elastic region between the main body region and the connection region is insufficient because the elastic region occupies an excessively large dimension in the radial direction of the cylindrical battery cell can be further relieved. In this way, the effect of supporting the electrode assembly by the first current collection member and the effect of resisting the expansion of the electrode assembly during use can be further improved, to further relieve the phenomenon such as excessive expansion or misplacement of the electrode assembly, thereby further facilitating improving the use stability and reliability of the cylindrical battery cell.

In some embodiments, 3 mm ≤ L₆ ≤ 15 mm.

In the foregoing technical solution, in the projection plane perpendicular to the thickness direction of the first wall, the length of the elastic region of the first current collection member in the radial direction of the cylindrical battery cell is set to range from 3 mm to 15 mm. On one hand, when the length of the elastic region in the radial direction of the cylindrical battery cell is set to greater than or equal to 3 mm, the vent space between the connection region and the main body region is enlarged, so that the thermal runaway gas inside the cylindrical battery cell is vented, after passing through the vent space between the connection region and the main body region, in the region in which the pressure relief groove is provided on the pressure relief component on the first wall, thereby facilitating improving the internal vent smoothness of the cylindrical battery cell. On the other hand, when the length of the elastic region in the radial direction of the cylindrical battery cell is set to less than or equal to 15 mm, the phenomenon that the support strength of the elastic region between the main body region and the connection region is insufficient because the elastic region is excessively long can be relieved, thereby facilitating improving the effect of supporting the electrode assembly by the first current collection member and the effect of resisting the expansion of the electrode assembly during use, to further relieve the phenomenon such as excessive expansion or misplacement of the electrode assembly.

In some embodiments, a thickness of the elastic region is T₂. A width of the orthographic projection of the elastic region in a direction perpendicular to the extension direction of the orthographic projection of the elastic region in the projection plane perpendicular to the thickness direction of the first wall is W. 0.3 mm² ≤ W × T₂ ≤ 8 mm².

In the foregoing technical solution, a product of W and T₂ is set to range from 0.3 mm² to 8 mm². On one hand, the product of W and T₂ is set to be less than or equal to 8 mm², so that a phenomenon of excessively large deformation difficulty of the elastic region caused by excessively large W and T₂ can be relieved. In this way, the deformation capability of the elastic region when the main body region and the connection region approach or move away from each other along the thickness direction of the first wall is improved, so that the elastic region has a good buffering function between the main body region and the connection region, and further, during shaking or displacement of the electrode assembly, the phenomena of the rigid tearing between the main body region and the connection region, the rigid tearing between the main body region and the electrode assembly, and the rigid tearing between the connection region and the protrusion are reduced. On the other hand, the product of W and T₂ is set to be greater than or equal to 0.3 mm², so that structural strength of the elastic region is improved, thereby facilitating relieving the phenomenon that the support strength of the elastic region between the main body region and the connection region is insufficient, to improve the effect of supporting the electrode assembly by the first current collection member and the effect of resisting the expansion of the electrode assembly during use. In addition, an overcurrent capability of the elastic region is improved, thereby facilitating improving a current guide effect and a current guide requirement of the first current collection member.

In some embodiments, 2 mm ≤ W ≤ 10 mm.

In the foregoing technical solution, the width of the projection of the elastic region of the first current collection member in the thickness direction of the first wall is set to range from 2 mm to 10 mm. On one hand, the width of the projection of the elastic region in the thickness direction of the first wall is set to be greater than or equal to 2 mm, so that the overcurrent capability of the elastic region is improved, to improve the current guide effect of the first current collection member. In addition, the structural strength of the elastic region is improved, thereby facilitating relieving the phenomenon that the support strength of the elastic region between the main body region and the connection region is insufficient, to improve the effect of supporting the electrode assembly by the first current collection member and the effect of resisting the expansion of the electrode assembly during use. On the other hand, the width of the projection of the elastic region in the thickness direction of the first wall is set to be less than or equal to 10 mm, so that the deformation capability of the elastic region when the main body region and the connection region approach or move away from each other along the thickness direction of the first wall can be effectively improved, and therefore, the elastic region has a good buffering function between the main body region and the connection region. In this way, during shaking or displacement of the electrode assembly, the phenomena of the rigid tearing between the main body region and the connection region, the rigid tearing between the main body region and the electrode assembly, and the rigid tearing between the connection region and the protrusion are reduced.

In some embodiments, 3 mm ≤ W ≤ 5 mm.

In the foregoing technical solution, the width of the projection of the elastic region of the first current collection member in the thickness direction of the first wall is further set to range from 3 mm to 5 mm. On one hand, the width of the projection of the elastic region in the thickness direction of the first wall is set to be greater than or equal to 3 mm, so that the overcurrent capability of the elastic region is further improved, to further improve the current guide effect of the first current collection member. In addition, the structural strength of the elastic region is further improved, thereby facilitating further relieving the phenomenon that the support strength of the elastic region between the main body region and the connection region is insufficient, to further improve the effect of supporting the electrode assembly by the first current collection member and the effect of resisting the expansion of the electrode assembly during use. On the other hand, the width of the projection of the elastic region in the thickness direction of the first wall is set to be less than or equal to 5 mm, so that the deformation capability of the elastic region when the main body region and the connection region approach or move away from each other along the thickness direction of the first wall is further improved, and therefore, the buffering function of the elastic region between the main body region and the connection region is improved. In this way, during shaking or displacement of the electrode assembly, the phenomena of the rigid tearing between the main body region and the connection region, the rigid tearing between the main body region and the electrode assembly, and the rigid tearing between the connection region and the protrusion are further reduced.

In some embodiments, the thickness of the elastic region is T₂, and 0.15 mm ≤ T₂ ≤ 0.8 mm.

In the foregoing technical solution, the thickness of the elastic region of the butt-joint portion is set to range from 0.15 mm to 0.8 mm. On one hand, the thickness of the elastic region is set to be greater than or equal to 0.15 mm, so that the overcurrent capability of the elastic region is improved, to improve the current guide effect of the first current collection member. In addition, the structural strength of the elastic region is improved, thereby facilitating relieving the phenomenon that the support strength of the elastic region between the main body region and the connection region is insufficient, to improve the effect of supporting the electrode assembly by the first current collection member and the effect of resisting the expansion of the electrode assembly during use. On the other hand, the thickness of the elastic region is set to be less than or equal to 0.8 mm, so that the deformation capability of the elastic region when the main body region and the connection region approach or move away from each other along the thickness direction of the first wall can be effectively improved, and therefore, the elastic region has a good buffering function between the main body region and the connection region. In this way, during shaking or displacement of the electrode assembly, the phenomena of the rigid tearing between the main body region and the connection region, the rigid tearing between the main body region and the electrode assembly, and the rigid tearing between the connection region and the protrusion are reduced. In addition, a space occupied by the elastic region in the thickness direction of the first wall is saved, thereby facilitating improving the internal space utilization of the cylindrical battery cell.

In some embodiments, 0.3 mm ≤ T₂ ≤ 0.5 mm.

In the foregoing technical solution, the thickness of the elastic region of the butt-joint portion is further set to range from 0.3 mm to 0.5 mm. On one hand, the thickness of the elastic region is set to be greater than or equal to 0.3 mm, so that the overcurrent capability of the elastic region is further improved, to further improve the current guide effect of the first current collection member. In addition, the structural strength of the elastic region is further improved, thereby facilitating further relieving the phenomenon that the support strength of the elastic region between the main body region and the connection region is insufficient, to further improve the effect of supporting the electrode assembly by the first current collection member and the effect of resisting the expansion of the electrode assembly during use. On the other hand, the thickness of the elastic region is set to be less than or equal to 0.5 mm, so that the deformation capability of the elastic region when the main body region and the connection region approach or move away from each other along the thickness direction of the first wall is further improved, and therefore, the buffering function of the elastic region between the main body region and the connection region is further improved. In this way, during shaking or displacement of the electrode assembly, the phenomena of the rigid tearing between the main body region and the connection region, the rigid tearing between the main body region and the electrode assembly, and the rigid tearing between the connection region and the protrusion are further reduced. In addition, the space occupied by the elastic region in the thickness direction of the first wall is further saved, thereby facilitating further improving the internal space utilization of the cylindrical battery cell.

In some embodiments, the thickness of the elastic region is less than a thickness of the main body region; and/or the thickness of the elastic region is less than a thickness of the connection region.

In the foregoing technical solution, the thickness of the elastic region is set to be less than the thickness of the main body region, so that manufacturing costs and manufacturing difficulty of the first current collection member are reduced while the deformation capability of the elastic region when the main body region and the connection region approach or move away from each other along the thickness direction of the first wall is improved, and therefore, the elastic region has a good buffering function between the main body region and the connection region. Similarly, the thickness of the elastic region is set to be less than the thickness of the connection region, so that manufacturing costs and manufacturing difficulty of the first current collection member are reduced while the deformation capability of the elastic region when the main body region and the connection region approach or move away from each other along the thickness direction of the first wall is improved, and therefore, the elastic region has a good buffering function between the main body region and the connection region.

In some embodiments, the connection region is provided on a side of the protrusion facing away from the electrode assembly and is connected to the protrusion along the thickness direction of the first wall.

In the foregoing technical solution, the connection region of the butt-joint portion of the first current collection member is provided on the side of the protrusion facing away from the electrode assembly in the thickness direction of the first wall, so that the connection region and the body portion adopt structures that are respectively located on two sides of the protrusion in the thickness direction of the first wall, and the connection region and the side of the protrusion facing away from the electrode assembly are connected to each other. When the cylindrical battery cell of this structure is used, on one hand, the first current collection member and the protrusion share a part of space in the thickness direction of the first wall, thereby facilitating improving the internal space utilization of the cylindrical battery cell, to improve the energy density of the cylindrical battery cell. On the other hand, assembly connection between the connection region and the protrusion is not affected by interference of the electrode assembly, thereby facilitating reducing assembly difficulty between the connection region of the butt-joint portion and the protrusion, and optimizing a production craft of the cylindrical battery cell.

In some embodiments, a groove is formed, along the radial direction of the cylindrical battery cell, on a side of the side wall facing away from the electrode assembly and at a position corresponding to the protrusion.

In the foregoing technical solution, the groove is formed on the side of the side wall facing away from the electrode assembly and at the position corresponding to the protrusion, so that the protrusion formed on a side of the side wall facing the electrode assembly adopts a structure formed through stamping processing, to form the protrusion on the side of the side wall facing the electrode assembly, and form the groove on the other side and at the position corresponding to the protrusion. When the cylindrical battery cell of this structure is used, on one hand, difficulty in forming the protrusion on the side of the side wall facing the electrode assembly is reduced, thereby facilitating improving production efficiency of the cylindrical battery cell. On the other hand, the interior of the protrusion adopts a hollow structure, so that the protrusion has an elastic deformation capability, thereby facilitating relieving rigid tearing between the butt-joint portion and the protrusion, to reduce a risk of a connection failure between the butt-joint portion and the protrusion.

In some embodiments, the shell further includes a second wall. The second wall is provided opposite to the first wall in the thickness direction of the first wall. The second wall and the side wall are integrally formed. One end of the side wall along the thickness direction of the first wall is connected to the second wall, and an other end of the side wall along the thickness direction of the first wall encloses to define an opening. The side wall and the second wall jointly define the accommodating cavity. The electrode assembly is accommodated in the accommodating cavity. The first wall seals the opening.

In the foregoing technical solution, the side wall of the shell is set to enclose at an end away from the second wall in the thickness direction of the first wall, to define the opening, and the first wall adopts a structure sealing the opening, so that the first current collection member adopts a structure disposed, in the thickness direction of the first wall, on a side of the electrode assembly facing the opening. In this way, difficulty in assembling the support region of the body portion of the first current collection member between the electrode assembly and the protrusion is reduced, and the connection difficulty between the butt-joint portions and the protrusion is reduced. Therefore, assembly difficulty of the cylindrical battery cell, and the production craft of the cylindrical battery cell can be optimized, thereby facilitating improving the production efficiency of the cylindrical battery cell.

In some embodiments, an end of the side wall away from the second wall in the thickness direction of the first wall is bent to form a flange portion. The flange portion encloses to define the opening. A part of the first wall is located between the flange portion and the protrusion along the thickness direction of the first wall. The flange portion and the protrusion are configured to cooperate to clamp the first wall.

In the foregoing technical solution, the end of the side wall away from the second wall along the thickness direction of the first wall is bent to form the flange portion, and the part of the first wall is set to be located between the protrusion and the flange portion in the thickness direction of the first wall, so that the protrusion and the flange portion assemble and fix the first wall, to implement assembly between the first wall and the side wall. When the cylindrical battery cell of this structure is used, assembly difficulty between the first wall and the side wall is reduced, to improve the production efficiency of the cylindrical battery cell.

In some embodiments, the cylindrical battery cell further includes a sealing member. The sealing member is at least partially disposed between the side wall and the first wall in the radial direction of the cylindrical battery cell. The sealing member is configured to seal a gap between the first wall and the side wall.

In the foregoing technical solution, the cylindrical battery cell is further provided with the sealing member. The sealing member is at least partially disposed between the side wall and the first wall in the radial direction of the cylindrical battery cell, so that the sealing member seals the gap between the first wall and the side wall, to reduce a risk such as leakage during use of the cylindrical battery cell, thereby facilitating improving the use stability and reliability of the cylindrical battery cell.

In some embodiments, the side wall and the first wall are integrally formed. One end of the side wall along the thickness direction of the first wall is connected to the first wall, and an other end of the side wall along the thickness direction of the first wall encloses to define an opening. The side wall and the first wall jointly define the accommodating cavity. The electrode assembly is accommodated in the accommodating cavity. The shell further includes a second wall. The second wall is provided opposite to the first wall in the thickness direction of the first wall. The second wall seals the opening.

In the foregoing technical solution, the first wall and the side wall are set to adopt an integrally formed structure, an end of the side wall away from the first wall in the thickness direction of the first wall encloses to define the opening for assembly of the electrode assembly, and the second wall seals the opening. When the cylindrical battery cell of this structure is used, after the protrusion is first formed on the inner circumferential surface of the side wall, the electrode assembly is assembled into the accommodating cavity jointly formed by the side wall and the first wall, thereby facilitating reducing a damage caused by the protrusion to the electrode assembly during forming, thereby improving production quality of the cylindrical battery cell.

In some embodiments, the protrusion adopts an annular structure extending along the circumferential direction of the side wall.

In the foregoing technical solution, the protrusion is set to adopt a closed-loop annular structure, so that on one hand, an effect of supporting the electrode assembly by the protrusion by using the first current collection member can be improved, and on the other hand, the protrusion can be connected to the butt-joint portion at any position in a circumferential direction of the protrusion, thereby facilitating reducing positioning difficulty and assembly difficulty between the butt-joint portion and the protrusion.

In some embodiments, the pressure relief groove adopts an annular structure extending along the circumferential direction of the side wall.

In the foregoing technical solution, the pressure relief groove is set to adopt a closed-loop annular structure, so that a region that is of the pressure relief component and that is located in the pressure relief groove is entirely dislodged during pressure relief of the cylindrical battery cell, thereby facilitating improving a pressure relief area of the cylindrical battery cell, to improve the pressure relief rate of the cylindrical battery cell.

In some embodiments, the pressure relief component and the first wall are integrally formed.

In the foregoing technical solution, the pressure relief component is set to adopt a structure integrally formed with the first wall, so that the pressure relief component is a part of the first wall, and therefore, the pressure relief groove is a structure directly provided on the first wall. In this way, a mutual assembly process between the pressure relief component and the first wall does not need to be provided, thereby facilitating optimizing a processing craft of the cylindrical battery cell, to improve the production efficiency of the cylindrical battery cell.

In some embodiments, the pressure relief component and the first wall are separately disposed, and the pressure relief component is connected to the first wall.

In the foregoing technical solution, the pressure relief component is set to adopt a structure separately disposed with the first wall, so that difficulty in directly processing the pressure relief groove on the first wall is reduced, and an impact on structural strength of the first wall is reduced.

According to a second aspect, an embodiment of the present application further provides a battery apparatus, including the foregoing cylindrical battery cell.

According to a third aspect, an embodiment of the present application further provides a power consuming apparatus, including the foregoing cylindrical battery cell. The cylindrical battery cell is configured to provide electrical energy.

### BRIEF DESCRIPTION OF THE DRAWINGS

To describe the technical solutions in embodiments of the present application more clearly, the following briefly introduces the accompanying drawings required for the embodiments. It should be understood that the following accompanying drawings show merely some embodiments of the present application and therefore should not be considered as a limitation to the scope. A person of ordinary skill in the art still derives other related drawings from these accompanying drawings without creative efforts.
FIG. 1 is a schematic diagram of a structure of a vehicle according to some embodiments of the present application;
FIG. 2 is an exploded view of a structure of a battery apparatus according to some embodiments of the present application;
FIG. 3 is a schematic diagram of a structure of a cylindrical battery cell according to some embodiments of the present application;
FIG. 4 is an exploded view of a structure of a cylindrical battery cell according to some embodiments of the present application;
FIG. 5 is a cross-sectional view of a cylindrical battery cell according to some embodiments of the present application;
FIG. 6 is a partial enlarged view of a position A of the cylindrical battery cell shown in FIG. 5;
FIG. 7 is a partial cross-sectional view of a shell according to some embodiments of the present application;
FIG. 8 is a schematic diagram of a structure of a first current collection member according to some embodiments of the present application;
FIG. 9 is a front view of a first current collection member in a thickness direction of a first wall according to some embodiments of the present application; and
FIG. 10 is a schematic diagram of structures of a first connection portion, a second connection portion, and a third connection portion on a first current collection member according to some embodiments of the present application.

Reference numerals: 1000-vehicle; 100-battery apparatus; 10-box; 11-first box body; 12-second box body; 20-cylindrical battery cell; 21-shell; 211-first wall; 2111-pressure relief groove; 212-side wall; 2121-protrusion; 2122-opening; 2123-groove; 2124-flange portion; 213-second wall; 214-accommodating cavity; 2141-first cavity; 2142-second cavity; 22-electrode assembly; 221-main body portion; 222-first tab; 223-second tab; 224-central through hole; 23-first current collection member; 231-body portion; 2311-main body region; 2311a-vent hole; 2312-support region; 232-butt-joint portion; 2321-connection region; 2322-elastic region; 2322a-bent segment; 234-vent gap; 24-electrode terminal; 25-second current collection member; 26-first connection portion; 27-second connection portion; 28-third connection portion; 29-sealing member; 200-controller; 300-motor; and X-thickness direction of the first wall.

### DETAILED DESCRIPTION

To make the objectives, technical solutions, and advantages of embodiments of the present application clearer, the following clearly describes the technical solutions in the embodiments of the present application with reference to the accompanying drawings in the embodiments of the present application. It is clear that the described embodiments are merely some rather than all of the embodiments of the present application. All other embodiments obtained by a person of ordinary skill in the art based on the embodiments of the present application without creative efforts shall fall within the protection scope of the present application.

Unless otherwise defined, all technical and scientific terms used in the present application have same meanings as those commonly understood by a person skilled in the art belonging to the present application. Terms used in the specification of the present application in the present application are only intended to describe specific embodiments, and are not intended to limit the present application. The terms "comprise", "include" and any variations thereof in the specification and claims of the present application and in the above descriptions of the accompanying drawings are intended to cover non-exclusive inclusion. The terms "first", "second" and the like in the specification and claims of the present application or the accompanying drawings are intended to distinguish different objects, and not to describe a specific order or primary-secondary relationship.

Reference to "an embodiment" in the present application means that a particular feature, structure, or characteristic described with reference to the embodiment is included in at least one embodiment of the present application. Appearances of this phrase in various locations in this specification do not necessarily all refer to a same embodiment, nor are separate or alternative embodiments mutually exclusive of another embodiment.

In the descriptions of the present application, it should be noted that, unless otherwise explicitly specified or defined, the terms such as "mounted", "connected", "linked", and "attached" should be understood in a broad sense, for example, are fixed connection, detachable connection, or integral connection; or are direct connection, indirect connection through an intermediary, or internal communication between two elements. A person of ordinary skill in the art understands specific meanings of the terms in the present application according to specific situations.

The term "and/or" in the present application describes only an association relationship for describing associated objects and represents that three relationships exist. For example, A and/or B represents the following three cases: A alone, both A and B, and B alone. In addition, the character "/" in the present application generally indicates an "or" relationship between contextually associated objects.

In the embodiments of the present application, same reference numerals represent same components, and for brevity, detailed descriptions of the same components are omitted in different embodiments. It should be understood that dimensions such as a thickness, a length, and a width of various components in the embodiments of the present application and an entire thickness, length, and width of an integrated apparatus are merely exemplary descriptions, and should not be construed as any limitation to the present application.

The term "a plurality of" in the present application refers to two or more (including two).

In the embodiments of the present application, the battery cell is a secondary battery. The secondary battery is a battery cell that activates an active material through charging after the battery cell is discharged, to continue to use the battery cell.

The battery cell is a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in the embodiments of the present application.

The battery cell generally includes an electrode assembly. The electrode assembly includes a positive electrode, a negative electrode, and an isolation member. During charge/discharge of the battery cell, active ions are intercalated and de-intercalated back and forth between the positive electrode and the negative electrode. The isolation member is arranged between the positive electrode and the negative electrode, and mainly functions to prevent a short circuit between the positive electrode and the negative electrode while allowing the active ions to pass through.

In some embodiments, the positive electrode is a positive electrode plate. The positive electrode plate includes a positive electrode current collector and a positive electrode active material disposed on at least one surface of the positive electrode current collector.

For example, the positive electrode current collector has two surfaces opposite to each other in a thickness direction of the positive electrode current collector, and the positive electrode active material is disposed on either or both of the two opposite surfaces of the positive electrode current collector.

For example, the positive electrode current collector is a metal foil or a composite current collector. For example, as the metal foil, aluminum with a silver-plated surface stainless steel with a silver-plated surface, stainless steel, copper, aluminum, nickel, a carbon electrode, carbon, nickel, titanium, or the like is used. The composite current collector includes a polymer material base layer and a metal layer. The composite current collector is formed by forming a metal material (aluminum, an aluminum alloy, nickel, a nickel alloy, titanium, a titanium alloy, silver, a silver alloy, or the like) on a polymer material substrate (a substrate such as polypropylene, polyethylene terephthalate, polybutylene terephthalate, polystyrene, or polyethylene).

For example, the positive electrode active material includes at least one of the following materials: a lithium-containing phosphate, a lithium transition metal oxide, and respective modified compounds thereof. However, the present application is not limited to such materials, and another conventional material that is used as the positive electrode active material for the battery may alternatively be used. These positive electrode active materials are used alone or in combination with two or more. An example of the lithium-containing phosphate includes, but is not limited to, at least one of lithium iron phosphate (for example, LiFePO₄ (which is also referred to as LFP for short)), a composite material of lithium iron phosphate and carbon, lithium manganese phosphate (for example, LiMnPO₄), a composite material of lithium manganese phosphate and carbon, lithium iron manganese phosphate, and a composite material of lithium manganese iron phosphate and carbon. Examples of the lithium transition metal oxide includes, but are not limited to, at least one of lithium cobalt oxide (such as LiCoO₂), lithium nickel oxide (such as LiNiO₂), lithium manganese oxide (such as LiMnO₂ or LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also referred to as NCM₃₃₃ for short), LiNi_{0.5}Co_{0.2}Mn_{0.3}O₂ (also referred to as NCM₅₂₃ for short), LiNi_{0.5}Co_{0.25}Mn_{0.25}O₂ (also referred to as NCM₂₁₁ for short), LiNi_{0.6}Co_{0.2}Mn_{0.2}O₂ (also referred to as NCM₆₂₂ for short), or LiNi_{0.8}Co_{0.1}Mn_{0.1}O₂ (also referred to as NCM₈₁₁ for short), lithium nickel cobalt aluminum oxide (such as LiNi_{0.85}Co_{0.15}Al_{0.05}O₂), modified compounds thereof, and the like.

In some embodiments, the positive electrode is made of a foamed metal. The foamed metal is foamed nickel, foamed copper, foamed aluminum, a foamed alloy, or the like. When the foamed metal is used as the positive electrode, a surface of the foamed metal is not provided with the positive electrode active material or certainly is provided with the positive electrode active material. For example, a lithium source material, metal potassium, or metal sodium is further filled and/or deposited in the foamed metal. The lithium source material is metal lithium and/or a lithium-rich material.

In some embodiments, the negative electrode is a negative electrode plate. The negative electrode plate includes a negative electrode current collector.

For example, the negative electrode current collector is a metal foil, a foamed metal, or a composite current collector. For example, as the metal foil, a silver-surface-processed aluminum or stainless steel, stainless steel, copper, aluminum, nickel, a carbon electrode, nickel, or titanium is used. The foamed metal is foamed nickel, foamed copper, foamed aluminum, a foamed alloy, or the like. The composite current collector includes a polymer material base layer and a metal layer. The composite current collector is formed by forming a metal material (copper, a copper alloy, nickel, a nickel alloy, titanium, a titanium alloy, silver, a silver alloy, or the like) on a polymer material substrate (a substrate such as polypropylene, polyethylene terephthalate, polybutylene terephthalate, polystyrene, or polyethylene).

For example, the negative electrode plate includes a negative electrode current collector and a negative electrode active material disposed on at least one surface of the negative electrode current collector.

For example, the negative electrode current collector has two surfaces opposite to each other in a thickness direction of the negative electrode current collector, and the negative electrode active material is disposed on either or both of the two opposite surfaces of the negative electrode current collector.

For example, the negative electrode active material is a negative electrode active material well known in the art for a battery cell. For example, the negative electrode active material includes at least one of the following materials: artificial graphite, natural graphite, soft carbon, hard carbon, a silicon-based material, a tin-based material, lithium titanate, and the like. The silicon-based material is selected from at least one of elemental silicon, a silicon oxide compound, a silicon-carbon composite, a silicon-nitrogen composite, and a silicon alloy. The tin-based material is selected from at least one of elemental tin, a tin oxide compound, and a tin alloy. However, the present application is not limited to such materials, and another conventional material that is used as the negative electrode active material for the battery may alternatively be used. These negative electrode active materials are used alone or in combination with two or more.

In some embodiments, the material of the positive electrode current collector is aluminum, and the material of the negative electrode current collector is copper.

In some embodiments, the electrode assembly further includes the isolation member, and the isolation member is disposed between the positive electrode and the negative electrode.

In some embodiments, the isolation member is a separator. There are a plurality of types of separators, and any well-known separator with a porous structure having good chemical stability and mechanical stability is selected.

For example, a material of the separator includes at least one of glass fiber, non-woven fabric, polyethylene, polypropylene, or polyvinylidene fluoride. The separator is a single-layer thin film or a multi-layer composite thin film. When the separator is a multi-layer composite film, materials of the layers are the same or different. The isolation member is an independent component located between the positive electrode and the negative electrode, or is attached to surfaces of the positive electrode and the negative electrode.

In some embodiments, the isolation member is a solid electrolyte. The solid electrolyte is disposed between the positive electrode and the negative electrode, and also serves to transmit ions and isolate the positive electrode from the negative electrode.

In some embodiments, the battery cell further includes an electrolyte. The electrolyte transmits ions between the positive electrode and the negative electrode. The electrolyte may be liquid, gelled, or all solid. The liquid electrolyte includes electrolyte salt and a solvent.

In some embodiments, the electrolyte salt includes at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro(bisoxalato)phosphate, and lithium tetrafluoro(oxalato)phosphate.

In some embodiments, the solvent includes at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, or diethyl sulfone. Optionally, the solvent is an ether solvent. The ether solvent includes one or more of dimethoxyethane, ethylene glycol diethyl ether, diglyme, triethylene glycol dimethyl ether, tetraethylene glycol dimethyl ether, 1,3-dioxolane, tetrahydrofuran, methyltetrahydrofuran, diphenyl ether, and crown ether.

The gelled electrolyte includes a skeleton network using a polymer as an electrolyte, with an ionic liquid-lithium salt.

The solid electrolyte includes a polymeric solid electrolyte, an inorganic solid electrolyte, and a composite solid electrolyte.

For example, the polymeric solid electrolyte is polyether (polyoxyethylene), polysiloxane, polycarbonate, polyacrylonitrile, polyvinylidene fluoride, polymethylmethacrylate, single-ionic polymer, a polyionic liquid-lithium salt, or cellulose.

For example, the inorganic solid electrolyte includes one or more of an oxide solid electrolyte (crystalline perovskite, a sodium superionic conductor, garnet, an amorphous LiPON film), a sulfide solid electrolyte (a crystalline lithium superionic conductor (lithium germanium phosphorus sulfur or argyrodite) or an amorphous sulfide), a halide solid electrolyte, a nitride solid electrolyte, and a hydride solid electrolyte.

For example, the composite solid electrolyte is formed by adding an inorganic solid electrolyte filler to a polymer solid electrolyte.

In some embodiments, the electrode assembly adopts a wound structure. The positive electrode plate and the negative electrode plate are wound into the wound structure.

In some embodiments, a shape of the electrode assembly is a cylindrical shape, a flat shape, a polygonal prism shape, or the like.

In some embodiments, the electrode assembly is provided with a positive electrode tab and a negative electrode tab.

In some embodiments, the battery cell includes a shell. The shell is configured to encapsulate the electrode assembly, the electrolyte, and other components. The shell is a steel shell, an aluminum shell, a plastic shell (such as polypropylene), a composite metal shell (such as a copper-aluminum composite shell), an aluminum-plastic film, or the like.

For example, the battery cell is cylindrical, that is, a cylindrical battery cell.

A battery apparatus (Battery Apparatus) mentioned in the embodiments of the present application includes one or more battery cell assemblies, configured to supply voltage and capacity. The battery cell assembly (Battery Cell Assembly) includes a plurality of battery cells, and the plurality of battery cells are connected in series, in parallel, or in series-parallel through a bus-bar component.

In some embodiments, the battery cell assembly (Battery Cell Assembly) is usually formed by arranging a plurality of battery cells. For example, the battery cell assembly is a battery module (Battery Module). The battery module is an independent module formed by arranging and fixing the plurality of battery cells. For example, the battery module is formed by tying the plurality of battery cells through a strap.

In some embodiments, the battery apparatus is a battery pack (battery Pack). The battery pack includes a box and one or more battery cell assemblies. The battery cell assembly is accommodated in the box.

For example, the battery cell assembly is a battery module. The battery cell assembly is accommodated in the box by fixing the battery module in the box.

For example, the battery cell assembly may alternatively be accommodated in the box by directly fixing the plurality of battery cells in the box.

For example, the box includes a first box body and a second box body. The first box body and the second box body are snapped to form a sealed space inside the box to accommodate the battery cell assembly. The "sealed" means "covered" or "closed", or is hermetic, or is non-hermetic. The first box body is a top cover or a bottom plate.

For example, the box includes a top cover, a frame, and a bottom plate. The top cover and the bottom plate are connected to the frame to form the sealed space inside the box to accommodate the battery cell assembly.

For example, the box serves as a part of a chassis structure of a vehicle. For example, the top cover of the box serves as at least a part of a floor of a vehicle, or the frame of the box serves as at least a part of a cross beam and a longitudinal beam of the vehicle.

In some embodiments, the battery apparatus is an energy storage apparatus. The energy storage apparatus includes a box, and a door is provided on at least one side of the box. The energy storage device includes an energy storage container, an energy storage electric cabinet, and the like.

The battery apparatus has outstanding advantages such as a high energy density, small environmental pollution, a large power density, a long service life, a wide adaptation range, and a small self-discharge coefficient, and is an important component of the development of new energy sources nowadays. Design factors in many aspects need to be all considered for the development of the battery technology, such as an energy density, a cycle life, a discharge capacity, a charge-discharge rate, and other performance parameters. In addition, the safety of the battery apparatus also needs to be considered.

For a common cylindrical battery cell, the cylindrical battery cell includes a shell and an electrode assembly accommodated in the shell, and one tab of the electrode assembly is electrically connected to the shell, to serve as an output electrode of the cylindrical battery cell via the shell. Correspondingly, the shell of the cylindrical battery cell is usually provided with a pressure relief structure, so that the pressure relief structure splits when thermal runaway occurs on the cylindrical battery cell, to release pressure inside the cylindrical battery cell, thereby facilitating ensuring use safety of the cylindrical battery cell. In a related technology, to reduce difficulty in electrical connection between the electrode assembly and the shell, a current collection member is usually disposed in the shell. The tab of the electrode assembly is connected to the shell by using the current collection member, to implement the electrical connection between the electrode assembly and the shell. However, when the cylindrical battery cell of this structure undergoes thermal runaway, the current collection member inside the shell causes resistance and obstruction to an internal vent path or the pressure relief structure of the cylindrical battery cell, and it is not beneficial for an active material of the electrode assembly to be ejected out of the shell through the pressure relief structure. Consequently, a pressure relief rate of the cylindrical battery cell when the thermal runaway occurs is low, and the cylindrical battery cell has a risk such as fire and explosion or a connection failure caused due to untimely pressure relief. As a result, use reliability of the cylindrical battery cell is low.

Based on the foregoing consideration, to resolve a problem of low use reliability of the cylindrical battery cell, the embodiments of the present application provide a cylindrical battery cell. The cylindrical battery cell includes a shell, an electrode assembly, and a first current collection member. The shell includes a first wall and a side wall. A thickness direction of the first wall is an axial direction of the cylindrical battery cell. A pressure relief groove is provided on the first wall. The side wall is provided surrounding the first wall. A protrusion protrudes from an inner circumferential surface of the side wall. Both the protrusion and the pressure relief groove extend along a circumferential direction of the side wall. The electrode assembly is accommodated in the shell and located on a side of the protrusion facing away from the first wall. The first current collection member includes a body portion and a butt-joint portion. The body portion is located on a side of the electrode assembly facing the first wall and is connected to the electrode assembly in the thickness direction of the first wall. The body portion includes a main body region and a plurality of support regions connected to an outer circumferential surface of the main body region. The plurality of support regions are arranged spaced away along a circumferential direction of the main body region. The support region is at least partially located between the electrode assembly and the protrusion in the thickness direction of the first wall. The butt-joint portion is connected to the main body region and connected to the protrusion, to electrically connect the electrode assembly to the side wall. An inner diameter of the protrusion is D₁, an outer diameter of the main body region is D₂, and an inner diameter of the pressure relief groove is D₃ along a radial direction of the cylindrical battery cell. D₁ ≥ D₂, and D₃ ≥ 0.75 D₂.

In the cylindrical battery cell of this structure, the first current collection member is provided with the body portion and the butt-joint portion. The body portion is located on the side of the electrode assembly facing the first wall and is connected to the electrode assembly in the thickness direction of the first wall, and the butt-joint portion is connected to the body portion and the protrusion, so that the electrode assembly is electrically connected to the side wall via the first current collection member. The body portion includes the main body region and the plurality of support regions connected to the outer circumferential surface of the main body region, the plurality of support regions are arranged spaced away along the circumferential direction of the main body region, and the support region is at least partially located between the electrode assembly and the protrusion in the thickness direction of the first wall, so that the body portion of the first current collection member supports the electrode assembly between the protrusion and the electrode assembly while thermal runaway gas inside the cylindrical battery cell can be vented through gaps among the plurality of support regions, thereby facilitating internal vent smoothness of the cylindrical battery cell, to improve a pressure relief rate of the cylindrical battery cell. The inner diameter of the protrusion is set to be greater than or equal to the outer diameter of the main body region of the body portion, and the inner diameter of the pressure relief groove is set to be greater than or equal to 0.75 times of the outer diameter of the main body region of the body portion, so that a projection of the main body region of the body portion in the thickness direction of the first wall is located on a structure on an inner side of the protrusion, and a projection of the pressure relief groove in the thickness direction of the first wall is disposed close to an outer edge of the main body region or located on a structure on an outer side of the main body region. In this way, obstruction caused by the protrusion and the main body region to a vent path inside the cylindrical battery cell can be reduced, so that the thermal runaway gas inside the cylindrical battery cell can be directly vented, after smoothly passing through the gaps among the plurality of support regions and entering a side of the body portion facing the first wall, in a region in which the pressure relief groove is provided on a pressure relief component on the first wall, and further, the internal vent smoothness and the pressure relief rate of the cylindrical battery cell can be effectively improved, thereby facilitating reducing a risk such as burst or explosion caused to the cylindrical battery cell due to untimely pressure relief, to improve use stability and reliability of the cylindrical battery cell.

The cylindrical battery cell disclosed in the embodiments of the present application is used in, but is not limited to, a power consuming apparatus such as a vehicle, a ship, or an aircraft. The cylindrical battery cell, the battery apparatus, and the like disclosed in the present application is used to from a power supply system of the power consuming apparatus. In this way, it is beneficial to relieving a problem of fire and explosion caused to the cylindrical battery cell due to untimely pressure relief, to improve the use reliability of the cylindrical battery cell.

The embodiments of the present application provide a power consuming apparatus using the cylindrical battery cell or the battery apparatus as a power supply. The power consuming apparatus is, but is not limited to, a mobile phone, a tablet computer, a laptop computer, an electric toy, an electric tool, an electric scooter, an electric vehicle, a ship, spacecraft, or the like. The electric toy includes a fixed or mobile electric toy, for example, a game console, an electric vehicle toy, an electric ship toy, and an electric airplane toy. The spacecraft includes an airplane, a rocket, a space shuttle, a spaceship, and the like.

For ease of description, the following embodiments are described by using an example in which a power consuming apparatus of an embodiment of the present application is a vehicle.

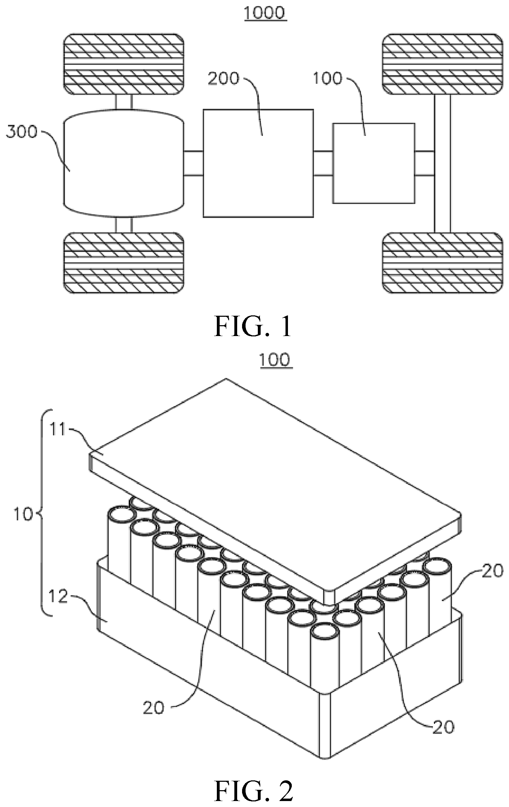

Refer to FIG. 1. FIG. 1 is a schematic diagram of a structure of a vehicle 1000 according to some embodiments of the present application. The vehicle 1000 is a fuel vehicle, a gas vehicle or a new energy vehicle, and the new energy vehicle is a pure electric vehicle, a hybrid vehicle, an extended-range electric vehicle, or the like. A battery apparatus 100 is arranged inside the vehicle 1000, and the battery apparatus 100 is arranged at a bottom of the vehicle 1000, a head of the vehicle 1000, or a tail of the vehicle 1000. The battery apparatus 100 is configured to supply power to the vehicle 1000. For example, the battery apparatus 100 is used as an operating power supply or a use power supply of the vehicle 1000. The vehicle 1000 further includes a controller 200 and a motor 300. The controller 200 is configured to control the battery apparatus 100 to supply power to the motor 300, for example, to satisfy operating electricity requirements during starting, navigation, and traveling of the vehicle 1000.

In some embodiments of the present application, the battery apparatus 100 serves not only as an operating power supply or a use power supply of the vehicle 1000, but also as a driving power supply of the vehicle 1000, to alternatively or partially replace fuel or natural gas to provide driving power for the vehicle 1000.

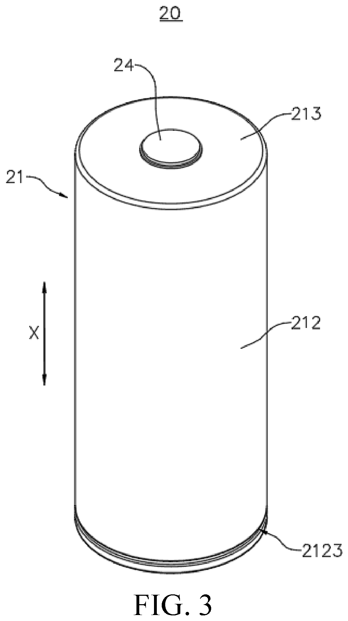

Refer to FIG. 2 and FIG. 3. FIG. 2 is an exploded view of a structure of a battery apparatus 100 according to some embodiments of the present application. FIG. 3 is a schematic diagram of a structure of a cylindrical battery cell 20 according to some embodiments of the present application. The battery apparatus 100 includes a box 10 and a cylindrical battery cell 20. The cylindrical battery cell 20 is configured to be accommodated in the box 10.

The box 10 is configured to provide an assembly space for the cylindrical battery cell 20. The box 10 adopts a variety of structures. In some embodiments, the box 10 includes a first box body 11 and a second box body 12. The first box body 11 and the second box body 12 cover each other. The first box body 11 and the second box body 12 jointly define the assembly space for accommodating the cylindrical battery cell 20. The second box body 12 is a hollow structure with one end being open, the first box body 11 is a plate-shaped structure, and the first box body 11 covers an open side of the second box body 12, so that the first box body 11 and the second box body 12 jointly define the assembly space. Alternatively, the first box body 11 and the second box body 12 each are a hollow structure with one side being open, and an open side of the first box body 11 covers an open side of the second box body 12.

Certainly, the box 10 formed by the first box body 11 and the second box body 12 is in a variety of shapes, such as a cylinder, a cuboid, or a cube. For example, in FIG. 2, the shape of the box 10 is a cuboid.

In the battery apparatus 100, there is one or more cylindrical battery cells 20 disposed in the box 10. When there are a plurality of cylindrical battery cells 20 disposed in the box 10, the plurality of cylindrical battery cells 20 are connected in series, in parallel, or in series-parallel. The series-parallel connection means that both series connection and parallel connection exist among the plurality of cylindrical battery cells 20. The plurality of cylindrical battery cells 20 are directly connected in series, in parallel, or in series-parallel together, and then a whole formed by the plurality of cylindrical battery cells 20 is accommodated in the box 10. Certainly, the battery apparatus 100 may alternatively be in a form of a battery module formed by the plurality of cylindrical battery cells 20 that are first connected in series, in parallel, or in series-parallel. A plurality of battery modules are then connected in series, in parallel, or in series-parallel to form a whole and be accommodated in the box 10.

In some embodiments, the battery apparatus 100 may further include other structures. For example, the battery apparatus 100 may further include a bus component. The bus component is configured to connect the plurality of cylindrical battery cells 20, to implement electrical connection among the plurality of cylindrical battery cells 20.

Each cylindrical battery cell 20 is a secondary battery or a primary battery; or is a lithium-sulfur battery, a sodium-ion battery, or a magnesium-ion battery, but is not limited thereto.

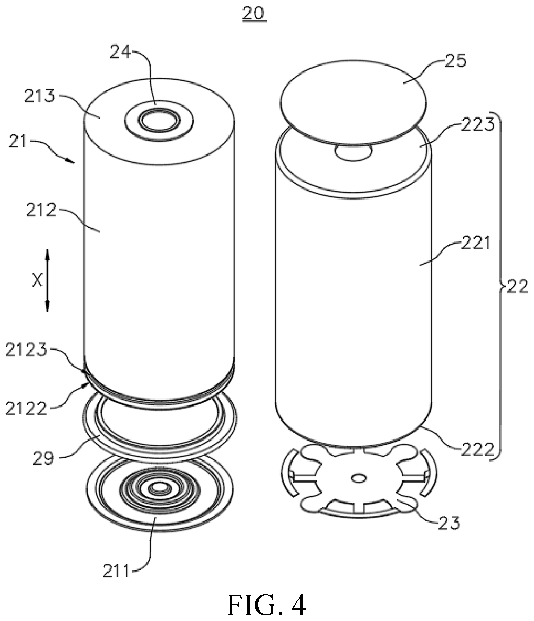

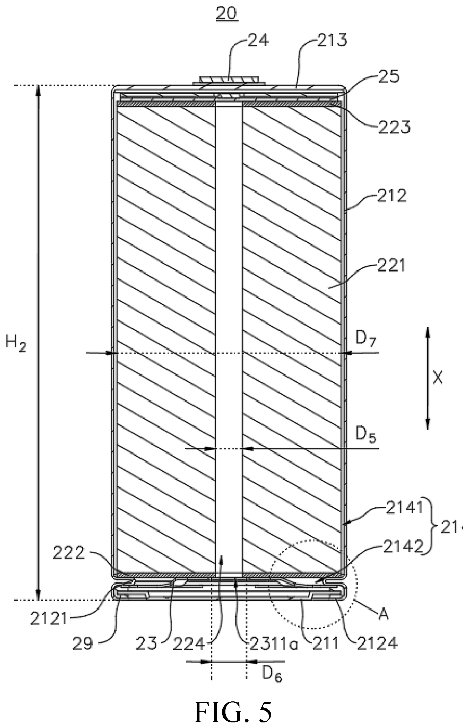

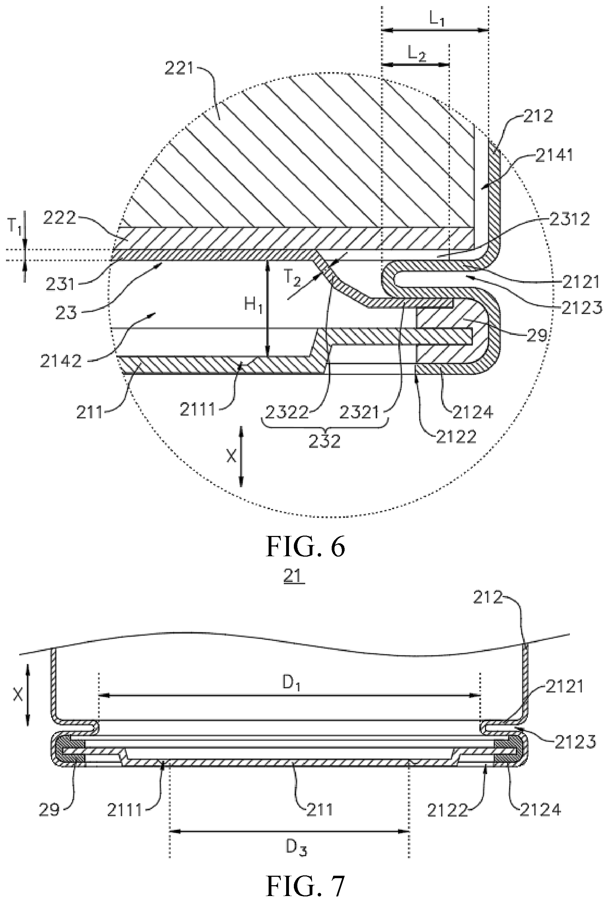

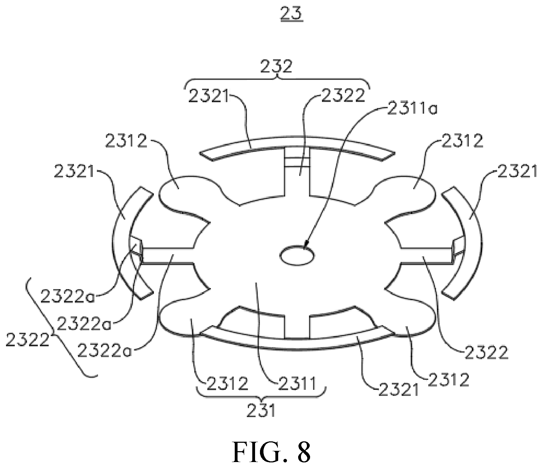

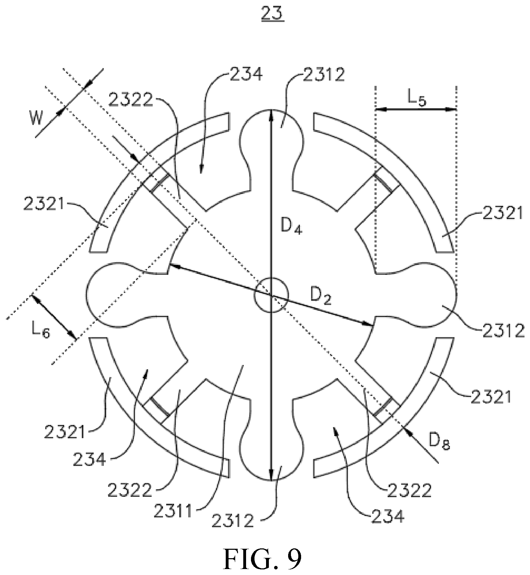

According to some embodiments of the present application, refer to FIG. 3, and further refer to FIG. 4, FIG. 5, FIG. 6, FIG. 7, FIG. 8, and FIG. 9. FIG. 4 is an exploded view of a structure of a cylindrical battery cell 20 according to some embodiments of the present application. FIG. 5 is a cross-sectional view of a cylindrical battery cell 20 according to some embodiments of the present application. FIG. 6 is a partial enlarged view of a position A of the cylindrical battery cell 20 shown in FIG. 5. FIG. 7 is a partial cross-sectional view of a shell 21 according to some embodiments of the present application. FIG. 8 is a schematic diagram of a structure of a first current collection member 23 according to some embodiments of the present application. FIG. 9 is a front view of a first current collection member 23 in a thickness direction X of a first wall according to some embodiments of the present application. The present application provides a cylindrical battery cell 20. The cylindrical battery cell 20 includes a shell 21, an electrode assembly 22, and a first current collection member 23. The shell 21 includes a first wall 211 and a side wall 212. A thickness direction X of the first wall is an axial direction of the cylindrical battery cell 20. A pressure relief component is disposed on the first wall 211. A pressure relief groove 2111 is provided on the pressure relief component. The side wall 212 is provided surrounding the first wall 211. A protrusion 2121 protrudes from an inner circumferential surface of the side wall 212. Both the protrusion 2121 and the pressure relief groove 2111 extend along a circumferential direction of the side wall 212. The electrode assembly 22 is accommodated in the shell 21 and located on a side of the protrusion 2121 facing away from the first wall 211. The first current collection member 23 includes a body portion 231 and a butt-joint portion 232. The body portion 231 is located on a side of the electrode assembly 22 facing the first wall 211 and is connected to the electrode assembly 22. The body portion 231 includes a main body region 2311 and a plurality of support regions 2312 connected to an outer circumferential surface of the main body region 2311. The plurality of support regions 2312 are arranged spaced away along a circumferential direction of the main body region 2311. The support region 2312 is at least partially located between the electrode assembly 22 and the protrusion 2121 in the thickness direction X of the first wall. The butt-joint portion 232 is connected to the main body region 2311 and connected to the protrusion 2121, to electrically connect the electrode assembly 22 to the side wall 212. An inner diameter of the protrusion 2121 is D₁, an outer diameter of the main body region 2311 is D₂, and an inner diameter of the pressure relief groove 2111 is D₃ along a radial direction of the cylindrical battery cell 20. D₁ ≥ D₂, and D₃ ≥ 0.75 D₂.

The shell 21 is further configured to accommodate an electrolyte, such as an electrolyte solution. The shell 21 is in various structural forms. The shell 21 is made of a variety of materials, such as copper, iron, aluminum, steel, or an aluminum alloy.

In this embodiment of the present application, the shell 21 includes the first wall 211, a second wall 213, and the side wall 212. The side wall 212 adopts a structure surrounding the first wall 211 and the second wall 213. The first wall 211 and the second wall 213 are disposed opposite to each other along the thickness direction X of the first wall, that is, the first wall 211 and the second wall 213 are disposed opposite to each other along the axial direction of the cylindrical battery cell 20. Two ends of the side wall 212 in the thickness direction X of the first wall are respectively connected to the first wall 211 and the second wall 213, so that the first wall 211 and the second wall 213 are respectively end walls of two ends of the shell 21 in the thickness direction X of the first wall.

Optionally, the shell 21 adopts a variety of structures. For example, the shell 21 is formed by integrally forming the first wall 211 and the side wall 212. In addition, the side wall 212 encloses at an end away from the first wall 211 in the thickness direction X of the first wall to define an opening 2122, and the second wall 213 covers the opening 2122 of the side wall 212 to form sealing connection, so as to form a sealed space configured for accommodating the electrode assembly 22 and the electrolyte. Alternatively, the shell 21 is formed by integrally forming the second wall 213 and the side wall 212. In addition, the side wall 212 encloses at an end away from the second wall 213 in the thickness direction X of the first wall to define an opening 2122, and the first wall 211 covers the opening 2122 of the side wall 212 to form sealing connection, so as to form a sealed space configured for accommodating the electrode assembly 22 and the electrolyte. Alternatively, the shell 21 is provided with an opening 2122 at both ends of the side wall 212 in the thickness direction X of the first wall, so that the side wall 212 adopts a hollow structure provided with the opening 2122 at the both ends in the thickness direction X of the first wall. The first wall 211 and the second wall 213 respectively covers the openings 2122 at the both ends of the side wall 212 in the thickness direction X of the first wall.

For example, in FIG. 4, FIG. 5, and FIG. 6, the second wall 213 and the side wall 212 adopt an integrally formed structure. The side wall 212 encloses at the end away from the second wall 213 in the thickness direction X of the first wall to define the opening 2122, and the first wall 211 covers the opening 2122 of the side wall 212 to form the sealing connection, so as to form the sealed space configured for accommodating the electrode assembly 22 and the electrolyte. The electrode assembly 22 is located on a side of the protrusion 2121 facing away from the first wall 211 in the thickness direction X of the first wall, so that the electrode assembly 22 is located between the protrusion 2121 and the second wall 213 in the thickness direction X of the first wall.

The cylindrical battery cell 20 is cylindrical, and a central axis of the cylindrical battery cell 20 extends along the thickness direction X of the first wall. In other words, the cylindrical battery cell 20 adopts a cylindrical structure, and a height direction of the cylindrical battery cell 20 is the thickness direction X of the first wall, so that a projection of the cylindrical battery cell 20 in the thickness direction X of the first wall is circular. Correspondingly, the side wall 212 of the shell 21 also adopts a cylindrical structure, and a central axis of the side wall 212 of the shell 21 extends along the thickness direction X of the first wall, so that projections of the first wall 211 and the second wall 213 in the thickness direction X of the first wall are both circular, that is, the first wall 211 and the second wall 213 both adopt a disc-shaped structure.

It should be noted that the thickness direction X of the first wall and the radial direction of the cylindrical battery cell 20 are perpendicular to each other. The radial direction of the cylindrical battery cell 20 is a direction pointing from the central axis of the cylindrical battery cell 20 to an outer circumferential surface of the cylindrical battery cell 20 or pointing from the outer circumferential surface of the cylindrical battery cell 20 to the central axis of the cylindrical battery cell 20 in a projection plane that is of the cylindrical battery cell 20 and that is perpendicular to the thickness direction X of the first wall.

The protrusion 2121 protrudes from the inner circumferential surface of the side wall 212, that is, the protrusion 2121 adopts a convex-hull structure protruding on a side of the side wall 212 facing the electrode assembly 22. The protrusion 2121 extends along the circumferential direction of the side wall 212, in other words, the protrusion 2121 adopts an arc or annular structure extending along the circumferential direction of the side wall 212. For example, the protrusion 2121 adopts an annular structure extending along the circumferential direction of the side wall 212, that is, the protrusion 2121 adopts a circular structure coaxial with the cylindrical battery cell 20.

The pressure relief component is disposed on the first wall 211, and the pressure relief component is provided with the pressure relief groove 2111. The pressure relief component is configured to split along at least a part of the pressure relief groove 2111 during pressure relief of the cylindrical battery cell 20, to release pressure inside the cylindrical battery cell 20. In other words, a weak structure for pressure relief is formed in a region in which the pressure relief groove 2111 is provided on the pressure relief component on the first wall 211, so that at least a part of the region in which the pressure relief groove 2111 is provided on the pressure relief component on the first wall 211 splits when thermal runaway occurs in the cylindrical battery cell 20 and the internal pressure is released. In this way, at least a part of a region of the pressure relief component located on an inner circumferential side of the pressure relief groove 2111 is opened, and the pressure inside the cylindrical battery cell 20 is released.

It should be noted that the pressure relief component and the first wall 211 adopt an integrally formed structure, or adopt a separate structure. For example, in FIG. 6, the pressure relief component and the first wall 211 adopt an integrally formed structure. Correspondingly, the pressure relief component is a part of the first wall 211, so that the pressure relief groove 2111 adopts a structure directly provided on the first wall 211. In other words, the first wall 211 is configured to split along at least the part of the pressure relief groove 2111 during pressure relief of the cylindrical battery cell 20, to release the pressure inside the cylindrical battery cell 20. Certainly, in another embodiment, the pressure relief component and the first wall 211 alternatively adopt a separate structure. Correspondingly, the pressure relief component is connected to the first wall 211 by using a structure such as welding connection.

The pressure relief groove 2111 extends along the circumferential direction of the side wall 212. The pressure relief groove 2111 adopts an arc or annular structure extending along the circumferential direction of the side wall 212. For example, the pressure relief groove 2111 adopts an annular structure extending along the circumferential direction of the side wall 212, that is, the pressure relief groove 2111 adopts an annular groove structure coaxial with the cylindrical battery cell 20.

It should be noted that the electrode assembly 22 is a component that performs electrochemical reaction in the cylindrical battery cell 20. The electrode assembly 22 includes a main body portion 221, a first tab 222, and a second tab 223. The main body portion 221 is a main component of the electrode assembly 22 that performs electrochemical reaction in the cylindrical battery cell 20. The first tab 222 and the second tab 223 functions to output or input electrical energy of the electrode assembly 22. The main body portion 221 of the electrode assembly 22 adopts a variety of structures. For example, in FIG. 4, the electrode assembly 22 includes a positive electrode plate, an isolation member, and a negative electrode plate, and the main body portion 221 of the electrode assembly 22 adopts a wound structure formed by winding a part of the positive electrode plate, the isolation member, and a part of the negative electrode plate. The main body portion 221 of the electrode assembly 22 adopts a cylindrical structure, and a central axis of the main body portion 221 of the electrode assembly 22 extends along the thickness direction X of the first wall.

For example, the isolation member is a separator. A main material of the separator is selected from at least one of glass fiber, non-woven fabric, polyethylene, polypropylene, or polyvinylidene fluoride.

Optionally, one or more electrode assemblies 22 may be accommodated in the shell 21. For example, in FIG. 4, only one electrode assembly 22 is disposed in the shell 21 of the cylindrical battery cell 20. Certainly, a structure of the cylindrical battery cell 20 is not limited thereto. In another embodiment, two, three, four, five, six, seven, or eight electrode assemblies 22 are accommodated in the shell 21.

A polarity of the first tab 222 is opposite to that of the second tab 223. In FIG. 4 and FIG. 5, the first tab 222 and the second tab 223 are respectively connected to two ends of the main body portion 221 in the thickness direction X of the first wall. The first tab 222 is located at an end of the main body portion 221 that faces the first wall 211 and is electrically connected to the first current collection member 23. The second tab 223 is located at an end of the main body portion 221 that faces the second wall 213.

It should be noted that, if the first tab 222 is a positive electrode tab of the electrode assembly 22, the first tab 222 is a component formed by laminating and connecting regions in which no positive electrode active substance layer is coated on the positive electrode plate. Correspondingly, the second tab 223 is a negative electrode tab of the electrode assembly 22, and the second tab 223 is a component formed by laminating and connecting regions in which no negative electrode active substance layer is coated on the negative electrode plate. On the contrary, if the first tab 222 is a negative electrode tab of the electrode assembly 22, the first tab 222 is a component formed by laminating and connecting regions in which no negative electrode active substance layer is coated on the negative electrode plate. Correspondingly, the second tab 223 is a positive electrode tab of the electrode assembly 22, and the second tab 223 is a component formed by laminating and connecting regions in which no positive electrode active substance layer is coated on the positive electrode plate.

In this embodiment of the present application, the first current collection member 23 electrically connects the electrode assembly 22 to the protrusion 2121. The first current collection member 23 is made of a variety of materials. For example, the first current collection member 23 is made of copper, iron, aluminum, steel, or an aluminum alloy.

The first current collection member 23 includes the body portion 231 and the butt-joint portion 232. The body portion 231 is a part of the first current collection member 23 that is located on the side of the electrode assembly 22 facing the first wall 211 and is connected to the first tab 222 in the thickness direction X of the first wall. The butt-joint portion 232 is a part of the first current collection member 23 that connects the body portion 231 to the protrusion 2121, to implement electrical connection between the electrode assembly 22 and the side wall 212.

Optionally, there are a variety of connection structures between the body portion 231 and the first tab 222, for example, adhesion or welding connection. Similarly, there are also a variety of connection structures between the butt-joint portion 232 and the protrusion 2121, for example, adhesion or welding connection. For example, the body portion 231 is welded to the first tab 222, and the connection portion is welded to the protrusion 2121.

For example, the body portion 231 of the first current collection member 23 is located between the electrode assembly 22 and the protrusion 2121 in the thickness direction X of the first wall, to support the electrode assembly 22.

The body portion 231 includes the main body region 2311 and the plurality of support regions 2312 connected to the outer circumferential surface of the main body region 2311, and the plurality of support regions 2312 are arranged spaced away along the circumferential direction of the main body region 2311. In other words, the body portion 231 includes the main body region 2311 and the plurality of support regions 2312 arranged surrounding the main body region 2311 along the circumferential direction of the main body region 2311, and each of the support regions 2312 is connected to an outer edge of the main body region 2311 along the radial direction of the cylindrical battery cell 20. It should be noted that the circumferential direction of the main body region 2311 is also a circumferential direction of the cylindrical battery cell 20, and is also the circumferential direction of the side wall 212.

For example, in FIG. 8 and FIG. 9, the body portion 231 includes four support regions 2312, and the four support regions 2312 are uniformly arranged spaced away on an outer circumferential side of the main body region 2311 along the circumferential direction of the main body region 2311. Certainly, in another embodiment, a quantity of support regions 2312 connected to the outer circumferential surface of the main body region 2311 may alternatively be two, three, five, six, or the like.

The support region 2312 is at least partially located between the electrode assembly 22 and the protrusion 2121 in the thickness direction X of the first wall. In other words, the support region 2312 at least partially extends between the electrode assembly 22 and the protrusion 2121 along the radial direction of the cylindrical battery cell 20, so that the support region 2312 is at least partially located between the electrode assembly 22 and the protrusion 2121 in the thickness direction X of the first wall.

For example, in FIG. 6, the support region 2312 is only partially located between the electrode assembly 22 and the protrusion 2121 in the thickness direction X of the first wall. Certainly, in another embodiment, the support region 2312 may alternatively be entirely located between the electrode assembly 22 and the protrusion 2121 in the thickness direction X of the first wall.

The butt-joint portion 232 is connected to the main body region 2311, that is, the butt-joint portion 232 is a structure connected to the main body region 2311 of the body portion 231. For example, in FIG. 8 and FIG. 9, the butt-joint portion 232 is connected to the outer circumferential surface of the main body region 2311. The butt-joint portion 232 includes a connection region 2321 and an elastic region 2322. The connection region 2321 is provided, in the thickness direction X of the first wall, on a side of the main body region 2311 facing the first wall 211. The connection region 2321 is connected to the protrusion 2121. The elastic region 2322 is connected between the connection region 2321 and the main body region 2311 of the body portion 231. Correspondingly, the elastic region 2322 is connected to the outer circumferential surface of the main body region 2311. For example, the connection region 2321 is welded to the protrusion 2121.

For example, the first current collection member 23 is provided with a plurality of butt-joint portions 232, and the plurality of butt-joint portions 232 are all connected to the protrusion 2121. In addition, the plurality of butt-joint portions 232 are arranged spaced away along the circumferential direction of the main body region 2311 and are all connected to the outer circumferential surface of the main body region 2311. The plurality of butt-joint portions 232 and the plurality of support regions 2312 are alternately arranged in the circumferential direction of the main body region 2311, so that one butt-joint portion 232 is arranged between every two adjacent support regions 2312 in the circumferential direction of the main body region 2311.

In this embodiment of the present application, the inner diameter of the protrusion 2121 is D₁ along the radial direction of the cylindrical battery cell 20. To be specific, D₁ is a diameter of a circle on which an inner contour of an orthographic projection of the protrusion 2121 in a projection plane perpendicular to the thickness direction X of the first wall is located. The outer diameter of the main body region 2311 is D₂ along the radial direction of the cylindrical battery cell 20. To be specific, D₂ is a diameter of a circle on which an outer contour of an orthographic projection of the main body region 2311 in the projection plane perpendicular to the thickness direction X of the first wall is located. The inner diameter of the pressure relief groove 2111 is D₃ along the radial direction of the cylindrical battery cell 20. To be specific, D₃ is a diameter of a circle on which an inner contour of an orthographic projection of the pressure relief groove 2111 in the projection plane perpendicular to the thickness direction X of the first wall is located.

D₁ ≥ D₂. To be specific, in the projection plane perpendicular to the thickness direction X of the first wall, the orthographic projection of the main body region 2311 is located on an inner circumferential side of the orthographic projection of the protrusion 2121.

D₃ ≥ 0.75 D₂. To be specific, in the projection plane perpendicular to the thickness direction X of the first wall, a structure in which an edge part of the orthographic projection of the main body region 2311 overlaps the orthographic projection of the pressure relief groove 2111 or a structure in which the orthographic projection of the main body region 2311 is located on an inner circumferential side of the orthographic projection of the pressure relief groove 2111 is adopted. Preferably, D₃ ≥ D₂. To be specific, in the projection plane perpendicular to the thickness direction X of the first wall, the orthographic projection of the main body region 2311 is located on the inner circumferential side of the orthographic projection of the pressure relief groove 2111. Optionally, in some embodiments, D₃ ≥ 0.85 D₂.

In some embodiments, referring to FIG. 3, FIG. 4, and FIG. 5, the cylindrical battery cell 20 may further include an electrode terminal 24. The electrode terminal 24 is mounted on the second wall 213 of the shell 21 in an insulating manner, and the electrode terminal 24 is electrically connected to the second tab 223, so that the electrode terminal 24 serves as another output electrode of the cylindrical battery cell 20. To be specific, the electrode terminal 24 functions to input or output the electrical energy of the cylindrical battery cell 20, so that the electrical energy of the cylindrical battery cell 20 is inputted or outputted through cooperation between the electrode terminal 24 and the shell 21.

The electrode terminal 24 is mounted on the second wall 213 of the shell 21 in the insulating manner. In other words, the electrode terminal 24 is mounted on an end of the shell 21 away from the first wall 211 in the thickness direction X of the first wall, and an insulating member is disposed between the electrode terminal 24 and the second wall 213, so that no electrical connection is formed between the electrode terminal 24 and the shell 21.

Referring to FIG. 5, the electrode terminal 24 adopts a structure riveted to the second wall 213 of the shell 21. In other words, the second wall 213 of the shell 21 is provided with a mounting hole. The mounting hole runs through two sides of the second wall 213 along the thickness direction X of the first wall. A part of the electrode terminal 24 penetrates through the mounting hole. In addition, the electrode terminal 24 has a first clamping portion located on a side of the second wall 213 facing the electrode assembly 22 and a second clamping portion located on a side of the second wall 213 facing away from the electrode assembly 22. At least a part of the second wall 213 is located between the first clamping portion and the second clamping portion in the thickness direction X of the first wall, so that the first clamping portion and the second clamping portion cooperate to clamp the second wall 213, so as to rivet the electrode terminal 24 to the second wall 213 of the shell 21. Certainly, in another embodiment, the electrode terminal 24 may alternatively adopt a structure snapped or adhered to the second wall 213.

For example, the electrode terminal 24 is made of a variety of materials. For example, the electrode terminal 24 is made of copper, iron, aluminum, steel, or an aluminum alloy.

In some embodiments, referring to FIG. 4 and FIG. 5, the cylindrical battery cell 20 further includes a second current collection member 25. The second current collection member 25 is located between the second tab 223 of the electrode assembly 22 and the second wall 213 of the shell 21 in the thickness direction X of the first wall. The second current collection member 25 connects the second tab 223 to the electrode terminal 24, to electrically connect the electrode assembly 22 to the electrode terminal 24.

Optionally, there are a variety of connection structures between the second current collection member 25 and the second tab 223 and a variety of connection structures between the second current collection member 25 and the electrode terminal 24, for example, welding connection or adhesion.

For example, the second current collection member 25 is made of a variety of materials. For example, the second current collection member 25 is made of copper, iron, aluminum, steel, or an aluminum alloy.

It should be noted that, in another embodiment, the second tab 223 of the electrode assembly 22 alternatively adopts a structure directly connected to the electrode terminal 24, for example, through welding connection or adhesion.

In this embodiment, the first current collection member 23 is provided with the body portion 231 and the butt-joint portion 232. The body portion 231 is located on the side of the electrode assembly 22 facing the first wall 211 and is connected to the electrode assembly 22 in the thickness direction X of the first wall, and the butt-joint portion 232 is connected to the body portion 231 and the protrusion 2121, so that the electrode assembly 22 is electrically connected to the side wall 212 via the first current collection member 23. The body portion 231 includes the main body region 2311 and the plurality of support regions 2312 connected to the outer circumferential surface of the main body region 2311, the plurality of support regions 2312 are arranged spaced away along the circumferential direction of the main body region 2311, and the support region 2312 is at least partially located between the electrode assembly 22 and the protrusion 2121 in the thickness direction X of the first wall, so that the body portion 231 of the first current collection member 23 supports the electrode assembly 22 between the protrusion 2121 and the electrode assembly 22 while thermal runaway gas inside the cylindrical battery cell 20 can be vented through gaps among the plurality of support regions 2312, thereby facilitating internal vent smoothness of the cylindrical battery cell 20, to improve a pressure relief rate of the cylindrical battery cell 20. The inner diameter of the protrusion 2121 is set to be greater than or equal to the outer diameter of the main body region 2311 of the body portion 231, and the inner diameter of the pressure relief groove 2111 is set to be greater than or equal to 0.75 times of the outer diameter of the main body region 2311 of the body portion 231, so that a projection of the main body region 2311 of the body portion 231 in the thickness direction X of the first wall is located on a structure on an inner side of the protrusion 2121, and a projection of the pressure relief groove 2111 in the thickness direction X of the first wall is disposed close to an outer edge of the main body region 2311 or located on a structure on an outer side of the main body region 2311. In this way, obstruction caused by the protrusion 2121 and the main body region 2311 to a vent path inside the cylindrical battery cell 20 can be reduced, so that the thermal runaway gas inside the cylindrical battery cell 20 can be directly vented, after smoothly passing through the gaps among the plurality of support regions 2312 and entering a side of the body portion 231 facing the first wall 211, in a region in which the pressure relief groove 2111 is provided on a pressure relief component on the first wall 211, and further, the internal vent smoothness and the pressure relief rate of the cylindrical battery cell 20 can be effectively improved, thereby facilitating reducing a risk such as burst or explosion caused to the cylindrical battery cell 20 due to untimely pressure relief, to improve use stability and reliability of the cylindrical battery cell 20.

According to some embodiments of the present application, referring to FIG. 6 and FIG. 7, D₁ ≥ D₃.

D₁ ≥ D₃. To be specific, in the projection plane perpendicular to the thickness direction X of the first wall, the orthographic projection of the pressure relief groove 2111 is located on the inner circumferential side of the orthographic projection of the protrusion 2121. With reference to FIG. 6, FIG. 7, and FIG. 9, in an embodiment in which D₃ ≥ D₂ and D₁ ≥ D₂, in the projection plane perpendicular to the thickness direction X of the first wall, at least a part of the orthographic projection of the pressure relief groove 2111 is located between the orthographic projection of the protrusion 2121 and the orthographic projection of the main body region 2311 in the radial direction of the cylindrical battery cell 20.

In this embodiment, the inner diameter of the protrusion 2121 is set to adopt a structure that is greater than or equal to the inner diameter of the pressure relief groove 2111, so that the pressure relief groove 2111 adopts a structure disposed corresponding to a gap between the protrusion 2121 and the main body region 2311 of the body portion 231 in the thickness direction X of the first wall, thereby further reducing blocking and obstruction caused by the protrusion 2121 and the main body region 2311 to a region for pressure relief on the first wall 211, and further improving the internal vent smoothness and the pressure relief rate of the cylindrical battery cell 20. This helps further reduce the risk such as burst or explosion caused to the cylindrical battery cell 20 due to untimely pressure relief, to further improve the use stability and reliability of the cylindrical battery cell 20.

According to some embodiments of the present application, with reference to FIG. 6, FIG. 7, and FIG. 9, an outer diameter of the body portion 231 along the radial direction of the cylindrical battery cell 20 is D₄, and D₁ ≤ 0.95 D₄.

The outer diameter D₄ of the body portion 231 is a diameter of a circle whose radius starts from an end of the support region 2312 away from the main body region 2311 to a central position of the main body region 2311 in the radial direction of the cylindrical battery cell 20, and is also a diameter of a circle on which an end of the plurality of support regions 2312 away from the main body region 2311 in the radial direction of the cylindrical battery cell 20 is located.

D₁ ≤ 0.95 D₄. To be specific, a part of a projection of the main body portion 221 of the first current collection member 23 in the thickness direction X of the first wall overlaps the protrusion 2121. It should be noted that, in an embodiment in which D₁ ≥ D₂, a part of a projection of the support region 2312 of the body portion 231 in the thickness direction X of the first wall overlaps the protrusion 2121.

In this embodiment, the inner diameter of the protrusion 2121 is set to be less than 0.95 times of the outer diameter of the body portion 231, so that a projection of an inner circumferential surface of the protrusion 2121 in the thickness direction X of the first wall adopts a structure located inside the body portion 231. In this way, the plurality of support regions 2312 connected to the outer circumferential surface of the main body region 2311 of the body portion 231 can better extend between the electrode assembly 22 and the protrusion 2121, so that an effect of lapping between the plurality of support regions 2312 and the protrusion 2121 can be improved, to further improve an effect of supporting the electrode assembly 22 by the body portion 231 of the first current collection member 23. In addition, during use of the cylindrical battery cell 20, an effect of resisting expansion of the electrode assembly 22 by the body portion 231 of the first current collection member 23 can be improved, thereby improving the use stability of the cylindrical battery cell 20.

According to some embodiments of the present application, referring to FIG. 9, a maximum proportion of the plurality of support regions 2312 in the circumferential direction of the main body region 2311 is P, and 40% ≤ P ≤ 90%.

The maximum proportion P of the plurality of support regions 2312 in the circumferential direction of the main body region 2311 is a maximum ratio of a sum of arc lengths obtained after the plurality of support regions 2312 are intercepted by a same circle of a plurality of circles that use the central position of the main body region 2311 as a circle center and have different radii to a perimeter of the corresponding circle.

For example, the maximum proportion P of the plurality of support regions 2312 in the circumferential direction of the main body region 2311 is 40%, 42%, 45%, 48%, 50%, 52%, 55%, 58%, 60%, 62%, 65%, 68%, 70%, 72%, 75%, 78%, 80%, 82%, 85%, 88%, or 90%.

In this embodiment, on one hand, the maximum proportion of the plurality of support regions 2312 in the circumferential direction of the main body region 2311 is set to be greater than or equal to 40%, so that a maximum space occupied by the plurality of support regions 2312 on a circumference on which the plurality of support regions 2312 are located is greater than or equal to 40%. In this way, an effect of lapping between the body portion 231 and the protrusion 2121 via the plurality of support regions 2312 can be improved, to improve the effect of supporting the electrode assembly 22 by the body portion 231 of the first current collection member 23. In addition, during use of the cylindrical battery cell 20, the effect of resisting the expansion of the electrode assembly 22 by the body portion 231 of the first current collection member 23 can be improved. On the other hand, the maximum proportion of the plurality of support regions 2312 in the circumferential direction of the main body region 2311 is set to be less than or equal to 90%, so that the maximum space occupied by the plurality of support regions 2312 on the circumference on which the plurality of support regions 2312 are located is less than or equal to 90%. In this way, a phenomenon that the plurality of support regions 2312 are closely arranged spaced away in the circumferential direction of the main body region 2311 can be relieved, to improve a dimension of the gaps among the plurality of support regions 2312. Therefore, the thermal runaway gas inside the cylindrical battery cell 20 can smoothly pass through the gaps among the plurality of support regions 2312 and enter the side of the body portion 231 facing the first wall 211, so that the internal vent smoothness and the pressure relief rate of the cylindrical battery cell 20 can be improved, thereby facilitating reducing the risk such as burst or explosion caused to the cylindrical battery cell 20 due to untimely pressure relief.

In some embodiments, still referring to FIG. 9, the maximum proportion of the plurality of support regions 2312 in the circumferential direction of the main body region 2311 is P, and 50% ≤ P ≤ 80%.

In this embodiment, on one hand, the maximum proportion of the plurality of support regions 2312 in the circumferential direction of the main body region 2311 is set to be greater than or equal to 50%, so that the maximum space occupied by the plurality of support regions 2312 on the circumference on which the plurality of support regions 2312 are located is greater than or equal to 50%. In this way, the effect of lapping between the body portion 231 and the protrusion 2121 via the plurality of support regions 2312 can be further improved, to further improve the effect of supporting the electrode assembly 22 by the body portion 231 of the first current collection member 23. In addition, during use of the cylindrical battery cell 20, the effect of resisting the expansion of the electrode assembly 22 by the body portion 231 of the first current collection member 23 can be further improved. On the other hand, the maximum proportion of the plurality of support regions 2312 in the circumferential direction of the main body region 2311 is set to be less than or equal to 80%, so that the maximum space occupied by the plurality of support regions 2312 on the circumference on which the plurality of support regions 2312 are located is less than or equal to 80%. In this way, the phenomenon that the plurality of support regions 2312 are closely arranged spaced away in the circumferential direction of the main body region 2311 can be further relieved, to further improve the dimension of the gaps among the plurality of support regions 2312. Therefore, the thermal runaway gas inside the cylindrical battery cell 20 can more smoothly pass through the gaps among the plurality of support regions 2312 and enter the side of the body portion 231 facing the first wall 211, so that the internal vent smoothness and the pressure relief rate of the cylindrical battery cell 20 can be further improved, thereby facilitating further reducing the risk such as burst or explosion caused to the cylindrical battery cell 20 due to untimely pressure relief.

According to some embodiments of the present application, with reference to FIG. 6, FIG. 7, and FIG. 8, a dimension by which the protrusion 2121 protrudes from the inner circumferential surface of the side wall 212 in the radial direction of the cylindrical battery cell 20 is L₁. A dimension of an overlapping part between an orthographic projection of the support region 2312 and an orthographic projection of the protrusion 2121 in the radial direction of the cylindrical battery cell 20 in a projection plane perpendicular to the thickness direction of the first wall is L₂. 0.2 L₁ ≤ L₂ ≤ 0.9 L₁.

L₂ is a length of a part that is of the projection of the support region 2312 in the thickness direction X of the first wall and that is located in the protrusion 2121 in the radial direction of the cylindrical battery cell 20, and is also a length by which the support region 2312 extends between the electrode assembly 22 and the protrusion 2121 in the radial direction of the cylindrical battery cell 20.

Optionally, 0.3 L₁ ≤ L₂ ≤ 0.8 L₁. For example, L₂ may be 0.3 times, 0.31 times, 0.32 times, 0.33 times, 0.35 times, 0.38 times, 0.4 times, 0.42 times, 0.45 times, 0.48 times, 0.5 times, 0.52 times, 0.55 times, 0.58 times, 0.6 times, 0.62 times, 0.65 times, 0.68 times, 0.7 times, 0.72 times, 0.75 times, 0.78 times, or 0.8 times of L₁.

In this embodiment, the dimension of the overlapping part between the projection of the support region 2312 in the thickness direction X of the first wall and the protrusion 2121 in the radial direction of the cylindrical battery cell 20 is set to range from 0.2 times to 0.9 times of the dimension by which the protrusion 2121 protrudes from the inner circumferential surface of the side wall 212, so that a length by which the support region 2312 extends between the protrusion 2121 and the electrode assembly 22 in the radial direction of the cylindrical battery cell 20 ranges from 0.2 times to 0.9 times of the dimension by which the protrusion 2121 protrudes from the inner circumferential surface of the side wall 212. On one hand, when the length by which the support region 2312 extends between the protrusion 2121 and the electrode assembly 22 in the radial direction of the cylindrical battery cell 20 is set to be greater than or equal to 0.2 times of the dimension by which the protrusion 2121 protrudes from the inner circumferential surface of the side wall 212, the effect of lapping between the support region 2312 and the protrusion 2121 can be further improved, thereby further improving the effect of supporting the electrode assembly 22 by the body portion 231 of the first current collection member 23. In addition, during use of the cylindrical battery cell 20, the effect of resisting the expansion of the electrode assembly 22 by the body portion 231 of the first current collection member 23 can be further improved. On the other hand, when the length by which the support region 2312 extends between the protrusion 2121 and the electrode assembly 22 in the radial direction of the cylindrical battery cell 20 is set to be less than or equal to 0.9 times of the dimension by which the protrusion 2121 protrudes from the inner circumferential surface of the side wall 212, a phenomenon of excessive lapping between the support region 2312 and the protrusion 2121 can be relieved, so that difficulty in assembling the first current collection member 23 into the shell 21 can be reduced, and the body portion 231 of the first current collection member 23 can be easily detached from the protrusion 2121 and the electrode assembly 22 under the impact of the thermal runaway gas during pressure relief of the cylindrical battery cell 20, thereby facilitating improving the internal vent smoothness and the pressure relief rate of the cylindrical battery cell 20, to further reduce the risk such as burst or explosion caused to the cylindrical battery cell 20 due to untimely pressure relief.

In some embodiments, referring to FIG. 6, 2 mm ≤ L₁ ≤ 5 mm. In other words, the dimension of the protrusion 2121 in the radial direction of the cylindrical battery cell 20 ranges from 2 mm to 5 mm, and optionally, 3 mm ≤ L₁ ≤ 4 mm.

For example, the dimension L₁ by which the protrusion 2121 protrudes from the inner circumferential surface of the side wall 212 in the radial direction of the cylindrical battery cell 20 may be 2 mm, 2.1 mm, 2.2 mm, 2.3 mm, 2.4 mm, 2.5 mm, 2.8 mm, 3 mm, 3.2 mm, 3.5 mm, 3.8 mm, 4 mm, 4.2 mm, 4.5 mm, 4.6 mm, 4.7 mm, 4.8 mm, 4.9 mm, or 5 mm.

In this embodiment, the dimension by which the protrusion 2121 protrudes from the inner circumferential surface of the side wall 212 is set to range from 2 mm to 5 mm, so that a dimension of the protrusion 2121 in the radial direction of the cylindrical battery cell 20 ranges from 2 mm to 5 mm. On one hand, when the dimension by which the protrusion 2121 protrudes from the inner circumferential surface of the side wall 212 is set to be greater than or equal to 2 mm, difficulty in lapping between the protrusion 2121 and the support region 2312 can be reduced, to reduce difficulty in disposing the body portion 231 of the first current collection member 23 between the protrusion 2121 and the electrode assembly 22, and an effect of supporting the electrode assembly 22 by the protrusion 2121 can be improved. On the other hand, when the dimension by which the protrusion 2121 protrudes from the inner circumferential surface of the side wall 212 is set to be less than or equal to 5 mm, a space occupied by the protrusion 2121 in the radial direction of the cylindrical battery cell 20 can be reduced, thereby facilitating reducing the obstruction caused by the protrusion 2121 to the vent path inside the cylindrical battery cell 20. In this way, the internal vent smoothness and the pressure relief rate of the cylindrical battery cell 20 can be effectively improved, thereby facilitating reducing the risk such as burst or explosion caused to the cylindrical battery cell 20 due to untimely pressure relief, to improve the use stability and reliability of the cylindrical battery cell 20.

In some embodiments, with reference to FIG. 6 and FIG. 8, L₂ ≥ 1 mm. In other words, the length by which the support region 2312 extends between the electrode assembly 22 and the protrusion 2121 in the radial direction of the cylindrical battery cell 20 is greater than or equal to 1 mm.

For example, L₂ may be 1 mm, 1.1 mm, 1.2 mm, 1.3 mm, 1.4 mm, 1.5 mm, 1.6 mm, 1.7 mm, or 1.8 mm.

In this embodiment, the dimension of the overlapping part between the projection of the support region 2312 in the thickness direction X of the first wall and the protrusion 2121 in the radial direction of the cylindrical battery cell 20 is set to be greater than or equal to 1 mm, so that the length by which the support region 2312 extends between the protrusion 2121 and the electrode assembly 22 in the radial direction of the cylindrical battery cell 20 is greater than or equal to 1 mm. In this way, the effect of lapping between the support region 2312 and the protrusion 2121 can be improved, to improve the effect of supporting the electrode assembly 22 by the body portion 231 of the first current collection member 23. In addition, during use of the cylindrical battery cell 20, the effect of resisting the expansion of the electrode assembly 22 by the body portion 231 of the first current collection member 23 can be further improved.

According to some embodiments of the present application, referring to FIG. 6, a thickness of the body portion 231 is T₁, and 0.1 mm ≤ T₁ ≤ 0.6 mm. Optionally, 0.2 mm ≤ T₁ ≤ 0.4 mm.

The thickness T₁ of the body portion 231 is a thickness of the body portion 231 in the thickness direction X of the first wall. It should be noted that, in an embodiment in which the body portion 231 includes the main body region 2311 and the support region 2312, a thickness of the main body region 2311 and a thickness of the support region 2312 both range from 0.1 mm to 0.6 mm.

For example, the thickness T₁ of the body portion 231 may be 0.1 mm, 0.12 mm, 0.15 mm, 0.18 mm, 0.2 mm, 0.22 mm, 0.25 mm, 0.28 mm, 0.3 mm, 0.32 mm, 0.35 mm, 0.38 mm, 0.4 mm, 0.42 mm, 0.45 mm, 0.48 mm, 0.5 mm, 0.52 mm, 0.55 mm, 0.58 mm, or 0.6 mm.

In this embodiment, on one hand, the thickness of the body portion 231 is set to be greater than or equal to 0.1 mm, so that structural strength of the body portion 231 can be effectively improved, to improve the effect of supporting the electrode assembly 22 by the body portion 231 between the protrusion 2121 and the electrode assembly 22. In addition, during use of the cylindrical battery cell 20, the effect of resisting the expansion of the electrode assembly 22 by the body portion 231 of the first current collection member 23 can be improved, thereby facilitating reducing a risk that the body portion 231 is deformed or falls off due to the expansion of the electrode assembly 22. On the other hand, the thickness of the body portion 231 is set to be less than or equal to 0.6 mm, so that manufacturing difficulty and manufacturing costs of the body portion 231 of the first current collection member 23 can be reduced, and a space occupied by the body portion 231 in the thickness direction X of the first wall can be effectively reduced, thereby facilitating improving internal space utilization of the cylindrical battery cell 20.

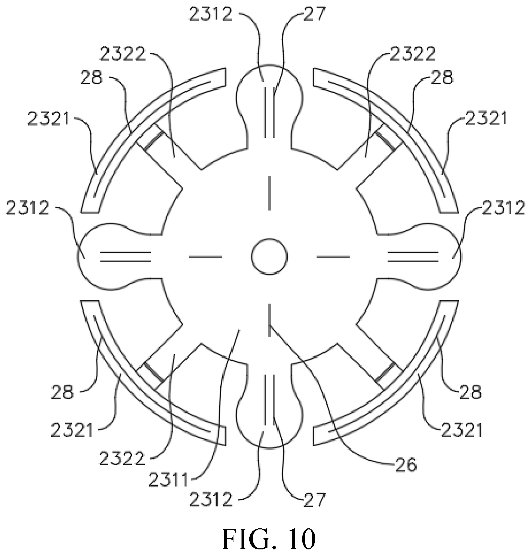

According to some embodiments of the present application, referring to FIG. 6, FIG. 8, and FIG. 9, and further referring to FIG. 10, FIG. 10 is a schematic diagram of structures of a first connection portion 26, a second connection portion 27, and a third connection portion 28 on a first current collection member 23 according to some embodiments of the present application. The electrode assembly 22 may include the main body portion 221 and the first tab 222. The first tab 222 is connected to an end of the main body portion 221 facing the first wall 211 in the thickness direction X of the first wall. The main body region 2311 is welded to the first tab 222 to form a plurality of first connection portions 26. The plurality of support regions 2312 are welded to the first tab 222 to form a plurality of second connection portions 27. A sum of lengths of the plurality of second connection portions 27 is greater than or equal to a sum of lengths of the plurality of first connection portions 26.

The first connection portion 26 and the second connection portion 27 each adopt a strip-shaped structure. Correspondingly, the sum of the lengths of the plurality of second connection portions 27 is greater than or equal to the sum of the lengths of the plurality of first connection portions 26. In other words, a total length of the plurality of second connection portions 27 formed by welding the plurality of support regions 2312 to the first tab 222 is greater than a total length of the plurality of first connection portions 26 formed by welding the main body region 2311 to the first tab 222.

It should be noted that the first connection portion 26 is a region in which the main body region 2311 of the body portion 231 and the first tab 222 are welded to each other to form mutual fusion or a welding mark. Similarly, the second connection portion 27 is a region in which the support region 2312 of the body portion 231 and the first tab 222 are welded to each other to form mutual fusion or a welding mark.

In this embodiment, the main body region 2311 of the body portion 231 is welded to the first tab 222, forming the plurality of first connection portions 26, and the plurality of support regions 2312 of the body portion 231 are welded to the first tab 222, forming the plurality of second connection portions 27, so that the main body region 2311 and the support regions 2312 all adopt structures welded to the first tab 222. In this way, a current guide area between the first tab 222 and the body portion 231 can be improved, and connection stability and reliability between the body portion 231 of the first current collection member 23 and the first tab 222 of the electrode assembly 22 can be improved. Because a length of an outer ring of the first tab 222 is greater than a length of an inner ring of the first tab 222, an overcurrent requirement of the outer ring of the first tab 222 is higher than an overcurrent requirement of the inner ring of the first tab 222. The total length of the plurality of second connection portions 27 formed by welding the plurality of support regions 2312 to the first tab 222 is set to be greater than the total length of the plurality of first connection portions 26 formed by welding the main body region 2311 to the first tab 222, so that a current guide area between the outer ring of the first tab 222 and the body portion 231 is greater than a current guide area between the inner ring of the first tab 222 and the body portion 231. In this way, overcurrent balance between the inner ring and the outer ring of the first tab 222 can be improved, thereby facilitating reducing a phenomena of local lithium plating or an increase in an internal resistance during use of the electrode assembly 22.

In some embodiments, referring to FIG. 9 and FIG. 10, the plurality of first connection portions 26 are arranged spaced away along the circumferential direction of the side wall 212, and the first connection portions 26 extend along the radial direction of the cylindrical battery cell 20. In other words, the plurality of first connection portions 26 adopt structures arranged spaced away surrounding the central axis of the cylindrical battery cell 20, and an extension direction of each of the first connection portions 26 is the radial direction of the cylindrical battery cell 20, so that the plurality of first connection portions 26 adopt a radially arranged structure.

For example, four first connection portions 26 are formed by welding the main body region 2311 to the first tab 222. Certainly, in another embodiment, a quantity of first connection portions 26 formed by welding the main body region 2311 to the first tab 222 may alternatively be two, three, five, six, seven, eight, or the like.

In this embodiment, the plurality of first connection portions 26 formed by welding the main body region 2311 to the first tab 222 are set to adopt structures arranged spaced away along the circumferential direction of the side wall 212, and the first connection portions 26 each adopt a structure extending along the radial direction of the cylindrical battery cell 20. Therefore, on one hand, welding difficulty between the main body region 2311 and the first tab 222 can be reduced, and a layout among the plurality of first connection portions 26 can be optimized, thereby facilitating relieving an impact of interference among the plurality of first connection portions 26. On the other hand, the first tab 222 can be connected to the main body region 2311 at a plurality of positions in the circumferential direction of the side wall 212, and the first tab 222 can be connected to the main body region 2311 at a plurality of positions in the radial direction of the cylindrical battery cell 20, so that a plurality of ring structures of the first tab 222 can be all connected to the main body region 2311. In this way, both a current guide area between the first tab 222 and the main body region 2311 and overcurrent balance between the electrode assembly 22 and the main body region 2311 can be improved, to reduce a risk of local lithium plating during use of the electrode assembly 22.

In some embodiments, referring to FIG. 9 and FIG. 10, the plurality of second connection portions 27 are arranged spaced away along the circumferential direction of the side wall 212, and the second connection portions 27 extend along the radial direction of the cylindrical battery cell 20. In other words, the plurality of second connection portions 27 adopt structures arranged spaced away surrounding the central axis of the cylindrical battery cell 20, and an extension direction of each of the second connection portions 27 is the radial direction of the cylindrical battery cell 20, so that the plurality of second connection portions 27 adopt a radially arranged structure.

In this embodiment, the plurality of second connection portions 27 formed by welding the plurality of support regions 2312 to the first tab 222 are set to adopt structures arranged spaced away along the circumferential direction of the side wall 212, and the second connection portions 27 each adopt a structure extending along the radial direction of the cylindrical battery cell 20. Therefore, on one hand, welding difficulty between the plurality of support regions 2312 and the first tab 222 can be reduced, and a layout among the plurality of second connection portions 27 can be optimized, thereby facilitating relieving an impact of interference among the plurality of second connection portions 27. On the other hand, the first tab 222 can be connected to the support regions 2312 at a plurality of positions in the circumferential direction of the side wall 212, and the first tab 222 can be connected to the support regions 2312 at a plurality of positions in the radial direction of the cylindrical battery cell 20, so that the plurality of ring structures of the first tab 222 can be all connected to the support regions 2312. In this way, both a current guide area between the first tab 222 and the support regions 2312 and overcurrent balance between the electrode assembly 22 and the support regions 2312 can be improved, to reduce the risk of local lithium plating during use of the electrode assembly 22.

In some embodiments, still referring to FIG. 9 and FIG. 10, the support regions 2312 are all welded to the first tab 222 to form the second connection portions 27. In other words, any one of the plurality of support regions 2312 of the body portion 231 and the first tab 222 are welded to each other to form the second connection portion 27.

For example, the support regions 2312 are all welded to the first tab 222 to form the second connection portions 27. Certainly, in another embodiment, a quantity of second connection portions 27 formed by welding all the support regions 2312 to the first tab 222 may alternatively be one, three, four, or the like.

In this embodiment, the support regions 2312 of the body portion 231 are all welded to the first tab 222, so that the plurality of support regions 2312 arranged spaced away in the circumferential direction of the main body region 2311 are all welded to the first tab 222 to correspondingly form the second connection portions 27. Therefore, on one hand, the connection stability and robustness between the first tab 222 and the body portion 231 are further improved, and on the other hand, the first tab 222 is connected to the support regions 2312 at the plurality of positions in the circumferential direction of the side wall 212, to help improve overcurrent balance between the electrode assembly 22 and the first current collection member 23, thereby reducing the risk of local lithium plating during use of the electrode assembly 22.

According to some embodiments of the present application, referring to FIG. 6, FIG. 8, and FIG. 9, the first current collection member 23 includes a plurality of butt-joint portions 232. The plurality of butt-joint portions 232 are arranged spaced away along the circumferential direction of the main body region 2311 and are all connected to the main body region 2311. The plurality of butt-joint portions 232 are all connected to the protrusion 2121. In other words, the body portion 231 of the first current collection member 23 adopts a structure connected to the protrusion 2121 by using the plurality of butt-joint portions 232.

For example, in FIG. 8 and FIG. 9, the first current collection member 23 is provided with four butt-joint portions 232, and the four butt-joint portions 232 are arranged spaced away along the circumferential direction of the main body region 2311. Certainly, in another embodiment, a quantity of butt-joint portions 232 of the first current collection member 23 may alternatively be two, three, five, six, or the like.

In an embodiment in which the butt-joint portion 232 includes the elastic region 2322 and the connection region 2321, the elastic regions 2322 of the plurality of butt-joint portions 232 are all connected to the outer circumferential surface of the main body region 2311 and are arranged spaced away along the circumferential direction of the main body region 2311. Correspondingly, the connection regions 2321 of the butt-joint portions 232 are all connected to the protrusion 2121. It should be noted that the circumferential direction of the main body region 2311 is the circumferential direction of the cylindrical battery cell 20, and is also the circumferential direction of the side wall 212.

In this embodiment, the first current collection member 23 is provided with the plurality of butt-joint portions 232, and the plurality of butt-joint portions 232 adopt structures that are arranged spaced away along the circumferential direction of the main body region 2311 and all connected to the protrusion 2121, so that the protrusion 2121 can be connected to the butt-joint portions 232 at a plurality of positions in the circumferential direction of the side wall 212. Therefore, on one hand, connection stability and robustness between the first current collection member 23 and the protrusion 2121 can be further improved, and on the other hand, a current guide area between the first current collection member 23 and the protrusion 2121 can be further improved, and overcurrent balance between the first current collection member 23 and the protrusion 2121 can be further improved, to reduce a risk of a local temperature increase of the protrusion 2121.

According to some embodiments of the present application, referring to FIG. 6 and FIG. 10, the plurality of butt-joint portions 232 are all welded to the protrusion 2121 to correspondingly form a plurality of third connection portions 28. The third connection portions 28 are in one-to-one correspondence with the butt-joint portions 232. The third connection portions 28 extend along the circumferential direction of the side wall 212. Outer edges of orthographic projections of the plurality of third connection portions 28 in a projection plane perpendicular to the thickness direction X of the first wall are all located on a first circle. A sum of arc lengths of the outer edges of the orthographic projections of the plurality of third connection portions 28 is L₃. A perimeter of the first circle is L₄. L₃ ≥ 0.5 L₄.

The third connection portions 28 are in one-to-one correspondence with the butt-joint portions 232. The third connection portions 28 extend along the circumferential direction of the side wall 212. In other words, each butt-joint portion 232 is welded to the protrusion 2121 to form one third connection portion 28, and the third connection portion 28 adopts an arc structure extending along the circumferential direction of the side wall 212. Correspondingly, the plurality of third connection portions 28 formed by welding the plurality of butt-joint portions 232 to the protrusion 2121 adopt structures arranged spaced away along the circumferential direction of the side wall 212. In an embodiment in which the butt-joint portion 232 includes the elastic region 2322 and the connection region 2321, the connection region 2321 is welded to the protrusion 2121 to form the third connection portion 28. It should be noted that, in another embodiment, a plurality of third connection portions 28 may alternatively be formed by welding all the butt-joint portions 232 to the protrusion 2121, and the plurality of third connection portions 28 formed by welding all the butt-joint portions 232 to the protrusion 2121 are arranged spaced away along the circumferential direction of the side wall 212.

It should be noted that the third connection portion 28 is a region in which the butt-joint portion 232 and the protrusion 2121 are welded to each other to form mutual fusion or a welding mark.

L₃ is the sum of the arc lengths of the outer edges of the projections of the plurality of third connection portions 28 in the thickness direction X of the first wall. Correspondingly, L₄ is the perimeter of the circle on which the outer edges of the projections of the third connection portions 28 in the thickness direction X of the first wall are located, that is, the perimeter of the first circle is L₄.

L₃ ≥ 0.5 L₄. To be specific, a proportion of the outer edges of the projections of the plurality of third connection portions 28 in the thickness direction X of the first wall on the first circle on which the outer edges are located is greater than or equal to 50%.

For example, L₃ may be 0.5 times, 0.51 times, 0.52 times, 0.53 times, 0.54 times, 0.55 times, 0.56 times, 0.57 times, 0.58 times, 0.59 times, 0.6 times, 0.61 times, 0.62 times, 0.63 times, 0.64 times, 0.65 times, 0.66 times, 0.67 times, 0.68 times, 0.69 times, 0.7 times, 0.71 times, 0.72 times, 0.73 times, 0.74 times, 0.75 times, 0.76 times, 0.77 times, 0.78 times, 0.79 times, 0.8 times, 0.81 times, 0.82 times, 0.83 times, 0.84 times, or 0.85 times of L₄.

In this embodiment, the sum of the arc lengths of the outer edges of the orthographic projections of the plurality of third connection portions 28 in the thickness direction X of the first wall is set to be greater than or equal to 0.5 times of the perimeter of the first circle, so that a proportion of the plurality of third connection portions 28 on the first circle is greater than or equal to 50%. In this way, the current guide area between the first current collection member 23 and the protrusion 2121 is improved, to improve a current guide effect between the first current collection member 23 and the shell 21, thereby reducing a phenomenon of an increase in an internal resistance during use of the cylindrical battery cell 20.

In some embodiments, L₃ ≥ 0.8 L₄.

In this embodiment, the sum of the arc lengths of the outer edges of the orthographic projections of the plurality of third connection portions 28 in the thickness direction X of the first wall is further set to be greater than or equal to 0.8 times of the perimeter of the first circle, so that the proportion of the plurality of third connection portions 28 on the first circle is greater than or equal to 80%. In this way, the current guide area between the first current collection member 23 and the protrusion 2121 is further improved, to further improve the current guide effect between the first current collection member 23 and the shell 21, thereby facilitating further reducing the phenomenon of the increase in the internal resistance during use of the cylindrical battery cell 20.

In some embodiments, referring to FIG. 6, FIG. 9, and FIG. 10, the butt-joint portion 232 has the connection region 2321 welded to the protrusion 2121, and the connection region 2321 adopts an arc structure extending along the circumferential direction of the side wall 212.

In the projection plane perpendicular to the thickness direction X of the first wall, the sum L₃ of the arc lengths of the outer edges of the orthographic projections of the plurality of third connection portions 28 is less than or equal to a sum of lengths of the connection regions 2321 of the plurality of butt-joint portions 232 in the circumferential direction of the side wall 212. It should be noted that, in an embodiment in which the first current collection member 23 includes the plurality of butt-joint portions 232, the connection regions 2321 of the plurality of butt-joint portions 232 adopt structures arranged spaced away along the circumferential direction of the side wall 212.

In this embodiment, the butt-joint portion 232 is provided with the connection region 2321 for mutual welding to the protrusion 2121. The connection region 2321 is set to adopt the arc structure extending along the circumferential direction of the side wall 212, so that the connection region 2321 and the protrusion 2121 conform with each other. Therefore, on one hand, welding between the connection region 2321 of the butt-joint portion 232 and the protrusion 2121 to form the third connection portion 28 extending along the circumferential direction of the side wall 212 is facilitated, to help reduce welding difficulty between the butt-joint portion 232 and the protrusion 2121. On the other hand, the connection region 2321 and the protrusion 2121 can be welded to each other at a plurality of positions in the circumferential direction of the side wall 212, so that rotation position adjustment and positioning performed on the first current collection member 23 after the first current collection member 23 is assembled inside the shell 21 can be reduced, thereby facilitating further reducing welding difficulty between the first current collection member 23 and the protrusion 2121. In this way, assembly efficiency of the cylindrical battery cell 20 can be effectively improved.

According to some embodiments of the present application, referring to FIG. 8 and FIG. 9, the plurality of butt-joint portions 232 are all connected to the outer circumferential surface of the main body region 2311. The butt-joint portions 232 and the support regions 2312 are arranged alternately along the circumferential direction of the main body region 2311. In other words, one support region 2312 is arranged between every two adjacent butt-joint portions 232 in the circumferential direction of the main body region 2311.

For example, in FIG. 9, the body portion 231 of the first current collection member 23 is provided with four support regions 2312. Correspondingly, the first current collection member 23 is provided with four butt-joint portions 232. The four support regions 2312 and the four butt-joint portions 232 are sequentially and alternately arranged in the circumferential direction of the main body region 2311.

It should be noted that, in an embodiment in which the butt-joint portion 232 includes the elastic region 2322 and the connection region 2321, the elastic region 2322 and the support region 2312 adopt structures sequentially and alternately arranged spaced away in the circumferential direction of the main body region 2311. Correspondingly, the connection regions 2321 of the plurality of butt-joint portions 232 are arranged surrounding the main body region 2311 along the circumferential direction of the main body region 2311.

In this embodiment, the plurality of butt-joint portions 232 arranged spaced away along the circumferential direction of the main body region 2311 are all set to adopt a structure connected to the outer circumferential surface of the main body region 2311, to help reduce connection difficulty between the main body region 2311 and the butt-joint portions 232, thereby reducing difficulty in forming the first current collection member 23. The butt-joint portions 232 and the support regions 2312 are set to adopt structures arranged alternately along the circumferential direction of the main body region 2311. Therefore, on one hand, an impact of interference between the butt-joint portions 232 and the support regions 2312 is reduced, to reduce connection difficulty between the butt-joint portions 232 and the protrusion 2121, and assembly difficulty between between the body portion 231 and the electrode assembly 22 is reduced. On the other hand, regularity of the first current collection member 23 is improved, and structural layouts of the butt-joint portions 232 and the support regions 2312 are optimized, thereby facilitating reducing difficulty in assembling the first current collection member 23 inside the shell 21.

According to some embodiments of the present application, referring to FIG. 5 and FIG. 8, a central through hole 224 is provided on the electrode assembly 22. The central through hole 224 runs through two ends of the electrode assembly 22 along the thickness direction X of the first wall. A vent hole 2311a is provided in the main body region 2311. The vent hole 2311a runs through two sides of the main body region 2311 along the thickness direction X of the first wall. The vent hole 2311a is in communication with the central through hole 224. A projection of a hole wall surface of the central through hole 224 along the thickness direction X of the first wall is located inside the vent hole 2311a.

The central through hole 224 is located at a central position of the electrode assembly 22 and runs through the two ends of the electrode assembly 22 along the thickness direction X of the first wall, so that gas inside the electrode assembly 22 flows and is vented. In an embodiment in which the electrode assembly 22 includes the main body portion 221, the first tab 222, and the second tab 223, the central through hole 224 sequentially runs through the first tab 222, the main body portion 221, and the second tab 223 along the thickness direction X of the first wall.

The projection of the hole wall surface of the central through hole 224 along the thickness direction X of the first wall is located inside the vent hole 2311a. In other words, the vent hole 2311a provided in the main body region 2311 of the body portion 231 of the first current collection member 23 adopts a structure disposed corresponding to the central through hole 224 in the thickness direction X of the first wall, and a hole diameter of the vent hole 2311a is greater than or equal to a hole diameter of the central through hole 224.

In this embodiment, the vent hole 2311a that runs through the main body region 2311 along the thickness direction X of the first wall is provided in the main body region 2311 of the body portion 231 of the first current collection member 23, the vent hole 2311a is connected to the central through hole 224 of the electrode assembly 22, and the projection of the hole wall surface of the central through hole 224 in the thickness direction X of the first wall is set to be located inside the vent hole 2311a, so that the hole diameter of the vent hole 2311a adopts a structure that is greater than or equal to the hole diameter of the central through hole 224. In this way, when thermal runaway occurs in the cylindrical battery cell 20, after the thermal runaway gas in the central through hole 224 enters, through the vent hole 2311a, the side of the body portion 231 facing the first wall 211, it is convenient for the thermal runaway gas to be directly vented in the region in which the pressure relief groove 2111 is provided on the pressure relief component on the first wall 211, thereby facilitating improving the internal vent smoothness of the cylindrical battery cell 20, and effectively reducing the risk such as burst or explosion caused to the cylindrical battery cell 20 due to untimely pressure relief, to improve the use stability and reliability of the cylindrical battery cell 20.

In some embodiments, referring to FIG. 5, the hole diameter of the central through hole 224 is D₅, the hole diameter of the vent hole 2311a is D₆, and D₆ ≥ 1.5 D₅.

For example, the hole diameter D₆ of the vent hole 2311a may be 1.5 times, 1.6 times, 1.7 times, 1.8 times, 1.9 times, 2 times, 2.1 times, 2.2 times, 2.3 times, 2.4 times, 2.5 times, or 2.6 times of the hole diameter D₅ of the central through hole 224.

In this embodiment, the hole diameter of the vent hole 2311a is further set to be greater than or equal to 1.5 times of the hole diameter of the central through hole 224, so that smoothness that the thermal runaway gas in the central through hole 224 enters, through the vent hole 2311a, the side of the body portion 231 facing the first wall 211 when thermal runaway occurs in the cylindrical battery cell 20 is further improved, thereby facilitating further improving the internal vent smoothness of the cylindrical battery cell 20. In this way, the risk such as burst or explosion caused to the cylindrical battery cell 20 due to untimely pressure relief is further reduced, to further improve the use stability and reliability of the cylindrical battery cell 20.

According to some embodiments of the present application, referring to FIG. 9, a length of the support region 2312 along the radial direction of the cylindrical battery cell 20 is L₅, and 0.5 D₂ ≥ L₅. In other words, a radius of the outer contour of the main body region 2311 is greater than or equal to the length of the support region 2312 in the radial direction of the cylindrical battery cell 20.

In this embodiment, a radius of the main body region 2311 of the body portion 231 is set to be greater than or equal to a length by which the support region 2312 of the body portion 231 protrudes from the outer circumferential surface of the main body region 2311 in the radial direction of the cylindrical battery cell 20, so that a phenomenon of insufficient structural strength of the body portion 231 caused by excessive space occupied by the support region 2312 in the body portion 231 can be relieved, thereby further improving a phenomenon of a poor effect of supporting the electrode assembly 22 by the body portion 231 in the thickness direction X of the first wall. In addition, during use of the cylindrical battery cell 20, the effect of resisting the expansion of the electrode assembly 22 by the body portion 231 can be further improved.

According to some embodiments of the present application, referring to FIG. 5 and FIG. 6, an accommodating cavity 214 is formed inside the shell 21. The body portion 231 is configured to separate the accommodating cavity 214 into a first cavity 2141 and a second cavity 2142 that are in communication with each other. The electrode assembly 22 is accommodated in the first cavity 2141. The second cavity 2142 is located between the body portion 231 and the first wall 211 in the thickness direction X of the first wall. The pressure relief component is configured to split along at least a part of the pressure relief groove 2111 during pressure relief of the cylindrical battery cell 20, to release pressure inside the second cavity 2142. A maximum dimension of the second cavity 2142 is H₁ and a maximum dimension of the shell 21 is H₂ along the thickness direction X of the first wall, and 0.003 ≤ H₁ / H₂ ≤ 0.06.

The accommodating cavity 214 inside the shell 21 functions to accommodate the electrode assembly 22 and the first current collection member 23. The body portion 231 is configured to separate the accommodating cavity 214 into the first cavity 2141 and the second cavity 2142 that are in communication with each other. The electrode assembly 22 is accommodated in the first cavity 2141. The second cavity 2142 is located between the body portion 231 and the first wall 211 in the thickness direction X of the first wall. In other words, the body portion 231 of the first current collection member 23 is disposed between the electrode assembly 22 and the protrusion 2121 in the thickness direction X of the first wall, so that a space on a side of the body portion 231 facing the electrode assembly 22 is the first cavity 2141, and a space between the body portion 231 and the first wall 211 is the second cavity 2142. Therefore, the first cavity 2141 and the second cavity 2142 adopt structures arranged along the thickness direction X of the first wall, and are respectively located on two sides of the body portion 231.

The pressure relief component is configured to split along at least a part of the pressure relief groove 2111 during pressure relief of the cylindrical battery cell 20, to release the pressure inside the second cavity 2142. In other words, during pressure relief of the cylindrical battery cell 20, after the region in which the pressure relief groove 2111 is provided on the pressure relief component on the first wall 211 at least partially splits, the second cavity 2142 can be directly in communication with the outside of the shell 21, so that the thermal runaway gas in the second cavity 2142 can be directly vented.

It should be noted that, in an embodiment in which the pressure relief component and the first wall 211 are integrally formed, the first wall 211 is configured to split along at least a part of the pressure relief groove 2111 during pressure relief of the cylindrical battery cell 20, to release the pressure inside the second cavity 2142. In other words, during pressure relief of the cylindrical battery cell 20, after a region in which the pressure relief groove 2111 is provided on the first wall 211 at least partially splits, the second cavity 2142 can be directly in communication with the outside of the shell 21, so that the thermal runaway gas in the second cavity 2142 can be directly vented.

For example, the first cavity 2141 and the second cavity 2142 adopt structures in communication with each other, and the region in which the pressure relief groove 2111 is provided on the pressure relief component on the first wall 211 is provided corresponding to the second cavity 2142 in the thickness direction X of the first wall.

The maximum dimension of the second cavity 2142 is H₁ along the thickness direction X of the first wall, in other words, H₁ is a maximum height dimension of the second cavity 2142 in the thickness direction X of the first wall.

The maximum dimension of the shell 21 is H₂ along the thickness direction X of the first wall, in other words, H₂ is a maximum height dimension of the shell 21 in the thickness direction X of the first wall.

For example, a ratio of the maximum dimension H₁ of the second cavity 2142 to the maximum dimension H₂ of the shell 21 along the thickness direction X of the first wall may be 0.003, 0.004, 0.005, 0.006, 0.007, 0.008, 0.009, 0.01, 0.012, 0.015, 0.02, 0.025, 0.03, 0.035, 0.04, 0.045, 0.05, 0.055, 0.056, 0.057, 0.058, 0.059, or 0.06.

Optionally, the maximum height dimension H₂ of the shell 21 in the thickness direction X of the first wall ranges from 70 mm to 140 mm. For example, the maximum height dimension H₂ of the shell 21 in the thickness direction X of the first wall may be 70 mm, 75 mm, 80 mm, 85 mm, 90 mm, 95 mm, 100 mm, 105 mm, 110 mm, 115 mm, 120 mm, 125 mm, 130 mm, 135 mm, or 140 mm.

In this embodiment, the body portion 231 separates the accommodating cavity 214 inside the shell 21 into the first cavity and the second cavity that are arranged along the thickness direction X of the first wall. The electrode assembly 22 is disposed in the first cavity, and the second cavity is located between the first wall 211 and the body portion 231. The pressure relief component is configured to split along at least a part of the pressure relief groove 2111 during pressure relief of the cylindrical battery cell 20 and release the pressure inside the second cavity 2142, so that the region in which the pressure relief groove 2111 is provided on the pressure relief component on the first wall 211 adopts a structure disposed corresponding to the second cavity 2142. The cylindrical battery cell 20 adopting this structure implements separation between the electrode assembly 22 and the pressure relief component by using the second cavity 2142. Therefore, obstruction and blocking caused by the electrode assembly 22 to the pressure relief component are relieved during pressure relief of the cylindrical battery cell 20, so that the second cavity 2142 configured to buff and vent the thermal runaway gas is provided inside the shell 21, thereby facilitating improving the internal vent smoothness of the cylindrical battery cell 20. The maximum dimension of the second cavity 2142 in the thickness direction X of the first wall ranges from 0.003 times to 0.06 times of the maximum dimension of the shell 21 in the thickness direction X of the first wall. On one hand, the maximum dimension of the second cavity 2142 in the thickness direction X of the first wall is set to be greater than or equal to 0.003 times of the maximum dimension of the shell 21 in the thickness direction X of the first wall, so that there is sufficient space between the body portion 231 and the first wall 211 to buffer and vent the thermal runaway gas, thereby facilitating improving the internal vent smoothness and the pressure relief rate of the cylindrical battery cell 20, and therefore, the risk such as burst or explosion caused to the cylindrical battery cell 20 due to untimely pressure relief is reduced. On the other hand, the maximum dimension of the second cavity 2142 in the thickness direction X of the first wall is set to be less than or equal to 0.06 times of the maximum dimension of the shell 21 in the thickness direction X of the first wall, to relieve a phenomenon that the second cavity 2142 occupies excessive space in the accommodating cavity 214 for disposing the electrode assembly 22. Therefore, the internal space utilization of the cylindrical battery cell 20 is improved, thereby improving an energy density of the cylindrical battery cell 20.

In some embodiments, still referring to FIG. 5 and FIG. 6, 0.01 ≤ H₁ / H₂ ≤ 0.03.

In this embodiment, on one hand, the maximum dimension of the second cavity 2142 in the thickness direction X of the first wall is further set to be greater than or equal to 0.01 times of the maximum dimension of the shell 21 in the thickness direction X of the first wall, so that there is more space between the body portion 231 and the first wall 211 to buffer and vent the thermal runaway gas, thereby facilitating further improving the internal vent smoothness and the pressure relief rate of the cylindrical battery cell 20, and therefore, the risk such as burst or explosion caused to the cylindrical battery cell 20 due to untimely pressure relief is further reduced. On the other hand, the maximum dimension of the second cavity 2142 in the thickness direction X of the first wall is further set to be less than or equal to 0.03 times of the maximum dimension of the shell 21 in the thickness direction X of the first wall, to further relieve the phenomenon that the second cavity 2142 occupies excessive space in the accommodating cavity 214 for disposing the electrode assembly 22. Therefore, the internal space utilization of the cylindrical battery cell 20 is further improved, thereby further improving the energy density of the cylindrical battery cell 20.

According to some embodiments of the present application, referring to FIG. 6, 0.4 mm ≤ H₁ ≤ 4 mm.

For example, the maximum dimension H₁ of the second cavity 2142 in the thickness direction X of the first wall may be 0.4 mm, 0.5 mm, 0.6 mm, 0.7 mm, 0.8 mm, 0.9 mm, 1 mm, 1.2 mm, 1.5 mm, 1.8 mm, 2 mm, 2.2 mm, 2.5 mm, 2.8 mm, 3 mm, 3.2 mm, 3.5 mm, 3.8 mm, or 4 mm.

In this embodiment, the maximum dimension of the second cavity 2142 in the thickness direction X of the first wall is set to range from 0.4 mm to 4 mm. Therefore, on one hand, there is more space between the body portion 231 and the first wall 211 to buffer and vent the thermal runaway gas, so that a phenomenon of obstruction caused by the electrode assembly 22 and the body portion 231 to the vent path inside the cylindrical battery cell 20 during pressure relief of the cylindrical battery cell 20 is reduced, thereby further improving the internal vent smoothness and the pressure relief rate of the cylindrical battery cell 20, to reduce the risk such as burst or explosion caused to the cylindrical battery cell 20 due to untimely pressure relief. On the other hand, the phenomenon that the second cavity 2142 occupies excessive space in the accommodating cavity 214 for disposing the electrode assembly 22 can be relieved, thereby further improve the internal space utilization of the cylindrical battery cell 20, to further improve the energy density of the cylindrical battery cell 20.

According to some embodiments of the present application, referring to FIG. 6, a capacitance of the cylindrical battery cell 20 is C, and 0.005 mm/Ah ≤ H₁ / C ≤ 0.2 mm/Ah.

For example, a ratio of the maximum dimension H₁ of the second cavity 2142 in the thickness direction X of the first wall to the capacitance C of the cylindrical battery cell 20 may be 0.005 mm/Ah, 0.006 mm/Ah, 0.007 mm/Ah, 0.008 mm/Ah, 0.009 mm/Ah, 0.01 mm/Ah, 0.02 mm/Ah, 0.03 mm/Ah, 0.04 mm/Ah, 0.05 mm/Ah, 0.06 mm/Ah, 0.07 mm/Ah, 0.08 mm/Ah, 0.09 mm/Ah, 0.1 mm/Ah, 0.11 mm/Ah, 0.12 mm/Ah, 0.13 mm/Ah, 0.14 mm/Ah, 0.15 mm/Ah, 0.16 mm/Ah, 0.17 mm/Ah, 0.18 mm/Ah, 0.19 mm/Ah, or 0.2 mm/Ah.

In this embodiment, on one hand, the ratio of the maximum dimension of the second cavity 2142 in the thickness direction X of the first wall to the capacitance of the cylindrical battery cell 20 is set to be greater than or equal to 0.005 mm/Ah, so that there is sufficient space in the second cavity 2142 to buffer and vent the thermal runaway gas during pressure relief of the cylindrical battery cell 20, thereby facilitating mutual matching between a gas generating rate of a space for venting in the shell 21 and a gas generating rate of the cylindrical battery cell 20 during thermal runaway, to improve the internal vent smoothness of the cylindrical battery cell 20. In this way, the risk such as burst or explosion caused to the cylindrical battery cell 20 due to untimely pressure relief is effectively reduced. On the other hand, the ratio of the maximum dimension of the second cavity 2142 in the thickness direction X of the first wall to the capacitance of the cylindrical battery cell 20 is set to be less than or equal to 0.2 mm/Ah, to relieve a phenomenon that the space for venting in the shell 21 is excessively wasted. Therefore, the internal space utilization of the cylindrical battery cell 20 is improved, thereby improving the energy density of the cylindrical battery cell 20.

In some embodiments, still referring to FIG. 6, a positive electrode material of the cylindrical battery cell 20 includes lithium transition metal oxide, and H₁ and C further satisfy 0.01 mm/Ah ≤ H₁ / C ≤ 0.2 mm/Ah.

The positive electrode material of the cylindrical battery cell 20 includes the lithium transition metal oxide. In other words, a positive electrode material of the electrode assembly 22 of the cylindrical battery cell 20 includes at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, modified compounds thereof, and the like.

In this embodiment, when the positive electrode material of the cylindrical battery cell 20 includes the lithium transition metal oxide, the ratio of the maximum dimension of the second cavity 2142 in the thickness direction X of the first wall to the capacitance of the cylindrical battery cell 20 is further enabled to range from 0.01 mm/Ah to 0.2 mm/Ah, so that the gas generating rate of the space for venting in the shell 21 further matches the gas generating rate of the cylindrical battery cell 20 during thermal runaway. Therefore, on one hand, the internal vent smoothness of the cylindrical battery cell 20 is further improved, to further reduce the risk such as burst or explosion caused to the cylindrical battery cell 20 due to untimely pressure relief. On the other hand, the phenomenon that the space for venting in the shell 21 is excessively wasted can be further relieved, to further improve the internal space utilization of the cylindrical battery cell 20, thereby facilitating further improving the energy density of the cylindrical battery cell 20.

In some embodiments, still referring to FIG. 6, a positive electrode material of the cylindrical battery cell 20 includes lithium-containing phosphate, and H₁ and C further satisfy 0.005 mm/Ah ≤ H₁ / C ≤ 0.1 mm/Ah.

The positive electrode material of the cylindrical battery cell 20 includes the lithium-containing phosphate. In other words, a positive electrode material of the electrode assembly 22 of the cylindrical battery cell 20 includes at least one of lithium iron phosphate, a composite material of lithium iron phosphate and carbon, lithium manganese phosphate, a composite material of lithium manganese phosphate and carbon, lithium iron manganese phosphate, and a composite material of lithium iron manganese phosphate and carbon.

In this embodiment, when the positive electrode material of the cylindrical battery cell 20 includes the lithium-containing phosphate, the ratio of the maximum dimension of the second cavity 2142 in the thickness direction X of the first wall to the capacitance of the cylindrical battery cell 20 is further enabled to range from 0.005 mm/Ah to 0.1 mm/Ah, so that the gas generating rate of the space for venting in the shell 21 further matches the gas generating rate of the cylindrical battery cell 20 during thermal runaway. Therefore, on one hand, the internal vent smoothness of the cylindrical battery cell 20 is further improved, to further reduce the risk such as burst or explosion caused to the cylindrical battery cell 20 due to untimely pressure relief. On the other hand, the phenomenon that the space for venting in the shell 21 is excessively wasted can be further relieved, to further improve the internal space utilization of the cylindrical battery cell 20, thereby facilitating further improving the energy density of the cylindrical battery cell 20.

According to some embodiments of the present application, referring to FIG. 5, FIG. 6, and FIG. 7, an outer diameter of the electrode assembly 22 along the radial direction of the cylindrical battery cell 20 is D₇, and 0.7 ≤ D₁ / D₇ ≤ 0.95.

The outer diameter of the electrode assembly 22 along the radial direction of the cylindrical battery cell 20 is D₇. In other words, D₇ is a diameter of a circle on which an outer contour of an orthographic projection of the main body portion 221 of the electrode assembly 22 in the projection plane perpendicular to the thickness direction X of the first wall is located.

For example, a ratio of the inner diameter D₁ of the protrusion 2121 to the outer diameter D₇ of the electrode assembly 22 along the radial direction of the cylindrical battery cell 20 may be 0.7, 0.71, 0.72, 0.73, 0.74, 0.75, 0.76, 0.78, 0.8, 0.82, 0.84, 0.85, 0.86, 0.88, 0.9, 0.91, 0.92, 0.93, 0.94, or 0.95.

In this embodiment, the ratio of the inner diameter of the protrusion 2121 to the outer diameter of the electrode assembly 22 is set to range from 0.7 to 0.95. On one hand, the inner diameter of the protrusion 2121 is set to be greater than or equal to 0.7 times of the outer diameter of the electrode assembly 22, so that most regions on the electrode assembly 22 adopt a structure disposed corresponding to the inner side of the protrusion 2121 in the thickness direction of the first wall. In this way, the obstruction caused by the protrusion 2121 to the vent path inside the cylindrical battery cell 20 can be reduced, thereby facilitating improving the internal vent smoothness and the pressure relief rate of the cylindrical battery cell 20, and effectively reducing the risk such as burst or explosion caused to the cylindrical battery cell 20 due to untimely pressure relief. On the other hand, the inner diameter of the protrusion 2121 is set to be less than or equal to 0.95 times of the outer diameter of the electrode assembly 22, so that the electrode assembly 22 and the protrusion 2121 are structures whose projections in the thickness direction of the first wall partially overlap. In this way, an effect of supporting the electrode assembly 22 by the protrusion 2121 by using the body portion 231 can be improved. In addition, during use of the cylindrical battery cell 20, the effect of resisting the expansion of the electrode assembly 22 by the body portion 231 of the first current collection member 23 can be improved.

In some embodiments, still referring to FIG. 5, FIG. 6, and FIG. 7, 0.75 ≤ D₁ / D₇ ≤ 0.9.

In this embodiment, on one hand, the inner diameter of the protrusion 2121 is set to be greater than or equal to 0.75 times of the outer diameter of the electrode assembly 22, to further improve an area of the regions on the electrode assembly 22 that are provided corresponding to the inner side of the protrusion 2121 in the thickness direction X of the first wall. In this way, the obstruction caused by the protrusion 2121 to the vent path inside the cylindrical battery cell 20 can be further reduced, thereby facilitating further improving the internal vent smoothness and the pressure relief rate of the cylindrical battery cell 20, and further reducing the risk such as burst or explosion caused to the cylindrical battery cell 20 due to untimely pressure relief. On the other hand, the inner diameter of the protrusion 2121 is set to be less than or equal to 0.9 times of the outer diameter of the electrode assembly 22, to further improve an area of a region in which the electrode assembly 22 and the protrusion 2121 overlap each other in the thickness direction X of the first wall. In this way, the effect of supporting the electrode assembly 22 by the protrusion 2121 by using the body portion 231 is further improved. In addition, during use of the cylindrical battery cell 20, the effect of resisting the expansion of the electrode assembly 22 by the body portion 231 of the first current collection member 23 can be further improved.

According to some embodiments of the present application, referring to FIG. 6, a projection of the pressure relief groove 2111 along the thickness direction X of the first wall is located inside the second cavity 2142. In other words, in the thickness direction X of the first wall, the region in which the pressure relief groove 2111 is provided on the pressure relief component on the first wall 211 adopts a structure disposed corresponding to the second cavity 2142.

In this embodiment, the pressure relief groove 2111 is set to adopt a structure whose projection in the thickness direction X of the first wall is located inside the second cavity 2142, so that the region in which the pressure relief groove 2111 is provided on the pressure relief component on the first wall 211 adopts a structure disposed corresponding to the second cavity 2142 in the thickness direction X of the first wall. In this way, when thermal runaway occurs in the cylindrical battery cell 20 and the pressure relief component splits along at least a part of the pressure relief groove 2111 for pressure relief, it is more convenient to vent the thermal runaway gas in the second cavity 2142, thereby facilitating further improving a venting rate of the thermal runaway gas in the second cavity 2142, and further improving the pressure relief rate of the cylindrical battery cell 20. Therefore, the risk such as burst or explosion caused to the cylindrical battery cell 20 due to untimely pressure relief is further reduced.

According to some embodiments of the present application, referring to FIG. 6, FIG. 8, and FIG. 9, the butt-joint portion 232 may include a connection region 2321 and the elastic region 2322. The connection region 2321 is provided, in the thickness direction X of the first wall, on a side of the main body region 2311 facing the first wall 211. The connection region 2321 is connected to the protrusion 2121. The elastic region 2322 is connected to the connection region 2321 and the main body region 2311. The elastic region 2322 is configured to be deformable when the main body region 2311 and the connection region 2321 approach or move away from each other along the thickness direction X of the first wall.

The body portion 231 of the first current collection member 23 is disposed at an end of the electrode assembly 22 close to the protrusion 2121 in the thickness direction X of the first wall, and the body portion 231 is connected to the first tab 222, to implement electrical connection between the first current collection member 23 and the first tab 222.

The connection region 2321 is provided, in the thickness direction X of the first wall, on the side of the main body region 2311 facing the first wall 211, and the connection region 2321 and the main body region 2311 are arranged spaced away. In other words, the main body region 2311 and the connection region 2321 adopt structures arranged spaced away along the thickness direction X of the first wall, and the connection region 2321 is closer to the first wall 211 than the main body region 2311 in the thickness direction X of the first wall.

The elastic region 2322 adopts a structure connected between the main body region 2311 and the connection region 2321. The elastic region 2322 is configured to be deformable when the main body region 2311 and the connection region 2321 approach or move away from each other along the thickness direction X of the first wall. To be specific, the first current collection member 23 is compressed or stretched in the thickness direction X of the first wall, so that the elastic region 2322 is deformable when the main body region 2311 and the connection region 2321 approach or move away from each other. It should be noted that deformation of the elastic region 2322 may be elastic deformation or plastic deformation.

Optionally, in FIG. 8 and FIG. 9, each connection region 2321 is connected to the main body region 2311 by using the elastic region 2322, and each connection region 2321 is welded to the protrusion 2121. For example, the connection region 2321 adopts an arc structure extending along the circumferential direction of the side wall 212.

Optionally, the body portion 231 and the butt-joint portion 232 of the first current collection member 23 may adopt an integrally formed structure, or may adopt connected structures that are separately disposed. For example, in FIG. 8, the body portion 231 and the butt-joint portion 232 of the first current collection member 23 adopt an integral structure formed by using an integral forming craft such as stamping and trimming.

Similarly, the main body region 2311 and the support region 2312 of the body portion 231 may adopt an integrally formed structure, or may adopt connected structures that are separately disposed. For example, in FIG. 8 and FIG. 9, the main body region 2311 and the support region 2312 of the body portion 231 adopt an integral structure formed by using an integral forming craft such as stamping and trimming.

Similarly, the connection region 2321 and the elastic region 2322 of the butt-joint portion 232 may adopt an integrally formed structure, or may adopt connected structures that are separately disposed. For example, in FIG. 8 and FIG. 9, the connection region 2321 and the elastic region 2322 of the butt-joint portion 232 adopt an integral structure formed by using an integral forming craft such as stamping and trimming.

In this embodiment, the butt-joint portion 232 is provided with the connection region 2321 and the elastic region 2322. The connection region 2321 is connected to the protrusion 2121, and the elastic region 2322 is connected between the main body region 2311 and the connection region 2321, to implement electrical connection between the protrusion 2121 and the body portion 231. The connection region 2321 is provided, in the thickness direction X of the first wall, on the side of the main body region 2311 facing the first wall 211, and the elastic region 2322 is set to adopt a structure that is deformable when the main body region 2311 and the connection region 2321 approach or move away from each other along the thickness direction X of the first wall, so that the elastic region 2322 has a buffering function between the main body region 2311 and the connection region 2321. In this way, during shaking or displacement of the electrode assembly 22, rigid tearing between the main body region 2311 and the connection region 2321, rigid tearing between the main body region 2311 and the electrode assembly 22, and rigid tearing between the connection region 2321 and the protrusion 2121 are relieved, thereby facilitating further reducing a risk of a connection failure between the main body region 2311 and the electrode assembly 22 and a connection failure between the connection region 2321 and the protrusion 2121, and facilitating reducing a phenomenon that the first current collection member 23 is torn and damaged.

In some embodiments, referring to FIG. 8, the elastic region 2322 is bent to form a plurality of bent segments 2322a. The plurality of bent segments 2322a are sequentially connected. The bent segments 2322a located at two ends among the plurality of bent segments 2322a are respectively connected to the main body region 2311 and the connection region 2321.

The elastic region 2322 is bent to form the plurality of bent segments 2322a, and the plurality of bent segments 2322a are sequentially connected. In other words, the elastic region 2322 adopts a structure in which a local region is bent, so that the elastic region 2322 is formed into the plurality of sequentially connected bent segments 2322a, and an acute angle, a right angle, or an obtuse angle is provided between every two adjacent ones of the bent segments 2322a.

For example, in FIG. 8, the elastic region 2322 is bent to form three sequentially connected bent segments 2322a, and the two bent segments 2322a located at two ends among the three bent segments 2322a are respectively connected to the main body region 2311 and the connection region 2321. Certainly, in another embodiment, a quantity of bent segments 2322a formed by bending the elastic region 2322 may alternatively be two, four, five, six, or the like.

In this embodiment, the elastic region 2322 is set to adopt a structure bent to form the plurality of sequentially connected bent segments 2322a, and the bent segments 2322a located at the two ends among the plurality of bent segments 2322a are respectively connected to the main body region 2311 and the connection region 2321. In this way, a deformation capability of the elastic region 2322 when the main body region 2311 and the connection region 2321 approach or move away from each other along the thickness direction X of the first wall is improved, to further improve a buffering effect of the elastic region 2322 between the main body region 2311 and the connection region 2321, thereby further reducing the phenomena of the rigid tearing between the main body region 2311 and the connection region 2321, the rigid tearing between the main body region 2311 and the electrode assembly 22, and the rigid tearing between the connection region 2321 and the protrusion 2121.

According to some embodiments of the present application, referring to FIG. 8 and FIG. 9, in the projection plane perpendicular to the thickness direction X of the first wall, an orthographic projection of the connection region 2321 extends along the circumferential direction of the side wall 212 and is located on a circumferential side of an orthographic projection of the main body region 2311, and the orthographic projection of the connection region 2321 and the orthographic projection of the main body region 2311 are arranged spaced away in the radial direction of the cylindrical battery cell 20, to form a vent gap 234 between the orthographic projection of the connection region 2321 and the orthographic projection of the main body region 2311.

In this embodiment, in the projection plane perpendicular to the thickness direction X of the first wall, the orthographic projection of the connection region 2321 and the orthographic projection of the main body region 2311 are set to adopt a structure in which the vent gap 234 is formed in the radial direction of the cylindrical battery cell 20, so that the thermal runaway gas inside the cylindrical battery cell 20 is vented after entering, through the vent gap 234 between the connection region 2321 and the main body region 2311, a side of the first current collection member 23 facing the first wall 211. This helps reduce obstruction caused by the first current collection member 23 to the vent path inside the cylindrical battery cell 20, thereby improving the internal vent smoothness and the pressure relief rate of the cylindrical battery cell 20.

In some embodiments, with reference to FIG. 6 and FIG. 9, at least a part of the projection of the pressure relief groove 2111 along the thickness direction X of the first wall is located in the vent gap 234. In other words, at least a part of the region in which the pressure relief groove 2111 is provided on the pressure relief component on the first wall 211 adopts a structure disposed corresponding to the vent gap 234 between the main body region 2311 and the connection region 2321 in the thickness direction X of the first wall.

In this embodiment, the pressure relief groove 2111 is set to adopt a structure whose projection in the thickness direction X of the first wall is at least partially located in the vent gap 234, so that the pressure relief groove 2111 adopts a structure at least partially disposed, in the thickness direction X of the first wall, corresponding to the vent gap 234 between the connection region 2321 and the main body region 2311. In this way, the internal vent smoothness and pressure relief smoothness of the cylindrical battery cell 20 are further improved, thereby improving the pressure relief rate of the cylindrical battery cell 20. Further, risks such as fire and explosion caused to the cylindrical battery cell 20 due to untimely pressure relief are reduced, to improve the use reliability of the cylindrical battery cell 20.

According to some embodiments of the present application, referring to FIG. 8 and FIG. 9, a diameter of an orthographic projection of an outer edge of the connection region 2321 is D₈, an orthographic projection of the elastic region 2322 extends along the radial direction of the cylindrical battery cell 20, and a length of the orthographic projection of the elastic region 2322 is L₆ in the projection plane perpendicular to the thickness direction X of the first wall. 1/15 ≤ L₆ / D₈ ≤ 1/3.

In the projection plane perpendicular to the thickness direction X of the first wall, the orthographic projection of the connection region 2321 extends along the circumferential direction of the side wall 212 and is located on the circumferential side of the orthographic projection of the main body region 2311 in the projection plane perpendicular to the thickness direction X of the first wall. In other words, the orthographic projection of the connection region 2321 in the thickness direction X of the first wall adopts an arc structure or annular structure extending along the circumferential direction of the side wall 212, and the connection region 2321 is disposed surrounding the main body region 2311. For example, in FIG. 9, the first current collection member 23 is provided with the plurality of butt-joint portions 232, the connection regions 2321 of the plurality of butt-joint portions 232 are arranged spaced away along the circumferential direction of the side wall 212 and disposed surrounding the main body region 2311, and the connection regions 2321 each adopt an arc structure extending along the circumferential direction of the side wall 212. Correspondingly, in the projection plane perpendicular to the thickness direction X of the first wall, the diameter D₈ of the orthographic projection of the outer edge of the connection region 2321 is a diameter of a circle on which the orthographic projection of the outer edge of the connection region 2321 is located.

In the projection plane perpendicular to the thickness direction X of the first wall, the orthographic projection of the connection region 2321 and the orthographic projection of the main body region 2311 are arranged spaced away in the radial direction of the cylindrical battery cell 20, and the orthographic projection of the elastic region 2322 extends along the radial direction of the cylindrical battery cell 20. In other words, the orthographic projection of the connection region 2321 in the thickness direction X of the first wall and the orthographic projection of the main body region 2311 in the thickness direction X of the first wall are arranged spaced away in the radial direction of the cylindrical battery cell 20, and the elastic region 2322 is connected between the connection region 2321 and the main body region 2311 along the radial direction of the cylindrical battery cell 20.

Optionally, in the projection plane perpendicular to the thickness direction X of the first wall, a ratio of the length L₆ of the orthographic projection of the elastic region 2322 in the radial direction of the cylindrical battery cell 20 to the diameter D₈ of the orthographic projection of the outer edge of the connection region 2321 may be 1/15, 0.07, 0.08, 0.09, 0.1, 0.11, 0.12, 0.13, 1/7, 0.15, 0.16, 0.18, 0.2, 0.22, 0.23, 0.25, 0.26, 0.28, 0.3, 0.31, 0.32, 1/3, or the like.

In this embodiment, in the projection plane perpendicular to the thickness direction X of the first wall, the orthographic projection of the connection region 2321 and the orthographic projection of the main body region 2311 are set to adopt structures arranged spaced away in the radial direction of the cylindrical battery cell 20, and a ratio of the length of the elastic region 2322 of the first current collection member 23 in the radial direction of the cylindrical battery cell 20 to the diameter of the orthographic projection of the outer edge of the connection region 2321 is set to range from 1/15 to 1/3. Therefore, on one hand, a phenomena that the elastic region 2322 occupies an excessively small dimension in the radial direction of the cylindrical battery cell 20 can be relieved, thereby facilitating enlarging a vent space between the connection region 2321 and the main body region 2311, so that the thermal runaway gas inside the cylindrical battery cell 20 is vented, after passing through the vent space between the connection region 2321 and the main body region 2311, in the region in which the pressure relief groove 2111 is provided on the pressure relief component on the first wall 211. In this way, the internal vent smoothness of the cylindrical battery cell 20 is improved, to improve the pressure relief rate of the cylindrical battery cell 20, thereby reducing the risk such as burst or explosion caused to the cylindrical battery cell 20 due to untimely pressure relief. On the other hand, a phenomenon that support strength of the elastic region 2322 between the main body region 2311 and the connection region 2321 is insufficient because the elastic region 2322 occupies an excessively large dimension in the radial direction of the cylindrical battery cell 20 can be relieved. In this way, an effect of supporting the electrode assembly 22 by the first current collection member 23 and an effect of resisting expansion of the electrode assembly 22 during use can be effectively improved, to relieve a phenomenon such as excessive expansion or misplacement of the electrode assembly 22, thereby facilitating improving the use stability and reliability of the cylindrical battery cell 20.

In some embodiments, referring to FIG. 9, 1/7 ≤ L₆ / D₈ ≤ 1/4.

In this embodiment, in the projection plane perpendicular to the thickness direction X of the first wall, the ratio of the length of the elastic region 2322 of the first current collection member 23 in the radial direction of the cylindrical battery cell 20 to the diameter of the orthographic projection of the outer edge of the connection region 2321 is further set to range from 1/7 to 1/4. Therefore, on one hand, the phenomena that the elastic region 2322 occupies an excessively small dimension in the radial direction of the cylindrical battery cell 20 can be further relieved, thereby facilitating further enlarging the vent space between the connection region 2321 and the main body region 2311, so that the thermal runaway gas inside the cylindrical battery cell 20 is vented, after passing through the vent space between the connection region 2321 and the main body region 2311, in the region in which the pressure relief groove 2111 is provided on the pressure relief component on the first wall 211. In this way, the internal vent smoothness of the cylindrical battery cell 20 is further improved, to further improve the pressure relief rate of the cylindrical battery cell 20, thereby further reducing the risk such as burst or explosion caused to the cylindrical battery cell 20 due to untimely pressure relief. On the other hand, the phenomenon that the support strength of the elastic region 2322 between the main body region 2311 and the connection region 2321 is insufficient because the elastic region 2322 occupies an excessively large dimension in the radial direction of the cylindrical battery cell 20 can be further relieved. In this way, the effect of supporting the electrode assembly 22 by the first current collection member 23 and the effect of resisting the expansion of the electrode assembly 22 during use can be further improved, to further relieve the phenomenon such as excessive expansion or misplacement of the electrode assembly 22, thereby further facilitating improving the use stability and reliability of the cylindrical battery cell 20.

In some embodiments, still referring to FIG. 9, 3 mm ≤ L₆ ≤ 15 mm.

Optionally, in the projection plane perpendicular to the thickness direction X of the first wall, the length L₆ of the orthographic projection of the elastic region 2322 in the radial direction of the cylindrical battery cell 20 may be 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, 10.5 mm, 11 mm, 11.5 mm, 12 mm, 12.5 mm, 13 mm, 13.5 mm, 14 mm, 14.5 mm, 15 mm, or the like.

In this embodiment, in the projection plane perpendicular to the thickness direction X of the first wall, the length of the elastic region 2322 of the first current collection member 23 in the radial direction of the cylindrical battery cell 20 is set to range from 3 mm to 15 mm. On one hand, when the length of the elastic region 2322 in the radial direction of the cylindrical battery cell 20 is set to greater than or equal to 3 mm, the vent space between the connection region 2321 and the main body region 2311 is enlarged, so that the thermal runaway gas inside the cylindrical battery cell 20 is vented, after passing through the vent space between the connection region 2321 and the main body region 2311, in the region in which the pressure relief groove 2111 is provided on the pressure relief component on the first wall 211, thereby facilitating improving the internal vent smoothness of the cylindrical battery cell 20. On the other hand, when the length of the elastic region 2322 in the radial direction of the cylindrical battery cell 20 is set to less than or equal to 15 mm, the phenomenon that the support strength of the elastic region 2322 between the main body region 2311 and the connection region 2321 is insufficient because the elastic region 2322 is excessively long can be relieved, thereby facilitating improving the effect of supporting the electrode assembly 22 by the first current collection member 23 and the effect of resisting the expansion of the electrode assembly 22 during use, to further relieve the phenomenon such as excessive expansion or misplacement of the electrode assembly 22.

According to some embodiments of the present application, with reference to FIG. 6 and FIG. 9, a thickness of the elastic region 2322 is T₂. A width of the orthographic projection of the elastic region 2322 in a direction perpendicular to the extension direction of the orthographic projection of the elastic region 2322 in the projection plane perpendicular to the thickness direction X of the first wall is W. 0.3 mm² ≤ W × T₂ ≤ 8 mm².

The thickness T₂ of the elastic region 2322 is a thickness of any position of the elastic region 2322. In an embodiment in which the elastic region 2322 includes the plurality of sequentially connected bent segments 2322a, thicknesses of the bent segments 2322a are all T₂.

Optionally, a product of W and T₂ may be 0.3 mm², 0.4 mm², 0.5 mm², 0.6 mm², 0.7 mm², 0.8 mm², 0.9 mm², 1 mm², 1.5 mm², 2 mm², 2.5 mm², 3 mm², 3.5 mm², 4 mm², 4.5 mm², 5 mm², 5.5 mm², 6 mm², 6.5 mm², 7 mm², 7.5 mm², 8 mm², or the like.

In this embodiment, a product of W and T₂ is set to range from 0.3 mm² to 8 mm². On one hand, the product of W and T₂ is set to be less than or equal to 8 mm², so that a phenomenon of excessively large deformation difficulty of the elastic region 2322 caused by excessively large W and T₂ can be relieved. In this way, the deformation capability of the elastic region 2322 when the main body region 2311 and the connection region 2321 approach or move away from each other along the thickness direction of the first wall is improved, so that the elastic region 2322 has a good buffering function between the main body region 2311 and the connection region 2321, and further, during shaking or displacement of the electrode assembly 22, the phenomena of the rigid tearing between the main body region 2311 and the connection region 2321, the rigid tearing between the main body region 2311 and the electrode assembly 22, and the rigid tearing between the connection region 2321 and the protrusion 2121 are reduced. On the other hand, the product of W and T₂ is set to be greater than or equal to 0.3 mm², so that structural strength of the elastic region 2322 is improved, thereby facilitating relieving the phenomenon that the support strength of the elastic region 2322 between the main body region 2311 and the connection region 2321 is insufficient, to improve the effect of supporting the electrode assembly 22 by the first current collection member 23 and the effect of resisting the expansion of the electrode assembly 22 during use. In addition, an overcurrent capability of the elastic region 2322 is improved, thereby facilitating improving a current guide effect and a current guide requirement of the first current collection member 23.

In some embodiments, referring to FIG. 8 and FIG. 9, 2 mm ≤ W ≤ 10 mm.

Optionally, the width W of the projection of the elastic region 2322 in the thickness direction X of the first wall may be 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, or the like.

In this embodiment, the width of the projection of the elastic region 2322 of the first current collection member 23 in the thickness direction X of the first wall is set to range from 2 mm to 10 mm. On one hand, the width of the projection of the elastic region 2322 in the thickness direction X of the first wall is set to be greater than or equal to 2 mm, so that the overcurrent capability of the elastic region 2322 is improved, to improve the current guide effect of the first current collection member 23. In addition, the structural strength of the elastic region 2322 is improved, thereby facilitating relieving the phenomenon that the support strength of the elastic region 2322 between the main body region 2311 and the connection region 2321 is insufficient, to improve the effect of supporting the electrode assembly 22 by the first current collection member 23 and the effect of resisting the expansion of the electrode assembly 22 during use. On the other hand, the width of the projection of the elastic region 2322 in the thickness direction X of the first wall is set to be less than or equal to 10 mm, so that the deformation capability of the elastic region 2322 when the main body region 2311 and the connection region 2321 approach or move away from each other along the thickness direction X of the first wall can be effectively improved, and therefore, the elastic region 2322 has a good buffering function between the main body region 2311 and the connection region 2321. In this way, during shaking or displacement of the electrode assembly 22, the phenomena of the rigid tearing between the main body region 2311 and the connection region 2321, the rigid tearing between the main body region 2311 and the electrode assembly 22, and the rigid tearing between the connection region 2321 and the protrusion 2121 are reduced.

In some embodiments, referring to FIG. 9, 3 mm ≤ W ≤ 5 mm.

In this embodiment, the width of the projection of the elastic region 2322 of the first current collection member 23 in the thickness direction X of the first wall is further set to range from 3 mm to 5 mm. On one hand, the width of the projection of the elastic region 2322 in the thickness direction X of the first wall is set to be greater than or equal to 3 mm, so that the overcurrent capability of the elastic region 2322 is further improved, to further improve the current guide effect of the first current collection member 23. In addition, the structural strength of the elastic region 2322 is further improved, thereby facilitating further relieving the phenomenon that the support strength of the elastic region 2322 between the main body region 2311 and the connection region 2321 is insufficient, to further improve the effect of supporting the electrode assembly 22 by the first current collection member 23 and the effect of resisting the expansion of the electrode assembly 22 during use. On the other hand, the width of the projection of the elastic region 2322 in the thickness direction X of the first wall is set to be less than or equal to 5 mm, so that the deformation capability of the elastic region 2322 when the main body region 2311 and the connection region 2321 approach or move away from each other along the thickness direction X of the first wall is further improved, and therefore, the buffering function of the elastic region 2322 between the main body region 2311 and the connection region 2321 is improved. In this way, during shaking or displacement of the electrode assembly 22, the phenomena of the rigid tearing between the main body region 2311 and the connection region 2321, the rigid tearing between the main body region 2311 and the electrode assembly 22, and the rigid tearing between the connection region 2321 and the protrusion 2121 are further reduced.

According to some embodiments of the present application, referring to FIG. 6 and FIG. 8, the thickness of the elastic region 2322 is T₂, and 0.15 mm ≤ T₂ ≤ 0.8 mm.

Optionally, the thickness T₂ of the elastic region 2322 may be 0.15 mm, 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, or the like.

In this embodiment, the thickness of the elastic region 2322 of the butt-joint portion 232 is set to range from 0.15 mm to 0.8 mm. On one hand, the thickness of the elastic region 2322 is set to be greater than or equal to 0.15 mm, so that the overcurrent capability of the elastic region 2322 is improved, to improve the current guide effect of the first current collection member 23. In addition, the structural strength of the elastic region 2322 is improved, thereby facilitating relieving the phenomenon that the support strength of the elastic region 2322 between the main body region 2311 and the connection region 2321 is insufficient, to improve the effect of supporting the electrode assembly 22 by the first current collection member 23 and the effect of resisting the expansion of the electrode assembly 22 during use. On the other hand, the thickness of the elastic region 2322 is set to be less than or equal to 0.8 mm, so that the deformation capability of the elastic region 2322 when the main body region 2311 and the connection region 2321 approach or move away from each other along the thickness direction X of the first wall can be effectively improved, and therefore, the elastic region 2322 has a good buffering function between the main body region 2311 and the connection region 2321. In this way, during shaking or displacement of the electrode assembly 22, the phenomena of the rigid tearing between the main body region 2311 and the connection region 2321, the rigid tearing between the main body region 2311 and the electrode assembly 22, and the rigid tearing between the connection region 2321 and the protrusion 2121 are reduced. In addition, a space occupied by the elastic region 2322 in the thickness direction X of the first wall is saved, thereby facilitating improving the internal space utilization of the cylindrical battery cell 20.

In some embodiments, still referring to FIG. 6 and FIG. 8, 0.3 mm ≤ T₂ ≤ 0.5 mm.

In this embodiment, the thickness of the elastic region 2322 of the butt-joint portion 232 is further set to range from 0.3 mm to 0.5 mm. On one hand, the thickness of the elastic region 2322 is set to be greater than or equal to 0.3 mm, so that the overcurrent capability of the elastic region 2322 is further improved, to further improve the current guide effect of the first current collection member 23. In addition, the structural strength of the elastic region 2322 is further improved, thereby facilitating further relieving the phenomenon that the support strength of the elastic region 2322 between the main body region 2311 and the connection region 2321 is insufficient, to further improve the effect of supporting the electrode assembly 22 by the first current collection member 23 and the effect of resisting the expansion of the electrode assembly 22 during use. On the other hand, the thickness of the elastic region 2322 is set to be less than or equal to 0.5 mm, so that the deformation capability of the elastic region 2322 when the main body region 2311 and the connection region 2321 approach or move away from each other along the thickness direction X of the first wall is further improved, and therefore, the buffering function of the elastic region 2322 between the main body region 2311 and the connection region 2321 is further improved. In this way, during shaking or displacement of the electrode assembly 22, the phenomena of the rigid tearing between the main body region 2311 and the connection region 2321, the rigid tearing between the main body region 2311 and the electrode assembly 22, and the rigid tearing between the connection region 2321 and the protrusion 2121 are further reduced. In addition, the space occupied by the elastic region 2322 in the thickness direction X of the first wall is further saved, thereby facilitating further improving the internal space utilization of the cylindrical battery cell 20.

According to some embodiments of the present application, referring to FIG. 6 and FIG. 8, the thickness of the elastic region 2322 is less than a thickness of the main body region 2311.

In this embodiment, the thickness of the elastic region 2322 is set to be less than the thickness of the main body region 2311, so that manufacturing costs and manufacturing difficulty of the first current collection member 23 are reduced while the deformation capability of the elastic region 2322 when the main body region 2311 and the connection region 2321 approach or move away from each other along the thickness direction X of the first wall is improved, and therefore, the elastic region 2322 has a good buffering function between the main body region 2311 and the connection region 2321.

According to some embodiments of the present application, still referring to FIG. 6 and FIG. 8, the thickness of the elastic region 2322 is less than a thickness of the connection region 2321.

In this embodiment, the thickness of the elastic region 2322 is set to be less than the thickness of the connection region 2321, so that manufacturing costs and manufacturing difficulty of the first current collection member 23 are reduced while the deformation capability of the elastic region 2322 when the main body region 2311 and the connection region 2321 approach or move away from each other along the thickness direction X of the first wall is improved, and therefore, the elastic region 2322 has a good buffering function between the main body region 2311 and the connection region 2321.

According to some embodiments of the present application, referring to FIG. 5 and FIG. 6, the connection region 2321 is provided on a side of the protrusion 2121 facing away from the electrode assembly 22 and is connected to the protrusion 2121 along the thickness direction X of the first wall.

The connection region 2321 is located on a side of the protrusion 2121 facing the first wall 211 in the thickness direction X of the first wall, so that the connection region 2321 and the body portion 231 are respectively located on two sides of the protrusion 2121 in the thickness direction X of the first wall. In addition, the elastic region 2322 is connected between the connection region 2321 and the main body region 2311 of the body portion 231, so that the elastic region 2322 is located on an inner circumferential side of the protrusion 2121, and the elastic region 2322 and the protrusion 2121 share some space in the thickness direction X of the first wall. Certainly, in another embodiment, the connection region 2321 may alternatively adopt a structure located on a side of the protrusion 2121 facing the electrode assembly 22. Correspondingly, the connection region 2321 is connected to the side of the protrusion 2121 facing the electrode assembly 22.

In this embodiment, the connection region 2321 of the butt-joint portion 232 of the first current collection member 23 is provided on the side of the protrusion 2121 facing away from the electrode assembly 22 in the thickness direction X of the first wall, so that the connection region 2321 and the body portion 231 adopt structures that are respectively located on two sides of the protrusion 2121 in the thickness direction X of the first wall, and the connection region 2321 and the side of the protrusion 2121 facing away from the electrode assembly 22 are connected to each other. When the cylindrical battery cell 20 of this structure is used, on one hand, the first current collection member 23 and the protrusion 2121 share a part of space in the thickness direction X of the first wall, thereby facilitating improving the internal space utilization of the cylindrical battery cell 20, to improve the energy density of the cylindrical battery cell 20. On the other hand, assembly connection between the connection region 2321 and the protrusion 2121 is not affected by interference of the electrode assembly 22, thereby facilitating reducing assembly difficulty between the connection region 2321 of the butt-joint portion 232 and the protrusion 2121, and optimizing a production craft of the cylindrical battery cell 20.

According to some embodiments of the present application, referring to FIG. 4, FIG. 5, and FIG. 6, a groove 2123 is formed, along the radial direction of the cylindrical battery cell 20, on a side of the side wall 212 facing away from the electrode assembly 22 and at a position corresponding to the protrusion 2121.

For example, the protrusion 2121 formed on the side of the side wall 212 facing the electrode assembly 22 adopts a structure formed by using a stamping craft, to form the protrusion 2121 on a surface on the side of the side wall 212 facing the electrode assembly 22, and form the groove 2123 on the side of the side wall 212 facing away from the electrode assembly 22 and at the position corresponding to the protrusion 2121. Certainly, a manner of forming the protrusion 2121 on the side of the side wall 212 facing the electrode assembly 22 is not limited thereto. In another embodiment, the protrusion 2121 formed on the side of the side wall 212 facing the electrode assembly 22 may alternatively be formed by using a processing craft such as casting or milling.

It should be noted that, in an embodiment in which the protrusion 2121 adopts an annular structure extending along the circumferential direction of the side wall 212, the groove 2123 correspondingly adopts an annular groove structure also extending along the circumferential direction of the side wall 212.

In this embodiment, the groove 2123 is formed on the side of the side wall 212 facing away from the electrode assembly 22 and at the position corresponding to the protrusion 2121, so that the protrusion 2121 formed on a side of the side wall 212 facing the electrode assembly 22 adopts a structure formed through stamping processing, to form the protrusion 2121 on the side of the side wall 212 facing the electrode assembly 22, and form the groove 2123 on the other side and at the position corresponding to the protrusion 2121. When the cylindrical battery cell 20 of this structure is used, on one hand, difficulty in forming the protrusion 2121 on the side of the side wall 212 facing the electrode assembly 22 is reduced, thereby facilitating improving production efficiency of the cylindrical battery cell 20. On the other hand, the interior of the protrusion 2121 adopts a hollow structure, so that the protrusion 2121 has an elastic deformation capability, thereby facilitating relieving rigid tearing between the butt-joint portion 232 and the protrusion 2121, to reduce a risk of a connection failure between the butt-joint portion 232 and the protrusion 2121.

According to some embodiments of the present application, referring to FIG. 4, FIG. 5, and FIG. 6, the shell 21 further includes a second wall 213. The second wall 213 is provided opposite to the first wall 211 in the thickness direction X of the first wall. The second wall 213 and the side wall 212 are integrally formed. One end of the side wall 212 along the thickness direction X of the first wall is connected to the second wall 213, and an other end of the side wall 212 along the thickness direction X of the first wall encloses to define an opening 2122. The side wall 212 and the second wall 213 jointly define the accommodating cavity 214. The electrode assembly 22 is accommodated in the accommodating cavity 214. The first wall 211 seals the opening 2122.

The second wall 213 is provided opposite to the first wall 211 in the thickness direction X of the first wall. In other words, the first wall 211 and the second wall 213 are respectively the end walls of the two ends of the shell 21 in the thickness direction X of the first wall, so that the first wall 211 and the second wall 213 are respectively located at the two ends of the side wall 212 in the thickness direction X of the first wall.

The second wall 213 and the side wall 212 are integrally formed. To be specific, the side wall 212 and the second wall 213 of the shell 21 adopt a structure formed by using an integral forming craft, such as stamping or casting.

The first wall 211 seals the opening 2122. In other words, the first wall 211 is provided at the opening 2122 at the end of the side wall 212 away from the second wall 213 in the thickness direction X of the first wall and is in sealing connection with the side wall 212. Optionally, there are a variety of connection structures between the first wall 211 and the side wall 212, for example, welding or snapping.

In this embodiment, the side wall 212 of the shell 21 is set to enclose at an end away from the second wall 213 in the thickness direction X of the first wall, to define the opening 2122, and the first wall 211 adopts a structure sealing the opening 2122, so that the first current collection member 23 adopts a structure disposed, in the thickness direction X of the first wall, on a side of the electrode assembly 22 facing the opening 2122. In this way, difficulty in assembling the support region 2312 of the body portion 231 of the first current collection member 23 between the electrode assembly 22 and the protrusion 2121 is reduced, and the connection difficulty between the butt-joint portions 232 and the protrusion 2121 is reduced. Therefore, assembly difficulty of the cylindrical battery cell 20, and the production craft of the cylindrical battery cell 20 can be optimized, thereby facilitating improving the production efficiency of the cylindrical battery cell 20.

In some embodiments, referring to FIG. 6 and FIG. 7, an end of the side wall 212 away from the second wall 213 in the thickness direction X of the first wall is bent to form a flange portion 2124. The flange portion 2124 encloses to define the opening 2122. A part of the first wall 211 is located between the flange portion 2124 and the protrusion 2121 along the thickness direction X of the first wall. The flange portion 2124 and the protrusion 2121 are configured to cooperate to clamp the first wall 211.

The flange portion 2124 adopts a flange structure formed by bending the end of the side wall 212 away from the second wall 213 in the thickness direction X of the first wall to a side close to the accommodating cavity 214. The flange portion 2124 encloses to define the opening 2122. To be specific, the flange portion 2124 adopts an annular structure, to form the opening 2122 on an inner circumferential side of the flange portion 2124.

In this embodiment of the present application, an outer edge of the first wall 211 extends between the flange portion 2124 and the protrusion 2121, so that the flange portion 2124 and the protrusion 2121 can cooperate to clamp and assemble a part of the first wall 211, to implement assembly and connection between the first wall 211 and the side wall 212.

In this embodiment, the end of the side wall 212 away from the second wall 213 along the thickness direction X of the first wall is bent to form the flange portion 2124, and the part of the first wall 211 is set to be located between the protrusion 2121 and the flange portion 2124 in the thickness direction X of the first wall, so that the protrusion 2121 and the flange portion 2124 assemble and fix the first wall 211, to implement assembly between the first wall 211 and the side wall 212. When the cylindrical battery cell 20 of this structure is used, assembly difficulty between the first wall 211 and the side wall 212 is reduced, to improve the production efficiency of the cylindrical battery cell 20.

According to some embodiments of the present application, referring to FIG. 4, FIG. 6, and FIG. 7, the cylindrical battery cell 20 may further include a sealing member 29. The sealing member 29 is at least partially disposed between the side wall 212 and the first wall 211 in the radial direction of the cylindrical battery cell 20. The sealing member 29 is configured to seal a gap between the first wall 211 and the side wall 212.

The sealing member 29 is at least partially disposed between the side wall 212 and the first wall 211 in the radial direction of the cylindrical battery cell 20. To be specific, the sealing member 29 is at least partially located between an outer circumferential surface of the first wall 211 and the inner circumferential surface of the side wall 212, so that the sealing member 29 can seal a gap between the outer circumferential surface of the first wall 211 and the inner circumferential surface of the side wall 212.

Optionally, the sealing member 29 adopts an insulating material, so that the sealing member 29 can further function to insulate and isolate the first wall 211 from the side wall 212. For example, a material of the sealing member 29 may be rubber, silica, or plastic.

In this embodiment, the cylindrical battery cell 20 is further provided with the sealing member 29. The sealing member 29 is at least partially disposed between the side wall 212 and the first wall 211 in the radial direction of the cylindrical battery cell 20, so that the sealing member 29 seals the gap between the first wall 211 and the side wall 212, to reduce a risk such as leakage during use of the cylindrical battery cell 20, thereby facilitating improving the use stability and reliability of the cylindrical battery cell 20.

In some embodiments, referring to FIG. 6 and FIG. 7, the sealing member 29 is partially disposed between the first wall 211 and the protrusion 2121 along the thickness direction X of the first wall. In other words, the sealing member 29 is partially located between the outer circumferential surface of the first wall 211 and the inner circumferential surface of the side wall 212, and the sealing member 29 partially extends between the first wall 211 and the protrusion 2121, so that the sealing member 29 is partially located between the first wall 211 and the protrusion 2121 in the thickness direction X of the first wall, and the sealing member 29 can further separate the first wall 211 from the protrusion 2121.

It should be noted that, in an embodiment in which the connection region 2321 of the butt-joint portion 232 of the first current collection member 23 is located on the side of the protrusion 2121 facing the first wall 211 and is welded to the protrusion 2121, referring to FIG. 6, the sealing member 29 is partially located between the connection region 2321 and the first wall 211, so that the sealing member 29 can further separate the connection region 2321 from the first wall 211.

In this embodiment, the sealing member 29 partially extends between the first wall 211 and the protrusion 2121, so that the sealing member 29 can further seal a gap between the first wall 211 and the protrusion 2121, thereby facilitating further improving an effect of sealing the gap between the first wall 211 and the side wall 212 by the sealing member 29. In addition, the sealing member 29 can be clamped by using the protrusion 2121 and the first wall 211, thereby facilitating improving assembly stability of the sealing member 29.

In some embodiments, still referring to FIG. 6 and FIG. 7, the sealing member 29 is partially disposed between the first wall 211 and the flange portion 2124 along the thickness direction X of the first wall. In other words, the sealing member 29 is partially located between the outer circumferential surface of the first wall 211 and the inner circumferential surface of the side wall 212, and the sealing member 29 partially extends between the first wall 211 and the flange portion 2124, so that the sealing member 29 is partially located between the first wall 211 and the flange portion 2124 in the thickness direction X of the first wall, and the sealing member 29 can further separate the first wall 211 from the flange portion 2124.

Optionally, in FIG. 6, the sealing member 29 adopts an annular structure disposed surrounding the first wall 211. The sealing member 29 may include a first part, a second part, and a third part that are arranged along the thickness direction X of the first wall and that are sequentially connected. The first part is located between the protrusion 2121 and the first wall 211 in the thickness direction X of the first wall, the second part is located between the outer circumferential surface of the first wall 211 and the inner circumferential surface of the side wall 212, and the third part is located between the flange portion 2124 and the first wall 211 in the thickness direction X of the first wall.

In this embodiment, the sealing member 29 partially extends between the first wall 211 and the flange portion 2124, so that the sealing member 29 can further seal a gap between the first wall 211 and the flange portion 2124, thereby facilitating further improving an effect of sealing the gap between the first wall 211 and the side wall 212 by the sealing member 29. In addition, the sealing member 29 can be clamped by using the flange portion 2124 and the first wall 211, thereby facilitating improving assembly stability of the sealing member 29.

Certainly, a structure of the cylindrical battery cell 20 is not only limited thereto. In some embodiments, the cylindrical battery cell 20 may alternatively adopt another structure. For examples, the side wall 212 and the first wall 211 are integrally formed. One end of the side wall 212 along the thickness direction X of the first wall is connected to the first wall 211, and an other end of the side wall 212 along the thickness direction X of the first wall encloses to define the opening 2122. The side wall 212 and the first wall 211 jointly define the accommodating cavity 214. The electrode assembly 22 is accommodated in the accommodating cavity 214. The shell 21 further includes the second wall 213. The second wall 213 is provided opposite to the first wall 211 in the thickness direction X of the first wall, and the second wall 213 seals the opening 2122.

The side wall 212 and the first wall 211 are integrally formed. To be specific, the side wall 212 and the first wall 211 of the shell 21 adopt a structure formed by using an integral forming craft, such as stamping or casting.

One end of the side wall 212 is connected to the first wall 211, the other end encloses to define the opening 2122, and the second wall 213 seals the opening 2122. In other words, the opening 2122 of the side wall 212 is formed at an end of the side wall 212 away from the first wall 211 in the thickness direction X of the first wall.

Optionally, there are a variety of connection structures between the second wall 213 and the side wall 212, for example, welding or snapping.

In this embodiment, the first wall 211 and the side wall 212 are set to adopt an integrally formed structure, an end of the side wall 212 away from the first wall 211 in the thickness direction X of the first wall encloses to define the opening 2122 for assembly of the electrode assembly 22, and the second wall 213 seals the opening 2122. When the cylindrical battery cell 20 of this structure is used, after the protrusion 2121 is first formed on the inner circumferential surface of the side wall 212, the electrode assembly 22 is assembled into the accommodating cavity 214 jointly formed by the side wall 212 and the first wall 211, thereby facilitating reducing a damage caused by the protrusion 2121 to the electrode assembly 22 during forming, thereby improving production quality of the cylindrical battery cell 20.

According to some embodiments of the present application, referring to FIG. 6 and FIG. 7, the protrusion 2121 adopts an annular structure extending along the circumferential direction of the side wall 212. In other words, the protrusion 2121 adopts a closed-loop circular structure extending along the circumferential direction of the side wall 212.

In this embodiment, the protrusion 2121 is set to adopt a closed-loop annular structure, so that on one hand, an effect of supporting the electrode assembly 22 by the protrusion 2121 by using the first current collection member 23 can be improved, and on the other hand, the protrusion 2121 can be connected to the butt-joint portion 232 at any position in a circumferential direction of the protrusion 2121, thereby facilitating reducing positioning difficulty and assembly difficulty between the butt-joint portion 232 and the protrusion 2121.

According to some embodiments of the present application, referring to FIG. 6 and FIG. 7, the pressure relief groove 2111 adopts an annular structure extending along the circumferential direction of the side wall 212. In other words, the pressure relief groove 2111 adopts a closed-loop circular structure extending along the circumferential direction of the side wall 212.

In this embodiment, the pressure relief groove 2111 is set to adopt a closed-loop annular structure, so that a region that is of the pressure relief component and that is located in the pressure relief groove 2111 is entirely dislodged during pressure relief of the cylindrical battery cell 20, thereby facilitating improving a pressure relief area of the cylindrical battery cell 20, to improve the pressure relief rate of the cylindrical battery cell 20.

According to some embodiments of the present application, referring to FIG. 6 and FIG. 7, the pressure relief component and the first wall 211 are integrally formed. In other words, the pressure relief component and the first wall 211 adopt an integral structure, and the pressure relief component is a part of the first wall 211. Correspondingly, the pressure relief groove 2111 adopts a structure directly provided on the first wall 211, so that the first wall 211 is configured to split along at least the part of the pressure relief groove 2111 during pressure relief of the cylindrical battery cell 20, to release the pressure inside the cylindrical battery cell 20.

In this embodiment, the pressure relief component is set to adopt a structure integrally formed with the first wall 211, so that the pressure relief component is a part of the first wall 211, and therefore, the pressure relief groove 2111 is a structure directly provided on the first wall 211. In this way, a mutual assembly process between the pressure relief component and the first wall 211 does not need to be provided, thereby facilitating optimizing a processing craft of the cylindrical battery cell 20, to improve the production efficiency of the cylindrical battery cell 20.

It should be noted that a structure of the cylindrical battery cell 20 is not only limited thereto. In another embodiment, the cylindrical battery cell 20 may alternatively adopt another structure. For example, the pressure relief component and the first wall 211 are separately disposed, and the pressure relief component is connected to the first wall 211. In other words, the pressure relief component and the first wall 211 are two components independent of each other, and the pressure relief component is connected to the first wall 211. Correspondingly, the pressure relief groove 2111 is provided on the pressure relief component.

In this embodiment, the pressure relief component is set to adopt a structure separately disposed with the first wall 211, so that difficulty in directly processing the pressure relief groove 2111 on the first wall 211 is reduced, and an impact on structural strength of the first wall 211 is reduced.

According to some embodiments of the present application, the present application further provides a battery apparatus 100. The battery apparatus 100 includes the cylindrical battery cell 20 in any one of the foregoing solutions.

Referring to FIG. 2, the battery apparatus 100 may further include a box 10, and the cylindrical battery cell 20 is accommodated in the box 10.

In some embodiments, the box 10 includes a first box body 11 and a second box body 12. The first box body 11 and the second box body 12 cover each other. The first box body 11 and the second box body 12 jointly define the assembly space for accommodating the cylindrical battery cell 20.

Optionally, the second box body 12 is a hollow structure with one end being open, the first box body 11 is a plate-shaped structure, and the first box body 11 covers an open side of the second box body 12, so that the first box body 11 and the second box body 12 jointly define the assembly space. Alternatively, the first box body 11 and the second box body 12 each are a hollow structure with one side being open, and an open side of the first box body 11 covers an open side of the second box body 12.

Certainly, the box 10 formed by the first box body 11 and the second box body 12 is in a variety of shapes, such as cylinder or a cuboid. For example, in FIG. 2, the box 10 adopts a cuboid structure.

Optionally, there is one or more cylindrical battery cells 20 disposed in the box 10. For example, in FIG. 2, a plurality of cylindrical battery cells 20 are disposed in the box 10 of the battery apparatus 100. The plurality of cylindrical battery cells 20 are connected in series, in parallel, or in series-parallel. The series-parallel connection means that both series connection and parallel connection exist among the plurality of cylindrical battery cells 20. The plurality of cylindrical battery cells 20 are directly connected in series, in parallel, or in series-parallel together, and then a whole formed by the plurality of cylindrical battery cells 20 is accommodated in the box 10. Certainly, the battery apparatus 100 may alternatively be in a form of a battery module formed by the plurality of cylindrical battery cells 20 that are first connected in series, in parallel, or in series-parallel. A plurality of battery modules are then connected in series, in parallel, or in series-parallel to be accommodated in the box 10.

The battery apparatus 100 may further include other structures. For example, the battery apparatus 100 may further include a bus component. The bus component connects the plurality of cylindrical battery cells 20, to implement electrical connection among the plurality of cylindrical battery cells 20.

It should be noted that, in some embodiments, the battery apparatus 100 may not be provided with the box 10. The battery apparatus 100 includes the plurality of cylindrical battery cells 20, and the battery apparatus 100 including the plurality of cylindrical battery cells 20 may be directly assembled to a power consuming apparatus, to provide electrical energy for the power consuming apparatus by using the plurality of cylindrical battery cells 20. In other words, the box 10 may serve as a part of the power consuming apparatus. Using an example in which the power consuming apparatus is a vehicle 1000, the box 10 may serve as a part of a chassis structure of the vehicle 1000. For example, a part of the box 10 may serve as at least a part of a floor of the vehicle 1000, or a part of the box 10 may serve as at least a part of a cross beam and a longitudinal beam of the vehicle 1000.

According to some embodiments of the present application, the present application further provides a power consuming apparatus. The power consuming apparatus includes the cylindrical battery cell 20 in any one of the foregoing solutions, and the cylindrical battery cell 20 is configured to provide electrical energy for the power consuming apparatus.

The power consuming apparatus may be any one of the foregoing devices or systems to which the cylindrical battery cell 20 is applied.

It should be noted that the embodiments of the present application and the features in the embodiments may be combined with each other without causing any conflict.

The foregoing descriptions are merely preferred embodiments of the present application, but are not intended to limit the present application. A person skilled in the art may make various modifications and changes to the present application. Any modification, equivalent replacement, and improvement made within the spirit and principle of the present application are included in the protection scope of the present application.

## Claims

1. A cylindrical battery cell, comprising:
a shell, comprising a first wall and a side wall, wherein a thickness direction of the first wall is an axial direction of the cylindrical battery cell, a pressure relief component is disposed on the first wall, a pressure relief groove is provided on the pressure relief component, the side wall is provided surrounding the first wall, a protrusion protrudes from an inner circumferential surface of the side wall, and both the protrusion and the pressure relief groove extend along a circumferential direction of the side wall;
an electrode assembly, accommodated in the shell and located on a side of the protrusion facing away from the first wall; and
a first current collection member, comprising a body portion and a butt-joint portion, wherein the body portion is located on a side of the electrode assembly facing the first wall and is connected to the electrode assembly, the body portion comprises a main body region and a plurality of support regions connected to an outer circumferential surface of the main body region, the plurality of support regions are arranged spaced away along a circumferential direction of the main body region, the support region is at least partially located between the electrode assembly and the protrusion in the thickness direction of the first wall, and the butt-joint portion is connected to the main body region and connected to the protrusion, to electrically connect the electrode assembly to the side wall, wherein
an inner diameter of the protrusion is D₁, an outer diameter of the main body region is D₂, and an inner diameter of the pressure relief groove is D₃ along a radial direction of the cylindrical battery cell, D₁ ≥ D₂, and D₃ ≥ 0.75 D₂.

2. The cylindrical battery cell according to claim 1, wherein D₁ ≥ D₃.

3. The cylindrical battery cell according to claim 1 or 2, wherein an outer diameter of the body portion along the radial direction of the cylindrical battery cell is D₄, and D₁ ≤ 0.95 D₄.

4. The cylindrical battery cell according to any one of claims 1 to 3, wherein a maximum proportion of the plurality of support regions in the circumferential direction of the main body region is P, and 40% ≤ P ≤ 90%.

5. The cylindrical battery cell according to claim 4, wherein 50% ≤ P ≤ 80%.

6. The cylindrical battery cell according to any one of claims 1 to 5, wherein a dimension by which the protrusion protrudes from the inner circumferential surface of the side wall in the radial direction of the cylindrical battery cell is L₁, a dimension of an overlapping part between an orthographic projection of the support region and an orthographic projection of the protrusion in the radial direction of the cylindrical battery cell in a projection plane perpendicular to the thickness direction of the first wall is L₂, and 0.2 L₁ ≤ L₂ ≤ 0.9 L₁.

7. The cylindrical battery cell according to claim 6, wherein 1 mm ≤ L₁ ≤ 8 mm.

8. The cylindrical battery cell according to claim 6 or 7, wherein L₂ ≥ 1 mm.

9. The cylindrical battery cell according to any one of claims 1 to 8, wherein a thickness of the body portion is T₁, and 0.1 mm ≤ T₁ ≤ 0.6 mm.

10. The cylindrical battery cell according to any one of claims 1 to 9, wherein the electrode assembly comprises a main body portion and a first tab, and along the thickness direction of the first wall, the first tab is connected to an end of the main body portion facing the first wall, wherein
the main body region is welded to the first tab to form a plurality of first connection portions, the plurality of support regions are welded to the first tab to form a plurality of second connection portions, and a sum of lengths of the plurality of second connection portions is greater than or equal to a sum of lengths of the plurality of first connection portions.

11. The cylindrical battery cell according to claim 10, wherein the plurality of first connection portions are arranged spaced away along the circumferential direction of the side wall, and the first connection portions extend along the radial direction of the cylindrical battery cell.

12. The cylindrical battery cell according to claim 10 or 11, wherein the plurality of second connection portions are arranged spaced away along the circumferential direction of the side wall, and the second connection portions extend along the radial direction of the cylindrical battery cell.

13. The cylindrical battery cell according to any one of claims 10 to 12, wherein the support regions are all welded to the first tab to form the second connection portions.

14. The cylindrical battery cell according to any one of claims 1 to 13, wherein the first current collection member comprises a plurality of butt-joint portions, the plurality of butt-joint portions are arranged spaced away along the circumferential direction of the main body region and are all connected to the main body region, and the plurality of butt-joint portions are all connected to the protrusion.

15. The cylindrical battery cell according to claim 14, wherein the plurality of butt-joint portions are all welded to the protrusion to correspondingly form a plurality of third connection portions, the third connection portions are in one-to-one correspondence with the butt-joint portions, and the third connection portions extend along the circumferential direction of the side wall, wherein
outer edges of orthographic projections of the plurality of third connection portions in a projection plane perpendicular to the thickness direction of the first wall are all located on a first circle, a sum of arc lengths of the outer edges of the orthographic projections of the plurality of third connection portions is L₃, a perimeter of the first circle is L₄, and L₃ ≥ 0.5 L₄.

16. The cylindrical battery cell according to claim 15, wherein L₃ ≥ 0.8 L₄.

17. The cylindrical battery cell according to claim 15 or 16, wherein the butt-joint portion has a connection region welded to the protrusion, and the connection region is an arc structure extending along the circumferential direction of the side wall.

18. The cylindrical battery cell according to any one of claims 14 to 17, wherein the plurality of butt-joint portions are all connected to the outer circumferential surface of the main body region, and the butt-joint portions and the support regions are arranged alternately along the circumferential direction of the main body region.

19. The cylindrical battery cell according to any one of claims 1 to 18, wherein a central through hole is provided on the electrode assembly, the central through hole runs through two ends of the electrode assembly along the thickness direction of the first wall, a vent hole is provided in the main body region, the vent hole runs through two sides of the main body region along the thickness direction of the first wall, and the vent hole is in communication with the central through hole, wherein
a projection of a hole wall surface of the central through hole along the thickness direction of the first wall is located inside the vent hole.

20. The cylindrical battery cell according to claim 19, wherein a hole diameter of the central through hole is D₅, a hole diameter of the vent hole is D₆, and D₆ ≥ 1.5 D₅.

21. The cylindrical battery cell according to any one of claims 1 to 20, wherein a length of the support region along the radial direction of the cylindrical battery cell is L₅, and 0.5 D₂ ≥ L₅.

22. The cylindrical battery cell according to any one of claims 1 to 21, wherein an accommodating cavity is formed inside the shell, the body portion is configured to separate the accommodating cavity into a first cavity and a second cavity that are in communication with each other, the electrode assembly is accommodated in the first cavity, the second cavity is located between the body portion and the first wall in the thickness direction of the first wall, and the pressure relief component is configured to split along at least a part of the pressure relief groove during pressure relief of the cylindrical battery cell, to release pressure inside the second cavity, wherein
a maximum dimension of the second cavity is H₁ and a maximum dimension of the shell is H₂ along the thickness direction of the first wall, and 0.003 ≤ H₁ / H₂ ≤ 0.06.

23. The cylindrical battery cell according to claim 22, wherein 0.01 ≤ H₁ / H₂ ≤ 0.03.

24. The cylindrical battery cell according to claim 22 or 23, wherein 0.4 mm ≤ H₁ ≤ 4 mm.

25. The cylindrical battery cell according to any one of claims 22 to 24, wherein a capacitance of the cylindrical battery cell is C, and 0.005 mm/Ah ≤ H₁ / C ≤ 0.2 mm/Ah.

26. The cylindrical battery cell according to claim 25, wherein a positive electrode material of the cylindrical battery cell comprises lithium transition metal oxide, and H₁ and C further satisfy 0.01 mm/Ah ≤ H₁ / C ≤ 0.2 mm/Ah; or
a positive electrode material of the cylindrical battery cell comprises lithium-containing phosphate, and H₁ and C further satisfy 0.005 mm/Ah ≤ H₁ / C ≤ 0.1 mm/Ah.

27. The cylindrical battery cell according to any one of claims 22 to 26, wherein an outer diameter of the electrode assembly along the radial direction of the cylindrical battery cell is D₇, and 0.7 ≤ D₁ / D₇ ≤ 0.95.

28. The cylindrical battery cell according to claim 27, wherein 0.75 ≤ D₁ / D₇ ≤ 0.9.

29. The cylindrical battery cell according to any one of claims 22 to 28, wherein a projection of the pressure relief groove along the thickness direction of the first wall is located inside the second cavity.

30. The cylindrical battery cell according to any one of claims 1 to 29, wherein the butt-joint portion comprises:
a connection region, provided, in the thickness direction of the first wall, on a side of the main body region facing the first wall, wherein the connection region is connected to the protrusion; and
an elastic region, connected to the connection region and the main body region, wherein the elastic region is configured to be deformable.

31. The cylindrical battery cell according to claim 30, wherein the elastic region is bent to form a plurality of bent segments, the plurality of bent segments are sequentially connected, and the bent segments located at two ends among the plurality of bent segments are respectively connected to the main body region and the connection region.

32. The cylindrical battery cell according to claim 30 or 31, wherein in the projection plane perpendicular to the thickness direction of the first wall, an orthographic projection of the connection region extends along the circumferential direction of the side wall and is located on a circumferential side of an orthographic projection of the main body region, and the orthographic projection of the connection region and the orthographic projection of the main body region are arranged spaced away in the radial direction of the cylindrical battery cell, to form a vent gap between the orthographic projection of the connection region and the orthographic projection of the main body region.

33. The cylindrical battery cell according to claim 32, wherein at least a part of the projection of the pressure relief groove along the thickness direction of the first wall is located in the vent gap.

34. The cylindrical battery cell according to claim 32 or 33, wherein a diameter of an orthographic projection of an outer edge of the connection region is D₈, an orthographic projection of the elastic region extends along the radial direction of the cylindrical battery cell, and a length of the orthographic projection of the elastic region is L₆ in the projection plane perpendicular to the thickness direction of the first wall, and 1/15 ≤ L₆ / D₈ ≤ 1/3.

35. The cylindrical battery cell according to claim 34, wherein 1/7 ≤ L₆ / D₈ ≤ 1/4.

36. The cylindrical battery cell according to claim 34 or 35, wherein 3 mm ≤ L₆ ≤ 15 mm.

37. The cylindrical battery cell according to any one of claims 32 to 36, wherein a thickness of the elastic region is T₂, a width of the orthographic projection of the elastic region in a direction perpendicular to the extension direction of the orthographic projection of the elastic region in the projection plane perpendicular to the thickness direction of the first wall is W, and 0.3 mm² ≤ W × T₂ ≤ 8 mm².

38. The cylindrical battery cell according to claim 37, wherein 2 mm ≤ W ≤ 10 mm.

39. The cylindrical battery cell according to claim 38, wherein 3 mm ≤ W ≤ 5 mm.

40. The cylindrical battery cell according to any one of claims 37 to 39, wherein the thickness of the elastic region is T₂, and 0.15 mm ≤ T₂ ≤ 0.8 mm.

41. The cylindrical battery cell according to claim 40, wherein 0.3 mm ≤ T₂ ≤ 0.5 mm.

42. The cylindrical battery cell according to any one of claims 30 to 41, wherein the thickness of the elastic region is less than a thickness of the main body region; and/or
the thickness of the elastic region is less than a thickness of the connection region.

43. The cylindrical battery cell according to any one of claims 30 to 42, wherein the connection region is provided on a side of the protrusion facing away from the electrode assembly and is connected to the protrusion along the thickness direction of the first wall.

44. The cylindrical battery cell according to any one of claims 1 to 43, wherein a groove is formed, along the radial direction of the cylindrical battery cell, on a side of the side wall facing away from the electrode assembly and at a position corresponding to the protrusion.

45. The cylindrical battery cell according to any one of claims 1 to 44, wherein the shell further comprises:
a second wall, provided opposite to the first wall in the thickness direction of the first wall, wherein the second wall and the side wall are integrally formed, one end of the side wall along the thickness direction of the first wall is connected to the second wall, and an other end of the side wall along the thickness direction of the first wall encloses to define an opening, the side wall and the second wall jointly define the accommodating cavity, and the electrode assembly is accommodated in the accommodating cavity, wherein
the first wall seals the opening.

46. The cylindrical battery cell according to claim 45, wherein an end of the side wall away from the second wall in the thickness direction of the first wall is bent to form a flange portion, and the flange portion encloses to define the opening, wherein
a part of the first wall is located between the flange portion and the protrusion along the thickness direction of the first wall, and the flange portion and the protrusion are configured to cooperate to clamp the first wall.

47. The cylindrical battery cell according to claim 46, wherein the cylindrical battery cell further comprises:
a sealing member, at least partially disposed between the side wall and the first wall in the radial direction of the cylindrical battery cell, wherein the sealing member is configured to seal a gap between the first wall and the side wall.

48. The cylindrical battery cell according to any one of claims 1 to 44, wherein the side wall and the first wall are integrally formed, one end of the side wall along the thickness direction of the first wall is connected to the first wall, an other end of the side wall along the thickness direction of the first wall encloses to define an opening, the side wall and the first wall jointly define the accommodating cavity, and the electrode assembly is accommodated in the accommodating cavity, wherein
the shell further comprises a second wall, the second wall is provided opposite to the first wall in the thickness direction of the first wall, and the second wall seals the opening.

49. The cylindrical battery cell according to any one of claims 1 to 48, wherein the protrusion is an annular structure extending along the circumferential direction of the side wall.

50. The cylindrical battery cell according to any one of claims 1 to 49, wherein the pressure relief groove is an annular structure extending along the circumferential direction of the side wall.

51. The cylindrical battery cell according to any one of claims 1 to 50, wherein the pressure relief component and the first wall are integrally formed.

52. The cylindrical battery cell according to any one of claims 1 to 50, wherein the pressure relief component and the first wall are separately disposed, and the pressure relief component is connected to the first wall.

53. A battery apparatus, comprising the cylindrical battery cell according to any one of claims 1 to 52.

54. A power consuming apparatus, comprising the cylindrical battery cell according to any one of claims 1 to 52, wherein the cylindrical battery cell is configured to provide electrical energy.
